# EUROPEAN PATENT APPLICATION

(11) **EP 4 358 620 A1**
(43) Date of publication of application: **24.04.2024**
(21) Application number: 22852149.8
(22) Date of filing: 02.08.2022
(51) Int. Cl.: H04W 72/04

(54) **RESOURCE CONFIGURATION METHOD AND COMMUNICATION APPARATUS**

(30) Priority: 06.08.2021 CN 202110903304
(71) Applicant: Huawei Technologies Co., Ltd., Longgang Shenzhen, Guangdong 518129 (CN)
(72) Inventor: YUAN, Shitong, Shenzhen, Guangdong 518129 (CN); LIU, Fengwei, Shenzhen, Guangdong 518129 (CN); SONG, Xinghua, Shenzhen, Guangdong 518129 (CN)
(74) Representative: Thun, Clemens
(86) International application number: PCT/CN2022/109583
(87) International publication number: WO 2023/011437

(57) **Abstract**

Embodiments of this application disclose a resource configuration method and a communication apparatus. The resource configuration method includes: An integrated access and backhaul mobile terminal IAB MT determines a first slot configuration TDD configuration based on a first transmission mode. The first transmission mode includes a transmission mode on at least one frequency domain resource set in a plurality of frequency domain resource sets of an integrated access and backhaul distributed unit IAB DU. The first TDD configuration is a cell-common TDD configuration or a dedicated TDD configuration. The IAB MT determines a resource location based on the first TDD configuration. It can be learned from the technical solution that the IAB MT selects the corresponding TDD configuration based on the transmission mode on the at least one frequency domain resource set, to determine the resource location. This prevents the IAB MT from missing receiving a downlink signal or incorrectly sending an uplink signal due to an incorrect TDD configuration used by the IAB MT, to improve communication transmission performance.

## Description

This application claims priority to Chinese Patent Application No. 202110903304.9, filed with the China National Intellectual Property Administration on August 6, 2021 and entitled "RESOURCE CONFIGURATION METHOD AND COMMUNICATION APPARATUS", which is incorporated herein by reference in its entirety.

### TECHNICAL FIELD

This application relates to the field of communication technologies, and in particular, to a resource configure method and a communication apparatus.

### BACKGROUND

In a 5th generation communication system (5th generation mobile network or 5th generation wireless system, 5G), an integrated access and backhaul (integrated access and backhaul, IAB) node is also referred to as an integrated access and backhaul node in some technical scenarios, and is an evolved node in a relay technology. In a wireless communication network, a relay node is usually configured to implement extended coverage or cover coverage holes, or is configured to increase a system capacity.

In terms of functions, the IAB node is divided into an IAB mobile terminal (mobile terminal, MT) and an IAB distributed unit (distributed unit, DU). Frequency division may be performed on a frequency domain resource of any cell of the IAB DU, that is, the frequency domain resource of the IAB DU is subdivided into a plurality of resource block (resource block, RB) sets. Therefore, the IAB DU may perform multiplexing transmission with the IAB MT on any RB set. When the IAB MT has a plurality of slot configuration (slot configuration, TDD) configurations, if the IAB MT has a potential RB set on which multiplexing can be performed, how the IAB MT determines a TDD configuration used by the IAB MT is a problem worth considering.

### SUMMARY

This application provides a resource configuration method and a communication apparatus, so that an IAB MT determines a first TDD configuration based on a first transmission mode, to determine a resource location. This prevents the IAB MT from missing receiving or incorrectly sending a signal due to an incorrect TDD configuration used by the IAB MT, to improve communication transmission performance.

A first aspect of this application provides a resource configuration method, including: An IAB MT determines a first TDD configuration based on a first transmission mode. The first transmission mode includes a transmission mode on at least one frequency domain resource set in a plurality of frequency domain resource sets of an IAB DU. The first TDD configuration is a cell-common TDD configuration or a dedicated TDD configuration. The IAB MT determines a resource location based on the first TDD configuration.

In the technical solution, the IAB MT may select the corresponding TDD configuration with reference to the transmission mode on the at least one frequency domain resource set, to determine the resource location. This prevents the IAB MT from missing receiving a downlink signal or incorrectly sending an uplink signal due to an incorrect TDD configuration used by the IAB MT, to improve communication transmission performance.

In a possible implementation, that an IAB MT determines a first TDD configuration based on a first transmission mode includes at least one of the following:
if the IAB DU performs downlink transmission on the at least one frequency domain resource set, and the IAB MT and the at least one frequency domain resource set meet a spatial transmit multiplexing relationship, the first TDD configuration is the dedicated TDD configuration;
if the IAB DU performs uplink reception on the at least one frequency domain resource set, and the IAB MT and the at least one frequency domain resource set meet a spatial receive multiplexing relationship, the first TDD configuration is the dedicated TDD configuration;
if the IAB DU performs downlink transmission on the at least one frequency domain resource set, and the IAB MT and the at least one frequency domain resource set meet a first full-duplex multiplexing relationship, the first TDD configuration is the cell-common TDD configuration;
if the IAB DU performs uplink reception on the at least one frequency domain resource set, and the IAB MT and the at least one frequency domain resource set meet a second full-duplex multiplexing relationship, the first TDD configuration is the cell-common TDD configuration;
if the IAB DU performs uplink reception on a first frequency domain resource set and performs downlink transmission on a second frequency domain resource set, the IAB MT and the first frequency domain resource meet a second full-duplex multiplexing relationship, and the IAB MT and the second frequency domain resource meet a spatial transmit multiplexing relationship, the first TDD configuration is the dedicated TDD configuration, and the plurality of frequency domain resource sets include the first frequency domain resource set and the second frequency domain resource set;
if the IAB DU performs uplink reception on a first frequency domain resource set and performs uplink reception on a second frequency domain resource set, the IAB MT and the first frequency domain resource set meet a second full-duplex multiplexing relationship, and the IAB MT and the second frequency domain resource set meet a spatial receive multiplexing relationship, the first TDD configuration is the dedicated TDD configuration;
if the IAB DU performs downlink transmission on a first frequency domain resource set and performs downlink transmission on a second frequency domain resource set, the IAB MT and the first frequency domain resource set meet a first full-duplex multiplexing relationship, and the IAB MT and the second frequency domain resource set meet a spatial transmit multiplexing relationship, the first TDD configuration is the dedicated TDD configuration;
if the IAB DU performs downlink transmission on a first frequency domain resource set and performs uplink reception on a second frequency domain resource set, the IAB MT and the first frequency domain resource set meet a first full-duplex multiplexing relationship, and the IAB MT and the second frequency domain resource set meet a spatial receive multiplexing relationship, the first TDD configuration is the dedicated TDD configuration; or
if the IAB DU has no transmission on the plurality of frequency domain resource sets, the first TDD configuration is the cell-common TDD configuration.

The technical solution shows some possible cases in which the IAB MT determines the first TDD configuration with reference to the transmission direction on the at least one frequency domain resource set and a multiplexing relationship that is met between the IAB MT and the at least one frequency domain resource set, to provide a specific process in which a terminal device determines the first TDD configuration.

In another possible implementation, the method further includes: The IAB MT receives first indication information from an upper-level node of the IAB MT. The first indication information indicates any one of the following: a TDD configuration that is preferentially used, a fifth frequency domain resource set that is preferentially used for multiplexing transmission, or a first multiplexing relationship that is preferentially used when a first condition is met.

The first condition includes: the IAB MT and a third frequency domain resource set of the IAB DU meet a spatial transmit multiplexing relationship and/or a spatial receive multiplexing relationship, and the IAB MT and a fourth frequency domain resource set of the IAB DU meet a first full-duplex multiplexing relationship or a second full-duplex multiplexing relationship. The third frequency domain resource set and the fourth frequency domain resource set are two frequency domain resource sets in the plurality of frequency domain resource sets.

That an IAB MT determines a first TDD configuration based on a first transmission mode includes: The IAB MT determines the first TDD configuration based on the first transmission mode and the first indication information.

This implementation provides another possible implementation of determining the first TDD configuration by the IAB MT. This implementation may be mainly applicable to a case in which the IAB MT and at least two frequency domain resource sets meet a multiplexing relationship. The upper-level node of the IAB MT indicates the TDD configuration that is preferentially used, the fifth frequency domain resource set that is preferentially used for multiplexing transmission, or the first multiplexing relationship that is preferentially used, so that the IAB MT determines the first TDD configuration, to determine the resource location. This prevents the IAB MT from missing receiving a downlink signal or incorrectly sending an uplink signal due to an incorrect TDD configuration used by the IAB MT, to improve communication transmission performance.

In another possible implementation, the first indication information indicates that the dedicated TDD configuration is preferentially used when the first condition is met, and that the IAB MT determines the first TDD configuration based on the first transmission mode and the first indication information includes at least one of the following:
if the IAB MT and the third frequency domain resource set of the IAB DU meet the spatial transmit multiplexing relationship, and the IAB DU performs downlink transmission on the third frequency domain resource set, the first TDD configuration is the dedicated TDD configuration;
if the IAB MT and the third frequency domain resource set of the IAB DU meet the spatial transmit multiplexing relationship, and the IAB DU performs uplink reception on the third frequency domain resource set, the first TDD configuration is the cell-common TDD configuration;
if the IAB MT and the third frequency domain resource set of the IAB DU meet the spatial transmit multiplexing relationship, and the IAB DU performs uplink reception on the third frequency domain resource set, the first TDD configuration is the cell-common TDD configuration;
if the IAB MT and the third frequency domain resource set of the IAB DU meet the spatial receive multiplexing relationship, and the IAB DU performs uplink reception on the third frequency domain resource set, the first TDD configuration is the dedicated TDD configuration;
if the IAB MT and the third frequency domain resource set of the IAB DU meet the spatial receive multiplexing relationship, and the IAB DU performs uplink transmission on the third frequency domain resource set, the first TDD configuration is the cell-common TDD configuration; or
if the IAB MT and the third frequency domain resource set of the IAB DU meet the spatial receive multiplexing relationship and the spatial transmit multiplexing relationship, and the IAB DU performs uplink reception or downlink transmission on the third frequency domain resource set, the first TDD configuration is the dedicated TDD configuration.

The technical solution shows some possible cases in which the IAB MT determines the first TDD configuration with reference to the TDD configuration that is preferentially used and that is indicated by the first indication information, a transmission direction on the third frequency domain resource set, and a multiplexing relationship that is met between the IAB MT and the third frequency domain resource set, to provide a specific process in which a terminal device determines the first TDD configuration.

In another possible implementation, the first indication information indicates the fifth frequency domain resource set that is preferentially used for multiplexing transmission, and that the IAB MT determines the first TDD configuration based on the first transmission mode and the first indication information includes: The IAB MT determines a transmission direction in which the IAB DU performs transmission on the fifth frequency domain resource set. The IAB MT determines the first TDD configuration based on the transmission direction and a multiplexing relationship that is met between the IAB MT and the fifth frequency domain resource set.

This technical solution shows a process in which the IAB MT determines the first TDD configuration with reference to the transmission direction on the fifth frequency domain resource set that is preferentially used for multiplexing transmission and that is of the first indication information, so that the IAB MT determines the resource location based on the first TDD configuration.

In another possible implementation, the first indication information indicates the first multiplexing relationship that is preferentially used, and that the IAB MT determines the first TDD configuration based on the first transmission mode and the first indication information includes: The IAB MT determines, in the plurality of frequency domain resource sets, a sixth frequency domain resource set that meets the first multiplexing relationship with the IAB MT. The IAB MT determines the first TDD configuration based on a transmission mode on the sixth frequency domain resource set and the first multiplexing relationship.

This technical solution shows a process in which the IAB MT determines the first TDD configuration with reference to the first multiplexing relationship that is indicated by the first indication information and that is preferentially used, so that the IAB MT determines the resource location based on the first TDD configuration.

In another possible implementation, the method further includes: The IAB MT receives first configuration information from a donor (Donor) node. The first configuration information includes correspondences between a plurality of multiplexing configurations and indication bits, and the plurality of multiplexing configurations are multiplexing configurations between the IAB MT and the plurality of frequency domain resource sets. The IAB MT receives second indication information from an upper-level node of the IAB MT. The second indication information includes a first indication bit. The IAB MT determines, based on the correspondences between the plurality of multiplexing configurations and the indication bits, a multiplexing configuration corresponding to the first indication bit. The multiplexing configuration corresponding to the first indication bit includes: there is a multiplexing relationship between the IAB MT and a seventh frequency domain resource set in the plurality of frequency domain resource sets.

That an IAB MT determines a first TDD configuration based on a first transmission mode includes: The IAB MT determines the first TDD configuration based on a transmission mode on the seventh frequency domain resource set and the multiplexing relationship that is met between the IAB MT and the seventh frequency domain resource set.

In the technical solution, the IAB MT may select the corresponding TDD configuration with reference to the transmission mode on the seventh frequency domain resource set, to determine the resource location. This prevents the IAB MT from missing receiving a downlink signal or incorrectly sending an uplink signal due to an incorrect TDD configuration used by the IAB MT, to improve communication transmission performance.

In another possible implementation, the method further includes: The IAB MT receives a media access control control element (media access control control element, MAC CE) from an upper-level node of the IAB MT. The MAC CE includes correspondences between a plurality of multiplexing configurations and indication bits, and the plurality of multiplexing configurations are multiplexing configurations between the IAB MT and the plurality of frequency domain resource sets. The IAB MT receives second indication information from the upper-level node. The second indication information includes a first indication bit. The IAB MT determines, based on the correspondences between the plurality of multiplexing configurations and the indication bits, a multiplexing configuration corresponding to the first indication bit. The multiplexing configuration corresponding to the first indication bit includes: there is a multiplexing relationship between the IAB MT and a seventh frequency domain resource set in the plurality of frequency domain resource sets.

That an IAB MT determines a first TDD configuration based on a first transmission mode includes: The IAB MT determines the first TDD configuration based on a transmission mode on the seventh frequency domain resource set and the multiplexing relationship that is met between the IAB MT and the seventh frequency domain resource set.

In the technical solution, the upper-level node of the IAB MT dynamically indicates, to the IAB MT by using the MAC CE, the correspondences between the plurality of multiplexing configurations and the indication bits. In other words, the upper-level node may dynamically change multiplexing configurations between the IAB MT and the plurality of frequency domain resource sets, to configure the multiplexing configurations between the IAB MT and the plurality of frequency domain resource sets more flexibly. The IAB MT may select the corresponding TDD configuration with reference to the transmission mode on the seventh frequency domain resource set, to determine the resource location. This prevents the IAB MT from missing receiving a downlink signal or incorrectly sending an uplink signal due to an incorrect TDD configuration used by the IAB MT, to improve communication transmission performance.

In another possible implementation, the method further includes: The IAB MT determines whether there is a multiplexing relationship between the IAB MT and the plurality of frequency domain resource sets. If there is the multiplexing relationship between the IAB MT and the plurality of frequency domain resource sets, the IAB MT performs the step of determining a first TDD configuration based on a first transmission mode, or if there is no multiplexing relationship between the IAB MT and the plurality of frequency domain resource sets, the IAB MT determines that the first TDD configuration is the cell-common TDD configuration.

In this possible implementation, the IAB MT may first determine whether there is the multiplexing relationship between the IAB MT and the plurality of frequency domain resource sets, and determine the corresponding TDD configuration, so that the solution is more comprehensive.

A second aspect of this application provides a resource configuration method, including: An upper-level node of an IAB MT sends first indication information to the IAB MT. The first indication information indicates any one of the following: a TDD configuration that is preferentially used, a fifth frequency domain resource set that is preferentially used for multiplexing transmission, or a first multiplexing relationship that is preferentially used when a first condition is met.

The first condition includes: the IAB MT and a third frequency domain resource of an IAB DU meet a spatial transmit multiplexing relationship and/or a spatial receive multiplexing relationship, and the IAB MT and a fourth frequency domain resource set of the IAB DU meet a first full-duplex multiplexing relationship and/or a second full-duplex multiplexing relationship. The third frequency domain resource set and the fourth frequency domain resource set are two frequency domain resource sets in a plurality of frequency domain resource sets of the IAB DU.

In the technical solution, the upper-level node of the IAB MT sends the first indication information to the IAB MT. The first indication information indicates any one of the following: the TDD configuration that is preferentially used, the fifth frequency domain resource set that is preferentially used for multiplexing transmission, or the first multiplexing relationship that is preferentially used when the first condition is met. This facilitates the IAB MT to determine a first TDD configuration with reference to the first indication information and a first transmission mode, so that the IAB MT determines a resource location based on the first TDD configuration. This prevents the IAB MT from missing receiving a downlink signal or incorrectly sending an uplink signal due to an incorrect TDD configuration used by the IAB MT, to improve communication transmission performance.

A third aspect of this application provides a resource configuration method, including: A donor node sends first configuration information to an IAB MT. The first configuration information includes correspondences between a plurality of multiplexing configurations and indication bits, and the plurality of multiplexing configurations are multiplexing configurations between the IAB MT and a plurality of frequency domain resource sets of an IAB DU.

In the technical solution, the donor node sends the correspondences between the plurality of multiplexing configurations and the indication bits to the IAB MT, so that an upper-level node of the IAB MT indicates, to the IAB MT, a corresponding indication bit, which is used by the IAB MT to determine a first TDD configuration. In this way, the IAB MT determines a resource location based on the first TDD configuration. This prevents the IAB MT from missing receiving a downlink signal or incorrectly sending an uplink signal due to an incorrect TDD configuration used by the IAB MT, to improve communication transmission performance.

A fourth aspect of this application provides a resource configuration method, including: An upper-level node of an IAB MT sends second indication information to the IAB MT. The second indication information includes a first indication bit, and a multiplexing configuration corresponding to the first indication bit includes: there is a multiplexing relationship between the IAB MT and a seventh frequency domain resource set in a plurality of frequency domain resource sets of an IAB DU.

In the technical solution, the upper-level node of the IAB MT indicates, to the IAB MT, a corresponding indication bit, which is used by the IAB MT to determine a first TDD configuration. In this way, the IAB MT determines a resource location based on the first TDD configuration. This prevents the IAB MT from missing receiving a downlink signal or incorrectly sending an uplink signal due to an incorrect TDD configuration used by the IAB MT, to improve communication transmission performance.

In a possible implementation, the method further includes: The upper-level node of the IAB MT sends a MAC CE to the IAB MT. The MAC CE includes correspondences between a plurality of multiplexing configurations and indication bits, and the plurality of multiplexing configurations are multiplexing configurations between the IAB MT and the plurality of frequency domain resource sets.

In the technical solution, the upper-level node of the IAB MT dynamically indicates, to the IAB MT by using the MAC CE, the correspondences between the plurality of multiplexing configurations and the indication bits. In other words, the upper-level node may dynamically change multiplexing configurations between the IAB MT and the plurality of frequency domain resource sets, to configure the multiplexing configurations between the IAB MT and the plurality of frequency domain resource sets more flexibly.

A fifth aspect of this application provides a resource configuration method, including: An IAB MT receives first configuration information from a donor node. The first configuration information indicates a correspondence between a TDD configuration and at least one frequency domain resource set in a plurality of frequency domain resource sets of an IAB DU. If there is a multiplexing relationship between the IAB MT and a first frequency domain resource set in the plurality of frequency domain resource sets, the IAB MT determines, based on the first configuration information, a TDD configuration corresponding to the first frequency domain resource set. The IAB MT uses the TDD configuration corresponding to the first frequency domain resource set.

In the technical solution, the IAB MT may determine, based on the first configuration information, the TDD configuration corresponding to the first frequency domain resource set that has the multiplexing relationship with the IAB MT, so that the IAB MT determines a resource location.

In a possible implementation, the first configuration information includes a periodicity and an offset value of a TDD configuration that corresponds to the at least one frequency domain resource set and that is used by the IAB MT, and the method further includes: The IAB MT determines, based on second configuration information, a periodicity and an offset value of the TDD configuration that corresponds to the first frequency domain resource set and that is used by the IAB MT. The IAB MT determines, based on the periodicity and the offset value, a time domain resource of the TDD configuration that corresponds to the first frequency domain resource set and that is used by the IAB MT. That the IAB MT uses the TDD configuration corresponding to the first frequency domain resource includes: The IAB MT uses, on the time domain resource, the TDD configuration corresponding to the first frequency domain resource set.

In the technical solution, the donor node configures the periodicity and the offset value of the TDD configuration that corresponds to the first frequency domain resource set and that is used by the IAB MT, so that the IAB MT determines, based on the periodicity and the offset value, the time domain resource of the used TDD configuration corresponding to the first frequency domain resource set.

In another possible implementation, if there is a multiplexing relationship between the IAB MT and each of a first frequency domain resource set and a second frequency domain resource set, and a TDD configuration corresponding to the first frequency domain resource set is different from a TDD configuration corresponding to the second frequency domain resource set, the method further includes: The IAB MT receives first indication information from an upper-level node of the IAB MT. The first indication information indicates any one of the following: the TDD configuration that corresponds to the first frequency domain resource set and that is preferentially used, a frequency domain resource set that is preferentially used for multiplexing transmission, or a multiplexing relationship that is preferentially used when a first condition is met. The first condition includes: the IAB MT and the first frequency domain resource set of the IAB DU meet a spatial transmit multiplexing relationship or a spatial receive multiplexing relationship, and the IAB MT and the second frequency domain resource set of the IAB DU meet a first full-duplex multiplexing relationship or a second full-duplex multiplexing relationship. The IAB MT determines the first frequency domain resource set based on the first indication information.

In this possible implementation, when the IAB MT and at least two frequency domain resource sets in the plurality of frequency domain resource sets meet a multiplexing relationship, the IAB MT may determine the first frequency domain resource set based on the first indication information, so that the IAB MT determines the TDD configuration. This implementation may be mainly applicable to a case in which the IAB MT and the at least two frequency domain resource sets meet the multiplexing relationship.

A sixth aspect of this application provides a resource configuration method, including: A donor node sends first configuration information to an IAB MT. The first configuration information indicates a correspondence between a TDD configuration and at least one frequency domain resource set in a plurality of frequency domain resource sets of an IAB DU.

In this possible implementation, the donor node sends the first configuration information to the IAB MT, so that the IAB MT may determine, based on the first configuration information, a TDD configuration corresponding to a first frequency domain resource set that has a multiplexing relationship with the IAB MT. This facilitates the IAB MT to determine a resource location.

In a possible implementation, the first configuration information includes a periodicity and an offset value of a TDD configuration that corresponds to the at least one frequency domain resource set and that is used by the IAB MT, so that the IAB MT determines, based on the periodicity and the offset value, a time domain resource of the used TDD configuration corresponding to the at least one frequency domain resource set.

A seventh aspect of this application provides a resource configuration method, including: An upper-level node of an IAB MT sends first indication information to the IAB MT. The first indication information indicates any one of the following: a slot configuration TDD configuration that corresponds to a first frequency domain resource set and that is preferentially used, a frequency domain resource set that is preferentially used for multiplexing transmission, or a multiplexing relationship that is preferentially used when a first condition is met.

The first condition includes: the IAB MT and the first frequency domain resource set of an IAB DU meet a spatial transmit multiplexing relationship and/or a spatial receive multiplexing relationship, and the IAB MT and the second frequency domain resource set of the IAB DU meet a first full-duplex multiplexing relationship and/or a second full-duplex multiplexing relationship.

In this possible implementation, the upper-level node of the IAB MT sends the first indication information to the IAB MT, so that the IAB MT may determine the first frequency domain resource set based on the first indication information. This facilitates the IAB MT to determine a TDD configuration. This implementation may be mainly applicable to a case in which the IAB MT and the at least two frequency domain resource sets meet a multiplexing relationship.

An eighth aspect of this application provides a resource configuration method, including: An IAB DU receives first configuration information from an IAB CU. The first configuration information includes correspondences between a plurality of frequency domain resource sets of the IAB DU and slot configuration TDD configurations. The IAB DU determines, based on the first configuration information, at least one TDD configuration corresponding to each frequency domain resource set in the plurality of frequency domain resource sets.

In the technical solution, a TDD configuration at a frequency domain resource set level is implemented, and a configuration granularity is small. In the technical solution, the IAB CU configures at least one TDD configuration for each frequency domain resource set of the IAB DU. Based on a premise that the IAB MT and the frequency domain resource set of the IAB DU meet a multiplexing working condition, the IAB DU may perform multiplexing transmission with the IAB MT on the frequency domain resource set.

In a possible implementation, each frequency domain resource set in the plurality of frequency domain resource sets corresponds to one TDD configuration in a first format or one TDD configuration in a second format;
each frequency domain resource set in the plurality of frequency domain resource sets corresponds to one TDD configuration in a first format and one TDD configuration in a second format;
the plurality of frequency domain resource sets correspond to a same TDD configuration in a first format, and each frequency domain resource set in the plurality of frequency domain resource sets corresponds to one TDD configuration in a second format; or
each frequency domain resource set in the plurality of frequency domain resource sets corresponds to one TDD configuration in a first format, a first type of TDD configuration in a second format, and a second type of TDD configuration in a second format, the first type of TDD configuration in the second format is used for spatial multiplexing transmission between each frequency domain resource set and an integrated access and backhaul mobile terminal IAB MT, and the second type of TDD configuration in the second format is used for full-duplex multiplexing transmission between each frequency domain resource set of the IAB DU and the IAB MT.

This implementation shows a specific format of the at least one TDD configuration corresponding to the frequency domain resource set, and the TDD configuration at the frequency domain resource set level is implemented by performing this implementation.

A ninth aspect of this application provides a resource configuration method, including: An IAB CU sends first configuration information to an IAB DU. The first configuration information includes correspondences between a plurality of frequency domain resource sets of the IAB DU and TDD configurations, and each frequency domain resource set in the plurality of frequency domain resource sets corresponds to at least one TDD configuration.

In the technical solution, a TDD configuration at a frequency domain resource set level is implemented, and a configuration granularity is small. In the technical solution, the IAB CU configures at least one TDD configuration for each frequency domain resource set of the IAB DU. Based on a premise that the IAB MT and the frequency domain resource set of the IAB DU meet a multiplexing working condition, the IAB DU may perform multiplexing transmission with the IAB MT on the frequency domain resource set.

In a possible implementation, each frequency domain resource set in the plurality of frequency domain resource sets corresponds to one TDD configuration in a first format or one TDD configuration in a second format;
each frequency domain resource set in the plurality of frequency domain resource sets corresponds to one TDD configuration in a first format and one TDD configuration in a second format;
the plurality of frequency domain resource sets correspond to a same TDD configuration in a first format, and each frequency domain resource set in the plurality of frequency domain resource sets corresponds to one TDD configuration in a second format; or
each frequency domain resource set in the plurality of frequency domain resource sets corresponds to one TDD configuration in a first format, a first type of TDD configuration in a second format, and a second type of TDD configuration in a second format, the first type of TDD configuration in the second format is used for spatial multiplexing transmission between each frequency domain resource set and an integrated access and backhaul mobile terminal IAB MT, and the second type of TDD configuration in the second format is used for full-duplex multiplexing transmission between each frequency domain resource set of the IAB DU and the IAB MT.

This implementation shows a specific format of the at least one TDD configuration corresponding to the frequency domain resource set, and the TDD configuration at the frequency domain resource set level is implemented by performing this implementation.

A tenth aspect of this application provides a resource configuration method, including: A first node determines correspondences between a plurality of frequency domain resource sets of a first IAB DU and intended TDD configurations. Each frequency domain resource set in the plurality of frequency domain resource sets corresponds to at least one intended TDD configuration, and the at least one intended TDD configuration includes an intended TDD configuration in a second format. The first node sends first configuration information to a second node. The first configuration information includes the correspondences between the plurality of frequency domain resource sets and the intended TDD configurations.

In the technical solution, the first node sends the first configuration information to the second node. The first configuration information includes the correspondences between the plurality of frequency domain resource sets and the intended TDD configurations. Each frequency domain resource set corresponds to the at least one intended TDD configuration. A configuration granularity of the intended TDD configuration is a frequency domain resource set level, and each frequency domain resource set corresponds to one intended TDD configuration in the second format. This better helps a neighboring node in an IAB system perform interference avoidance and management. The neighboring node may perform interference avoidance by using a frequency domain resource corresponding to a frequency domain resource set as a granularity, that is, may continue transmission on a frequency domain resource without interference. Compared with a current solution in which interference avoidance is performed by using a cell as a granularity, this solution can achieve higher frequency domain resource utilization.

In a possible implementation, the first node is the first IAB DU, and the second node is a donor node central unit (Donor CU); or
the first node is a donor CU, the second node is a second IAB DU, and the second IAB DU is an IAB DU in a neighboring cell of a cell of the first IAB DU.

This implementation shows two possible scenarios. One scenario is that the first IAB DU sends the correspondences between the plurality of frequency domain resource sets of the first IAB DU and the intended TDD configurations to the donor node. The other scenario is that the donor node sends the correspondences between the plurality of frequency domain resource sets of the first IAB DU and the intended TDD configurations to a neighboring node of the first IAB DU. This facilitates the neighboring node in the IAB system to perform interference avoidance and management.

In another possible implementation, each frequency domain resource set in the plurality of frequency domain resource sets corresponds to one TDD configuration in a first format or one TDD configuration in the second format;
each frequency domain resource set in the plurality of frequency domain resource sets corresponds to one TDD configuration in a first format and one TDD configuration in the second format;
the plurality of frequency domain resource sets correspond to a same TDD configuration in a first format, and each frequency domain resource set in the plurality of frequency domain resource sets corresponds to one TDD configuration in the second format; or
each frequency domain resource set in the plurality of frequency domain resource sets corresponds to one TDD configuration in a first format, a first type of TDD configuration in the second format, and a second type of TDD configuration in the second format, the first type of TDD configuration in the second format is used for spatial multiplexing transmission between each frequency domain resource set and an integrated access and backhaul mobile terminal IAB MT, and the second type of TDD configuration in the second format is used for full-duplex multiplexing transmission between each frequency domain resource set of the IAB DU and the IAB MT.

This implementation shows a specific format of the at least one TDD configuration corresponding to the frequency domain resource set, and the TDD configuration at the frequency domain resource set level is implemented by performing this implementation.

In another possible implementation, the at least one intended TDD configuration further includes a slot index. The slot index indicates that the frequency domain resource set corresponding to the at least one intended TDD configuration uses the at least one intended TDD configuration in a slot corresponding to the slot index.

This implementation shows that the at least one intended TDD configuration further includes the slot index, and the slot in which the at least one intended TDD configuration is used is determined based on the slot index. This facilitates the second node to perform interference avoidance by using the at least one intended TDD configuration.

In another possible implementation, the at least one intended TDD configuration further includes a resource type configuration. The resource type configuration indicates a resource type of the frequency domain resource set corresponding to the at least one intended TDD configuration.

In this possible implementation, the at least one intended TDD configuration further includes the resource type configuration, so that the neighboring node in the IAB system determines the resource type configuration. This facilitates the neighboring node in the IAB system to perform interference avoidance and management.

In another possible implementation, the at least one intended TDD configuration further includes a power offset value. The power offset value indicates transmit power on the frequency domain resource set corresponding to the at least one intended TDD configuration. It can be learned that the second node determines transmit power of a neighboring node of the second node on the frequency domain resource set corresponding to the at least one intended TDD configuration. The second node may perform corresponding adjustment with reference to the transmit power, to avoid interference to the neighboring node.

An eleventh aspect of this application provides a resource configuration method, including: A second node receives first configuration information from a first node. The first configuration information includes correspondences between a plurality of frequency domain resource sets of a first IAB DU and intended TDD configurations. Each frequency domain resource set in the plurality of frequency domain resource sets corresponds to at least one intended TDD configuration, and the at least one intended TDD configuration includes an intended TDD configuration in a second format.

In the technical solution, the second node receives the first configuration information from the first node. The first configuration information includes the correspondences between the plurality of frequency domain resource sets and the intended TDD configurations. Each frequency domain resource set corresponds to the at least one intended TDD configuration. A configuration granularity of the intended TDD configuration is a frequency domain resource set level, and each frequency domain resource set corresponds to one intended TDD configuration in the second format. This better helps a neighboring node in an IAB system perform interference avoidance and management. The neighboring node may perform interference avoidance by using a frequency domain resource corresponding to a frequency domain resource set as a granularity, that is, may continue transmission on a frequency domain resource without interference. Compared with a current solution in which interference avoidance is performed by using a cell as a unit, in this solution, higher frequency domain resource utilization can be obtained.

In a possible implementation, the first node is the first IAB DU, and the second node is a donor node central unit (Donor CU); or
the first node is a donor CU, the second node is a second IAB DU, and the second IAB DU is an IAB DU in a neighboring cell of a cell of the first IAB DU.

This implementation shows two possible scenarios. One scenario is that the first IAB DU sends the correspondences between the plurality of frequency domain resource sets of the first IAB DU and the intended TDD configurations to the donor node. The other scenario is that the donor node sends the correspondences between the plurality of frequency domain resource sets of the first IAB DU and the intended TDD configurations to a neighboring node of the first IAB DU. This facilitates the neighboring node in the IAB system to perform interference avoidance and management.

In another possible implementation, each frequency domain resource set in the plurality of frequency domain resource sets corresponds to one TDD configuration in a first format or one TDD configuration in the second format;
each frequency domain resource set in the plurality of frequency domain resource sets corresponds to one TDD configuration in a first format and one TDD configuration in the second format;
the plurality of frequency domain resource sets correspond to a same TDD configuration in a first format, and each frequency domain resource set in the plurality of frequency domain resource sets corresponds to one TDD configuration in the second format; or
each frequency domain resource set in the plurality of frequency domain resource sets corresponds to one TDD configuration in a first format, a first type of TDD configuration in the second format, and a second type of TDD configuration in the second format, the first type of TDD configuration in the second format is used for spatial multiplexing transmission between each frequency domain resource set and an integrated access and backhaul mobile terminal IAB MT, and the second type of TDD configuration in the second format is used for full-duplex multiplexing transmission between each frequency domain resource set of the IAB DU and the IAB MT.

This implementation shows a specific format of the at least one TDD configuration corresponding to the frequency domain resource set, and the TDD configuration at the frequency domain resource set level is implemented by performing this implementation.

In another possible implementation, the at least one intended TDD configuration further includes a slot index. The slot index indicates that the frequency domain resource set corresponding to the at least one intended TDD configuration uses the at least one intended TDD configuration in a slot corresponding to the slot index.

This implementation shows that the at least one intended TDD configuration further includes the slot index, and the slot in which the at least one intended TDD configuration is used is determined based on the slot index. This facilitates the second node to perform interference avoidance by using the at least one intended TDD configuration.

In another possible implementation, the at least one intended TDD configuration further includes a resource type configuration. The resource type configuration indicates a resource type of the frequency domain resource set corresponding to the at least one intended TDD configuration.

In this possible implementation, the at least one intended TDD configuration further includes the resource type configuration, so that the neighboring node in the IAB system determines the resource type configuration. This facilitates the neighboring node in the IAB system to perform interference avoidance and management.

In another possible implementation, the at least one intended TDD configuration further includes a power offset value. The power offset value indicates transmit power on the frequency domain resource set corresponding to the at least one intended TDD configuration. It can be learned that the second node determines transmit power of a neighboring node of the second node on the frequency domain resource set corresponding to the at least one intended TDD configuration. The second node may perform corresponding adjustment with reference to the transmit power, to avoid interference to the neighboring node.

A twelfth aspect of this application provides a communication apparatus, including a processing module. The processing module is configured to: determine a first TDD configuration based on a first transmission mode, where the first transmission mode includes a transmission mode on at least one frequency domain resource set in a plurality of frequency domain resource sets of an IAB DU, and the first TDD configuration is a cell-common TDD configuration or a dedicated TDD configuration; and determine a resource location based on the first TDD configuration.

In a possible implementation, the determining a first TDD configuration based on a first transmission mode includes at least one of the following:
if the IAB DU performs downlink transmission on the at least one frequency domain resource set, and the communication apparatus and the at least one frequency domain resource set meet a spatial transmit multiplexing relationship, the first TDD configuration is the dedicated TDD configuration;
if the IAB DU performs uplink reception on the at least one frequency domain resource set, and the communication apparatus and the at least one frequency domain resource set meet a spatial receive multiplexing relationship, the first TDD configuration is the dedicated TDD configuration;
if the IAB DU performs downlink transmission on the at least one frequency domain resource set, and the communication apparatus and the at least one frequency domain resource set meet a first full-duplex multiplexing relationship, the first TDD configuration is the cell-common TDD configuration;
if the IAB DU performs uplink reception on the at least one frequency domain resource set, and the communication apparatus and the at least one frequency domain resource set meet a second full-duplex multiplexing relationship, the first TDD configuration is the cell-common TDD configuration;
if the IAB DU performs uplink reception on a first frequency domain resource set and performs downlink transmission on a second frequency domain resource set, the IAB MT and the first frequency domain resource meet a second full-duplex multiplexing relationship, and the communication apparatus and the second frequency domain resource meet a spatial transmit multiplexing relationship, the first TDD configuration is the dedicated TDD configuration, and the plurality of frequency domain resource sets include the first frequency domain resource set and the second frequency domain resource set;
if the IAB DU performs uplink reception on a first frequency domain resource set and performs uplink reception on a second frequency domain resource set, the communication apparatus and the first frequency domain resource set meet a second full-duplex multiplexing relationship, and the communication apparatus and the second frequency domain resource set meet a spatial receive multiplexing relationship, the first TDD configuration is the dedicated TDD configuration;
if the IAB DU performs downlink transmission on a first frequency domain resource set and performs downlink transmission on a second frequency domain resource set, the communication apparatus and the first frequency domain resource set meet a first full-duplex multiplexing relationship, and the communication apparatus and the second frequency domain resource set meet a spatial transmit multiplexing relationship, the first TDD configuration is the dedicated TDD configuration;
if the IAB DU performs downlink transmission on a first frequency domain resource set and performs uplink reception on a second frequency domain resource set, the communication apparatus and the first frequency domain resource set meet a first full-duplex multiplexing relationship, and the communication apparatus and the second frequency domain resource set meet a spatial receive multiplexing relationship, the first TDD configuration is the dedicated TDD configuration; or
if the IAB DU has no transmission on the plurality of frequency domain resource sets, the first TDD configuration is the cell-common TDD configuration.

In another possible implementation, the communication apparatus further includes a transceiver module.

The transceiver module is configured to receive first indication information from an upper-level node of the communication apparatus. The first indication information indicates any one of the following: a TDD configuration that is preferentially used, a fifth frequency domain resource set that is preferentially used for multiplexing transmission, or a first multiplexing relationship that is preferentially used when a first condition is met.

The first condition includes: the communication apparatus and a third frequency domain resource set of the IAB DU meet a spatial transmit multiplexing relationship and/or a spatial receive multiplexing relationship, and the communication apparatus and a fourth frequency domain resource set of the IAB DU meet a first full-duplex multiplexing relationship or a second full-duplex multiplexing relationship. The third frequency domain resource set and the fourth frequency domain resource set are two frequency domain resource sets in the plurality of frequency domain resource sets.

The processing module is specifically configured to: determine the first TDD configuration based on the first transmission mode and the first indication information.

In another possible implementation, the first indication information indicates that the dedicated TDD configuration is preferentially used when the first condition is met, and the determining the first TDD configuration based on the first transmission mode and the first indication information includes at least one of the following:
if the communication apparatus and the third frequency domain resource set of the IAB DU meet the spatial transmit multiplexing relationship, and the IAB DU performs downlink transmission on the third frequency domain resource set, the first TDD configuration is the dedicated TDD configuration;
if the communication apparatus and the third frequency domain resource set of the IAB DU meet the spatial transmit multiplexing relationship, and the IAB DU performs uplink reception on the third frequency domain resource set, the first TDD configuration is the cell-common TDD configuration;
if the communication apparatus and the third frequency domain resource set of the IAB DU meet the spatial transmit multiplexing relationship, and the IAB DU performs uplink reception on the third frequency domain resource set, the first TDD configuration is the cell-common TDD configuration;
if the communication apparatus and the third frequency domain resource set of the IAB DU meet the spatial receive multiplexing relationship, and the IAB DU performs uplink reception on the third frequency domain resource set, the first TDD configuration is the dedicated TDD configuration;
if the communication apparatus and the third frequency domain resource set of the IAB DU meet the spatial receive multiplexing relationship, and the IAB DU performs uplink transmission on the third frequency domain resource set, the first TDD configuration is the cell-common TDD configuration; or
if the communication apparatus and the third frequency domain resource set of the IAB DU meet the spatial receive multiplexing relationship and the spatial transmit multiplexing relationship, and the IAB DU performs uplink reception or downlink transmission on the third frequency domain resource set, the first TDD configuration is the dedicated TDD configuration.

In another possible implementation, the first indication information indicates the fifth frequency domain resource set that is preferentially used for multiplexing transmission, and the processing module is specifically configured to: determine a transmission direction in which the IAB DU performs transmission on the fifth frequency domain resource set; and determine the first TDD configuration based on the transmission direction and a multiplexing relationship that is met between the communication apparatus and the fifth frequency domain resource set.

In another possible implementation, the first indication information indicates the first multiplexing relationship that is preferentially used, and the processing module is specifically configured to: determine, in the plurality of frequency domain resource sets, a sixth frequency domain resource set that meets the first multiplexing relationship with the IAB MT; and determine the first TDD configuration based on a transmission mode on the sixth frequency domain resource set and the first multiplexing relationship.

In another possible implementation, the transceiver module is further configured to:
receive first configuration information from a donor node, where the first configuration information includes correspondences between a plurality of multiplexing configurations and indication bits, and the plurality of multiplexing configurations are multiplexing configurations between the communication apparatus and the plurality of frequency domain resource sets; and
receive second indication information from an upper-level node of the IAB MT, where the second indication information includes a first indication bit.

The processing module is further configured to:
determine, based on the correspondences between the plurality of multiplexing configurations and the indication bits, a multiplexing configuration corresponding to the first indication bit. The multiplexing configuration corresponding to the first indication bit includes: there is a multiplexing relationship between the IAB MT and a seventh frequency domain resource set in the plurality of frequency domain resource sets.

The processing module is specifically configured to:
determine the first TDD configuration based on a transmission mode on the seventh frequency domain resource set and the multiplexing relationship that is met between the communication apparatus and the seventh frequency domain resource set.

In another possible implementation, the transceiver module is further configured to:
receive a MAC CE from an upper-level node of the communication apparatus, where the MAC CE includes correspondences between a plurality of multiplexing configurations and indication bits, and the plurality of multiplexing configurations are multiplexing configurations between the communication apparatus and the plurality of frequency domain resource sets; and
receive second indication information from the upper-level node, where the second indication information includes a first indication bit.

The processing module is further configured to:
determine, based on the correspondences between the plurality of multiplexing configurations and the indication bits, a multiplexing configuration corresponding to the first indication bit. The multiplexing configuration corresponding to the first indication bit includes: there is a multiplexing relationship between the communication apparatus and a seventh frequency domain resource set in the plurality of frequency domain resource sets.

The processing module is specifically configured to: determine the first TDD configuration based on a transmission mode on the seventh frequency domain resource set and the multiplexing relationship that is met between the communication apparatus and the seventh frequency domain resource set.

In another possible implementation, the processing module is further configured to:
determine whether there is a multiplexing relationship between the communication apparatus and the plurality of frequency domain resource sets;
and if there is the multiplexing relationship between the communication apparatus and the plurality of frequency domain resource sets, perform the step of determining a first TDD configuration based on a first transmission mode;
or if there is no multiplexing relationship between the communication apparatus and the plurality of frequency domain resource sets, determine that the first TDD configuration is the cell-common TDD configuration.

A thirteenth aspect of this application provides a communication apparatus, including:
a transceiver module, configured to send first indication information to an IAB MT, where the first indication information indicates any one of the following: a TDD configuration that is preferentially used, a fifth frequency domain resource set that is preferentially used for multiplexing transmission, or a first multiplexing relationship that is preferentially used when a first condition is met.

The first condition includes: the IAB MT and a third frequency domain resource of an IAB DU meet a spatial transmit multiplexing relationship and/or a spatial receive multiplexing relationship, and the IAB MT and a fourth frequency domain resource set of the IAB DU meet a first full-duplex multiplexing relationship and/or a second full-duplex multiplexing relationship. The third frequency domain resource set and the fourth frequency domain resource set are two frequency domain resource sets in a plurality of frequency domain resource sets of the IAB DU.

A fourteenth aspect of this application provides a communication apparatus, including:
a transceiver module, configured to send first configuration information to an IAB MT, where the first configuration information includes correspondences between a plurality of multiplexing configurations and indication bits, and the plurality of multiplexing configurations are multiplexing configurations between the IAB MT and a plurality of frequency domain resource sets of an IAB DU.

A fifteenth aspect of this application provides a communication apparatus, including:
a transceiver module, configured to send second indication information to an IAB MT, where the second indication information includes a first indication bit, and a multiplexing configuration corresponding to the first indication bit includes: there is a multiplexing relationship between the IAB MT and a seventh frequency domain resource set in a plurality of frequency domain resource sets of an IAB DU.

In a possible implementation, the transceiver module is further configured to:
send a MAC CE to the IAB MT, where the MAC CE includes correspondences between a plurality of multiplexing configurations and indication bits, and the plurality of multiplexing configurations are multiplexing configurations between the IAB MT and the plurality of frequency domain resource sets.

A sixteenth aspect of this application provides a communication apparatus, including:
a transceiver module, configured to receive first configuration information from a donor node, where the first configuration information indicates a correspondence between a TDD configuration and at least one frequency domain resource set in a plurality of frequency domain resource set of an IAB DU; and
a processing module, configured to: if there is a multiplexing relationship between the communication apparatus and a first frequency domain resource set in the plurality of frequency domain resource sets, determine, based on the first configuration information, a TDD configuration corresponding to the first frequency domain resource set; and use the TDD configuration corresponding to the first frequency domain resource set.

In a possible implementation, the first configuration information includes a periodicity and an offset value of a TDD configuration that corresponds to the at least one frequency domain resource set and that is used by the communication apparatus. The processing module is further configured to:
determine, based on second configuration information, a periodicity and an offset value of the TDD configuration that corresponds to the first frequency domain resource set and that is used by the communication apparatus; and determine, based on the periodicity and the offset value, a time domain resource of the used TDD configuration corresponding to the first frequency domain resource set.

The processing module is specifically configured to:
use the TDD configuration corresponding to the first frequency domain resource set on the time domain resource.

In another possible implementation, if there is a multiplexing relationship between the communication apparatus and each of the first frequency domain resource set and a second frequency domain resource set, and the TDD configuration corresponding to the first frequency domain resource set is different from a TDD configuration corresponding to the second frequency domain resource set, the transceiver module is further configured to:
receive first indication information from an upper-level node of the communication apparatus. The first indication information indicates any one of the following: the TDD configuration that corresponds to the first frequency domain resource set and that is preferentially used, a frequency domain resource set that is preferentially used for multiplexing transmission, or a multiplexing relationship that is preferentially used when a first condition is met. The first condition includes: the communication apparatus and the first frequency domain resource set of the IAB DU meet a spatial transmit multiplexing relationship or a spatial receive multiplexing relationship, and the communication apparatus and the second frequency domain resource set of the IAB DU meet a first full-duplex multiplexing relationship or a second full-duplex multiplexing relationship.

The processing module is further configured to:
determine the first frequency domain resource set based on the first indication information.

A seventeenth aspect of this application provides a communication apparatus, including:
a transceiver module, configured to send first configuration information to an IAB MT, where the first configuration information indicates a correspondence between a TDD configuration and at least one frequency domain resource set in a plurality of frequency domain resource sets of an IAB DU.

In a possible implementation, the first configuration information includes a periodicity and an offset value of a TDD configuration that corresponds to the at least one frequency domain resource set and that is used by the IAB MT.

An eighteenth aspect of this application provides a communication apparatus, including:
a transceiver module, configured to send first indication information to an IAB MT, where the first indication information indicates any one of the following: a TDD configuration that corresponds to a first frequency domain resource set and that is preferentially used, a frequency domain resource set that is preferentially used for multiplexing transmission, or a multiplexing relationship that is preferentially used when a first condition is met.

The first condition includes: the IAB MT and the first frequency domain resource set of an IAB DU meet a spatial transmit multiplexing relationship and/or a spatial receive multiplexing relationship, and the IAB MT and the second frequency domain resource set of the IAB DU meet a first full-duplex multiplexing relationship and/or a second full-duplex multiplexing relationship.

A nineteenth aspect of this application provides a communication apparatus, including:
a transceiver module, configured to receive first configuration information from an IAB CU, where the first configuration information includes correspondences between a plurality of frequency domain resource sets of the communication apparatus and TDD configurations; and
a processing module, configured to determine, based on the first configuration information, at least one TDD configuration corresponding to each frequency domain resource set in the plurality of frequency domain resource sets.

In a possible implementation, each frequency domain resource set in the plurality of frequency domain resource sets corresponds to one TDD configuration in a first format or one TDD configuration in a second format;
each frequency domain resource set in the plurality of frequency domain resource sets corresponds to one TDD configuration in a first format and one TDD configuration in a second format;
the plurality of frequency domain resource sets correspond to a same TDD configuration in a first format, and each frequency domain resource set in the plurality of frequency domain resource sets corresponds to one TDD configuration in a second format; or
each frequency domain resource set in the plurality of frequency domain resource sets corresponds to one TDD configuration in a first format, a first type of TDD configuration in a second format, and a second type of TDD configuration in a second format, the first type of TDD configuration in the second format is used for spatial multiplexing transmission between each frequency domain resource set and an IAB MT, and the second type of TDD configuration in the second format is used for full-duplex multiplexing transmission between each frequency domain resource set and the IAB MT.

A twentieth aspect of this application provides a communication apparatus, including:
a transceiver module, configured to send first configuration information to an IAB DU, where the first configuration information includes correspondences between a plurality of frequency domain resource sets of the IAB DU and TDD configurations, and each frequency domain resource set in the plurality of frequency domain resource sets corresponds to at least one TDD configuration.

In a possible implementation, each frequency domain resource set in the plurality of frequency domain resource sets corresponds to one TDD configuration in a first format or one TDD configuration in a second format;
each frequency domain resource set in the plurality of frequency domain resource sets corresponds to one TDD configuration in a first format and one TDD configuration in a second format;
the plurality of frequency domain resource sets correspond to a same TDD configuration in a first format, and each frequency domain resource set in the plurality of frequency domain resource sets corresponds to one TDD configuration in a second format; or
each frequency domain resource set in the plurality of frequency domain resource sets corresponds to one TDD configuration in a first format, a first type of TDD configuration in a second format, and a second type of TDD configuration in a second format, the first type of TDD configuration in the second format is used for spatial multiplexing transmission between each frequency domain resource set of the IAB DU and an IAB MT, and the second type of TDD configuration in the second format is used for full-duplex multiplexing transmission between each frequency domain resource set of the IAB DU and the IAB MT.

A twenty-first aspect of this application provides a communication apparatus, including:
a processing module, configured to determine correspondences between a plurality of frequency domain resource sets of a first IAB DU and intended TDD configurations, where each frequency domain resource set in the plurality of frequency domain resource sets corresponds to at least one intended TDD configuration, and the at least one intended TDD configuration includes an intended TDD configuration in a second format; and
a transceiver module, configured to send first configuration information to a second node, where the first configuration information includes the correspondences between the plurality of frequency domain resource sets and the intended TDD configurations.

In a possible implementation, the communication apparatus is the first IAB DU, and the second node is a donor CU; or
the communication apparatus is a donor CU, the second node is a second IAB DU, and the second IAB DU is an IAB DU in a neighboring cell of a cell of the first IAB DU.

In another possible implementation, each frequency domain resource set in the plurality of frequency domain resource sets corresponds to one TDD configuration in a first format or one TDD configuration in the second format;
each frequency domain resource set in the plurality of frequency domain resource sets corresponds to one TDD configuration in a first format and one TDD configuration in the second format;
the plurality of frequency domain resource sets correspond to a same TDD configuration in a first format, and each frequency domain resource set in the plurality of frequency domain resource sets corresponds to one TDD configuration in the second format; or
each frequency domain resource set in the plurality of frequency domain resource sets corresponds to one TDD configuration in a first format, a first type of TDD configuration in a second format, and a second type of TDD configuration in a second format, the first type of TDD configuration in the second format is used for spatial multiplexing transmission between each frequency domain resource set of the first IAB DU and an IAB MT, and the second type of TDD configuration in the second format is used for full-duplex multiplexing transmission between each frequency domain resource set of the first IAB DU and the IAB MT.

In another possible implementation, the at least one intended TDD configuration further includes a slot index. The slot index indicates that the frequency domain resource set corresponding to the at least one intended TDD configuration uses the at least one intended TDD configuration in a slot corresponding to the slot index.

In another possible implementation, the at least one intended TDD configuration further includes a resource type configuration. The resource type configuration indicates a resource type of the frequency domain resource set corresponding to the at least one intended TDD configuration.

In another possible implementation, the at least one intended TDD configuration further includes a power offset value. The power offset value indicates transmit power on the frequency domain resource set corresponding to the at least one intended TDD configuration.

A twenty-second aspect of this application provides a communication apparatus, including:
a transceiver module, configured to receive first configuration information from a first node, where the first configuration information includes correspondences between a plurality of frequency domain resource sets of a first IAB DU and intended TDD configurations, each frequency domain resource set in the plurality of frequency domain resource sets corresponds to at least one intended TDD configuration, and the at least one intended TDD configuration includes an intended TDD configuration in a second format.

In a possible implementation, the first node is the first IAB DU, and the communication apparatus is a donor CU; or
the first node is a donor CU, the communication apparatus is a second IAB DU, and the second IAB DU is an IAB DU in a neighboring cell of a cell of the first IAB DU.

In another possible implementation, each frequency domain resource set in the plurality of frequency domain resource sets corresponds to one TDD configuration in a first format or one TDD configuration in the second format;
each frequency domain resource set in the plurality of frequency domain resource sets corresponds to one TDD configuration in a first format and one TDD configuration in the second format;
the plurality of frequency domain resource sets correspond to a same TDD configuration in a first format, and each frequency domain resource set in the plurality of frequency domain resource sets corresponds to one TDD configuration in the second format; or
each frequency domain resource set in the plurality of frequency domain resource sets corresponds to one TDD configuration in a first format, a first type of TDD configuration in a second format, and a second type of TDD configuration in a second format, the first type of TDD configuration in the second format is used for spatial multiplexing transmission between each frequency domain resource set of the first IAB DU and an IAB MT, and the second type of TDD configuration in the second format is used for full-duplex multiplexing transmission between each frequency domain resource set of the first IAB DU and the IAB MT.

In another possible implementation, the at least one intended TDD configuration further includes a slot index. The slot index indicates that the frequency domain resource set corresponding to the at least one intended TDD configuration uses the at least one intended TDD configuration in a slot corresponding to the slot index.

In another possible implementation, the at least one intended TDD configuration further includes a resource type configuration. The resource type configuration indicates a resource type of the frequency domain resource set corresponding to the at least one intended TDD configuration.

In another possible implementation, the at least one intended TDD configuration further includes a power offset value. The power offset value indicates transmit power on the frequency domain resource set corresponding to the at least one intended TDD configuration.

A twenty-third aspect of this application provides a communication apparatus. The communication apparatus includes a processor and a memory. The memory stores a computer program or computer instructions. The processor is configured to invoke and run the computer program or the computer instructions stored in the memory, to enable the processor to implement any one of the implementations of the first aspect or the fifth aspect.

Optionally, the communication apparatus further includes a transceiver. The processor is configured to control the transceiver to send and receive a signal.

A twenty-fourth aspect of this application provides a communication apparatus. The communication apparatus includes a processor and a memory. The memory stores a computer program or computer instructions. The processor is configured to invoke and run the computer program or the computer instructions stored in the memory, to enable the processor to implement any one of the implementations of the second aspect, the fourth aspect, or the seventh aspect.

Optionally, the communication apparatus further includes a transceiver. The processor is configured to control the transceiver to send and receive a signal.

A twenty-fifth aspect of this application provides a communication apparatus. The communication apparatus includes a processor and a memory. The memory stores a computer program or computer instructions. The processor is configured to invoke and run the computer program or the computer instructions stored in the memory, to enable the processor to implement any one of the implementations of the third aspect or the sixth aspect.

Optionally, the communication apparatus further includes a transceiver. The processor is configured to control the transceiver to send and receive a signal.

A twenty-sixth aspect of this application provides a communication apparatus. The communication apparatus includes a processor and a memory. The memory stores a computer program or computer instructions. The processor is configured to invoke and run the computer program or the computer instructions stored in the memory, to enable the processor to implement any one of the implementations of the eighth aspect.

Optionally, the communication apparatus further includes a transceiver. The processor is configured to control the transceiver to send and receive a signal.

A twenty-seventh aspect of this application provides a communication apparatus. The communication apparatus includes a processor and a memory. The memory stores a computer program or computer instructions. The processor is configured to invoke and run the computer program or the computer instructions stored in the memory, to enable the processor to implement any one of the implementations of the ninth aspect.

Optionally, the communication apparatus further includes a transceiver. The processor is configured to control the transceiver to send and receive a signal.

A twenty-eighth aspect of this application provides a communication apparatus. The communication apparatus includes a processor and a memory. The memory stores a computer program or computer instructions. The processor is configured to invoke and run the computer program or the computer instructions stored in the memory, to enable the processor to implement any one of the implementations of the tenth aspect.

Optionally, the communication apparatus further includes a transceiver. The processor is configured to control the transceiver to send and receive a signal.

A twenty-ninth aspect of this application provides a communication apparatus. The communication apparatus includes a processor and a memory. The memory stores a computer program or computer instructions. The processor is configured to invoke and run the computer program or the computer instructions stored in the memory, to enable the processor to implement any one of the implementations of the eleventh aspect.

Optionally, the communication apparatus further includes a transceiver. The processor is configured to control the transceiver to send and receive a signal.

A thirtieth aspect of this application provides a computer program product including instructions. When the computer program product runs on a computer, the computer is enabled to perform any one of the implementations of the first aspect to the eleventh aspect.

A thirty-first aspect of this application provides a computer-readable storage medium, including computer instructions. When the instructions are run on a computer, the computer is enabled to perform any one of the implementations of the first aspect to the eleventh aspect.

A thirty-second aspect of this application provides a chip apparatus, including a processor, configured to invoke a computer program or computer instructions in a memory, to enable the processor to perform any one of the implementations of the first aspect to the eleventh aspect.

Optionally, the processor is coupled to the memory through an interface.

A thirty-third aspect of this application provides a communication system. The communication system includes the IAB MT according to the first aspect, the upper-level node of the IAB MT according to the second aspect, and the donor node according to the third aspect; the communication system includes the IAB MT according to the first aspect, the upper-level node of the IAB MT according to the fourth aspect, and the donor node according to the third aspect; the communication system includes the IAB MT according to the fifth aspect, the donor node according to the sixth aspect, and the upper-level node of the IAB MT according to the seventh aspect; the communication system includes the IAB DU according to the eighth aspect and the IAB CU according to the ninth aspect; or the communication system includes the first node according to the tenth aspect and the second node according to the eleventh aspect.

It can be learned from the foregoing technical solutions that the technical solutions in this application have the following advantages:
It can be learned from the foregoing technical solutions that the IAB MT determines the first TDD configuration based on the first transmission mode. The first transmission mode includes the transmission mode on the at least one frequency domain resource set in the plurality of frequency domain resource sets of the IAB DU. The first TDD configuration is the cell-common TDD configuration or the dedicated TDD configuration. The IAB MT determines the resource location based on the first TDD configuration. It can be learned that the IAB MT may select the corresponding TDD configuration with reference to the transmission mode on the at least one frequency domain resource set, to determine the resource location. This prevents the IAB MT from missing receiving a downlink signal or incorrectly sending an uplink signal due to an incorrect TDD configuration used by the IAB MT, to improve communication transmission performance.

### BRIEF DESCRIPTION OF DRAWINGS

FIG. 1A is a schematic diagram of a communication system according to an embodiment of this application;
FIG. 1B is a schematic diagram of a backhaul link and an access link according to an embodiment of this application;
FIG. 1C is a schematic diagram of a functional structure of an IAB node according to an embodiment of this application;
FIG. 2(a) is a schematic diagram of a sending scenario of spatial multiplexing transmission according to an embodiment of this application;
FIG. 2(b) is a schematic diagram of a receiving scenario of spatial multiplexing transmission according to an embodiment of this application;
FIG. 2(c) is a schematic diagram of a scenario of uplink full-duplex transmission according to an embodiment of this application;
FIG. 2(d) is a schematic diagram of a scenario of downlink full-duplex transmission according to an embodiment of this application;
FIG. 3A is a schematic diagram of a cell-common TDD configuration according to an embodiment of this application;
FIG. 3B is another schematic diagram of a cell-common TDD configuration according to an embodiment of this application;
FIG. 3C is another schematic diagram of a cell-common TDD configuration according to an embodiment of this application;
FIG. 3D is a schematic diagram of a dedicated TDD configuration according to an embodiment of this application;
FIG. 3E is another schematic diagram of a dedicated TDD configuration according to an embodiment of this application;
FIG. 3F is another schematic diagram of a dedicated TDD configuration according to an embodiment of this application;
FIG. 4 is a schematic diagram of an embodiment of a resource configuration method according to an embodiment of this application;
FIG. 5 is a schematic diagram of another embodiment of a resource configuration method according to an embodiment of this application;
FIG. 6 is a schematic diagram of another embodiment of a resource configuration method according to an embodiment of this application;
FIG. 7 is a schematic diagram of another embodiment of a resource configuration method according to an embodiment of this application;
FIG. 8 is a schematic diagram of another embodiment of a resource configuration method according to an embodiment of this application;
FIG. 9 is a schematic diagram of a periodicity and an offset value of a TDD configuration used by an IAB MT according to an embodiment of this application;
FIG. 10 is a schematic diagram of another embodiment of a resource configuration method according to an embodiment of this application;
FIG. 11 is a schematic diagram of another embodiment of a resource configuration method according to an embodiment of this application;
FIG. 12A is a schematic diagram of correspondences between frequency domain resource sets and TDD configurations according to an embodiment of this application;
FIG. 12B is another schematic diagram of correspondences between frequency domain resource sets and TDD configurations according to an embodiment of this application;
FIG. 12C is another schematic diagram of correspondences between frequency domain resource sets and TDD configurations according to an embodiment of this application;
FIG. 12D is another schematic diagram of correspondences between frequency domain resource sets and TDD configurations according to an embodiment of this application;
FIG. 13 is a schematic diagram of another embodiment of a resource configuration method according to an embodiment of this application;
FIG. 14A is a schematic diagram of a scenario of a resource configuration method according to an embodiment of this application;
FIG. 14B is a schematic diagram of another scenario of a resource configuration method according to an embodiment of this application;
FIG. 15 is a schematic diagram of a structure of a communication apparatus according to an embodiment of this application;
FIG. 16 is a schematic diagram of another structure of a communication apparatus according to an embodiment of this application;
FIG. 17 is a schematic diagram of another structure of a communication apparatus according to an embodiment of this application;
FIG. 18 is a schematic diagram of another structure of a communication apparatus according to an embodiment of this application;
FIG. 19 is a schematic diagram of another structure of a communication apparatus according to an embodiment of this application;
FIG. 20 is a schematic diagram of another structure of a communication apparatus according to an embodiment of this application;
FIG. 21 is a schematic diagram of another structure of a communication apparatus according to an embodiment of this application;
FIG. 22 is a schematic diagram of another structure of a communication apparatus according to an embodiment of this application; and
FIG. 23 is a schematic diagram of another structure of a communication apparatus according to an embodiment of this application.

### DESCRIPTION OF EMBODIMENTS

Embodiments of this application provide a resource configuration method and a communication apparatus, so that an IAB MT determines a first TDD configuration based on a first transmission mode, to determine a resource location. This prevents the IAB MT from missing receiving or incorrectly sending a signal due to an incorrect TDD configuration used by the IAB MT, to improve communication transmission performance.

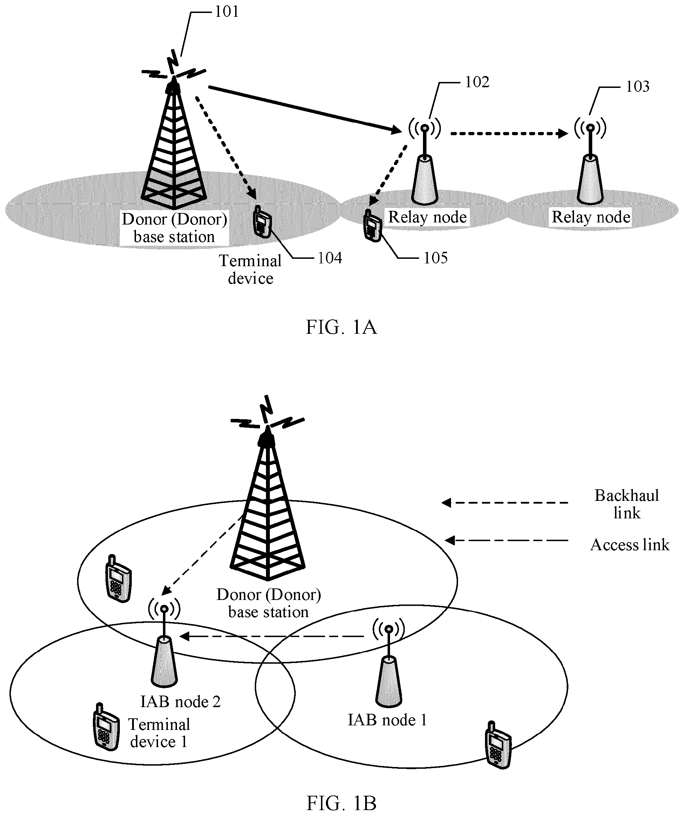

FIG. 1A is a schematic diagram of a communication system according to an embodiment of this application. Refer to FIG. 1A. The communication system is an IAB system, and the IAB system includes at least one base station 101, a relay node 102, a relay node 103, a relay node 104, a terminal device 104, and a terminal device 105.

The base station 101 is usually referred to as a donor base station, or may also be referred to as a donor node. The terminal device is also referred to as a terminal. The relay node may also be usually referred to as an IAB node. The base station includes but is not limited to: an eNB, a radio network controller (radio network controller, RNC), a NodeB (nodeB, NB), a base station controller (base station controller, BSC), a base transceiver station (base transceiver station, BTS), a home NodeB (for example, a home evolved nodeB or a home nodeB, HNB), a baseband unit (baseband unit, BBU), a new radio NodeB (for example, a gNB), a transmission reception point TRP, a transmission point TP, or the like.

The relay node 103 is an upper-level node of the relay node 102, and the relay node 102 is a lower-level node of the base station 101. The lower-level node may be usually considered as a terminal of the upper-level node.

In FIG. 1A, the donor base station is configured to access a core network. Alternatively, the donor base station serves as an anchor base station of a radio access network, and the network is accessed via the anchor base station. The anchor base station is responsible for data processing at a packet data convergence protocol (packet data convergence protocol, PDCP) layer, or responsible for receiving data from the core network and forwarding the data to the relay node, or receiving data from the relay node and forwarding the data to the core network.

The following describes a backhaul link and an access link with reference to FIG. 1B. As shown in FIG. 1B, a donor base station is an upper-level node of an IAB node 2, and an IAB node 1 is a lower-level node of the IAB node 2. In an IAB system, a link for communication between the IAB node 2 and an upper-level node (for example, the donor base station) is usually referred to as a backhaul link. A link for communication between the IAB node 2 and a lower-level node (for example, the IAB node 1 or a terminal device 1) is usually referred to as an access link.

Optionally, in some communication protocols or communication architectures, a link for communication between an IAB node and a lower-level node is also referred to as a backhaul link, and a link for communication between the IAB node and a terminal device is referred to as an access link. This is not specifically limited in this application. An example in which a link for communication between an IAB node and a lower-level node or a terminal device is referred to as an access link is used below for description.

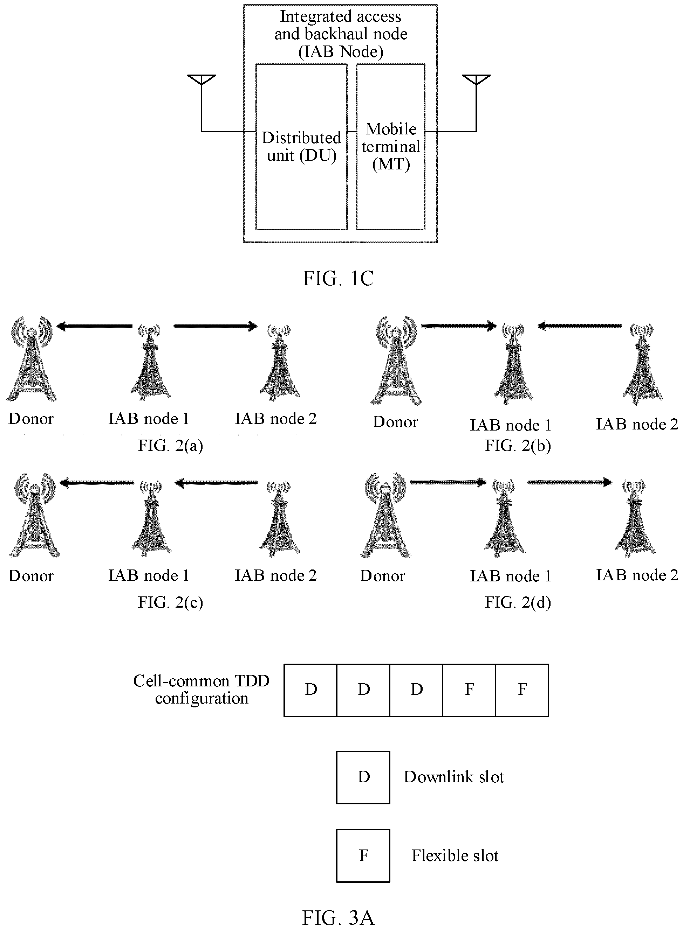

In terms of functions, the IAB node is divided into: an IAB mobile terminal (mobile terminat, MT) and an IAB distributed unit (distributed unit, DU). For details, refer to FIG. 1C. The IAB MT means that an IAB node is connected to an upper-level node as a terminal device. The IAB DU means an IAB that serves as a base station distributed unit and provides an access service for UE and another lower-level node. Usually, the IAB MT communicates with the upper-level node through a backhaul link, the IAB DU communicates with the lower-level node through a backhaul link, and the IAB DU communicates with the terminal device through an access link.

The MT and the DU in the IAB node shown in FIG. 1C each have a complete transceiver module, and there is an interface between the MT and the DU. The MT and the DU are logical modules. During actual application, the MT and the DU may share some sub-modules. For example, the MT and the DU share transmit and receive antennas, a baseband processing module, and the like. Alternatively, the MT and the DU may share hardware. Specific implementations of the MT and the DU are not limited in this application.

It should be understood that the term "and/or" in this specification describes only an association relationship between associated objects, and represents that three relationships may exist. For example, A and/or B may represent the following three cases: Only A exists, only B exists, and both A and B exist.

Some technical terms in this application are described below.
1. Spatial division multiplexing transmission: When the IAB MT sends an uplink signal to the upper-level node through the backhaul link, the IAB DU may send a downlink signal to the lower-level node or the terminal device through the access link. Alternatively, when the IAB MT receives, through the backhaul link, a downlink signal sent by the upper-level node, the IAB DU receives, through the access link, an uplink signal sent by the lower-level node or the terminal device.

For example, FIG. 2(a) is a schematic diagram of a sending scenario of spatial multiplexing transmission according to an embodiment of this application. When an MT unit of an IAB node 1 sends an uplink signal to a donor base station through a backhaul link, a DU unit of the IAB node 1 sends a downlink signal to an IAB node 2 through an access link. The IAB node 1 is an upper-level node of the IAB node 2.

For example, FIG. 2(b) is a schematic diagram of a receiving scenario of spatial multiplexing transmission according to an embodiment of this application. When an MT unit of an IAB node 1 receives, through a backhaul link, a downlink signal sent by a donor base station, a DU unit of the IAB node 1 receives, through an access link, an uplink signal sent by an IAB node 2. The IAB node 1 is an upper-level node of the IAB node 2.

2. Full-duplex multiplexing transmission: When the IAB MT sends an uplink signal to the upper-level node through the access link, the IAB DU may receive, through the backhaul link, an uplink signal sent by the lower-level node or the terminal device. Alternatively, when the IAB MT receives, through the backhaul link, a downlink signal sent by the upper-level node, the IAB DU may send, through the access link, a downlink signal to the lower-level node or the terminal device.

For example, FIG. 2(c) is a schematic diagram of a scenario of uplink full-duplex multiplexing transmission according to an embodiment of this application. When an MT unit of an IAB node 1 sends an uplink signal to a donor base station through a backhaul link, a DU unit of the IAB node 1 receives, through an access link, an uplink signal sent by an IAB node 2. The IAB node 1 is an upper-level node of the IAB node 2.

For example, FIG. 2(d) is a schematic diagram of a scenario of downlink full-duplex multiplexing transmission according to an embodiment of this application. When an MT unit of an IAB node 1 receives, through a backhaul link, a downlink signal sent by a donor base station, a DU unit of the IAB node 1 sends, through an access link, a downlink signal to an IAB node 2. The IAB node 1 is an upper-level node of the IAB node 2.
3. Time division multiplexing transmission: The IAB MT and the IAB DU perform transmission in different time segments. In other words, the time segments for transmission by the IAB MT and the IAB DU do not overlap with each other, and the transmission includes receiving and sending.
4. Frequency domain resource set: The frequency domain resource set is a resource block (resource block, RB) set obtained by further subdividing a resource of a cell of the IAB DU. The frequency domain resource set may also be referred to as an RB set. The RB is a resource division manner defined in a standard, and represents 12 consecutive OFDM subcarriers in frequency domain. One frequency domain resource set includes one or more frequency domain resource sets. If the frequency domain resource set includes one frequency domain resource set, the frequency domain resource set may be referred to as a frequency domain resource for short. In this application, a plurality of frequency domain resource sets of the IAB DU may be frequency domain resource sets of a cell of the IAB DU, or frequency domain resource sets of a plurality of cells of the IAB DU. This is not specifically limited in this application.
5. Spatial transmit multiplexing relationship: When the IAB MT sends an uplink signal to the upper-level node, the IAB DU may send a downlink signal to the lower-level node on a frequency domain resource set of the IAB DU (where the IAB DU performs downlink transmission on the frequency domain resource set of the IAB DU). In this case, the IAB MT and the frequency domain resource set of the IAB DU meet the spatial transmit multiplexing relationship. The spatial transmit multiplexing relationship may be referred to as DU_TX/MT_TX for short.
6. Spatial receive multiplexing relationship: When the IAB MT receives a downlink signal sent by the upper-level node, the IAB DU may receive, on a frequency domain resource set of the IAB DU, an uplink signal of the lower-level node (where the IAB DU performs uplink reception on the frequency domain resource set of the IAB DU). In this case, the IAB MT and the frequency domain resource set of the IAB DU meet the spatial receive multiplexing relationship. The spatial receive multiplexing relationship may be referred to as DU_RX/MT_RX for short.
7. First full-duplex multiplexing relationship: When the IAB MT receives a downlink signal sent by the upper-level node, the IAB DU may send a downlink signal to the lower-level node on a frequency domain resource set of the IAB DU (where the IAB DU performs downlink transmission on the frequency domain resource set of the IAB DU). In this case, the IAB MT and the frequency domain resource set of the IAB DU meet the first full-duplex multiplexing relationship. The first full-duplex multiplexing relationship may be referred to as DU_TX/MT_RX for short.
8. Second full-duplex multiplexing relationship: When the IAB MT sends an uplink signal to the upper-level node, the IAB DU may receive, on a frequency domain resource set of the IAB DU, an uplink signal sent by the lower-level node (where the IAB DU performs uplink reception on the frequency domain resource set of the IAB DU). In this case, the IAB MT and the frequency domain resource set of the IAB DU meet the second full-duplex multiplexing relationship. The second full-duplex multiplexing relationship may be referred to as DU_RX/MT_TX for short.
9. TDD configuration: Resources of the IAB MT are classified into three types based on transmission directions: a downlink (D) resource, an uplink (U) resource, and a flexible (F) resource. The flexible resource indicates that a transmission direction of the IAB MT on the flexible resource depends on a further indication of the upper-level node. Usually, the upper-level node may indicate the transmission direction of the IAB MT on the flexible resource to the IAB MT by using physical layer signaling, and a resource configuration that is configured based on the transmission direction and that is of the IAB MT is referred to as a TDD configuration.
10. Cell-common TDD configuration: In a configuration periodicity, a downlink slot or a downlink time domain symbol is located at a beginning of the configuration periodicity, and a remaining slot or a remaining time domain symbol in which no transmission manner is specified and that is in the configuration periodicity is considered as a flexible slot or a flexible time domain symbol. Alternatively, a downlink slot or a downlink time domain symbol is located at an end of a configuration periodicity, and a remaining slot or a remaining time domain symbol in which no transmission direction is specified and that is in the configuration periodicity is considered as a flexible slot or a flexible time domain symbol. Alternatively, in a configuration periodicity, a downlink slot or a downlink time domain symbol is located at a beginning of the configuration periodicity, an uplink slot or an uplink time domain symbol is located at an end of the configuration periodicity, and a remaining slot or a remaining time domain symbol in which no transmission manner is specified and that is in the configuration periodicity is considered as a flexible slot or a flexible time domain symbol. When the IAB MT and a frequency domain resource set of the IAB DU performs full-duplex multiplexing transmission or time division multiplexing transmission, the cell-common TDD configuration may be used.

For example, FIG. 3A is a schematic diagram of a cell-common TDD configuration. As shown in FIG. 3A, the first three slots in a configuration periodicity are downlink slots, and remaining slots (the 4^{th} slot and the 5^{th} slot in the configuration periodicity) are flexible slots.

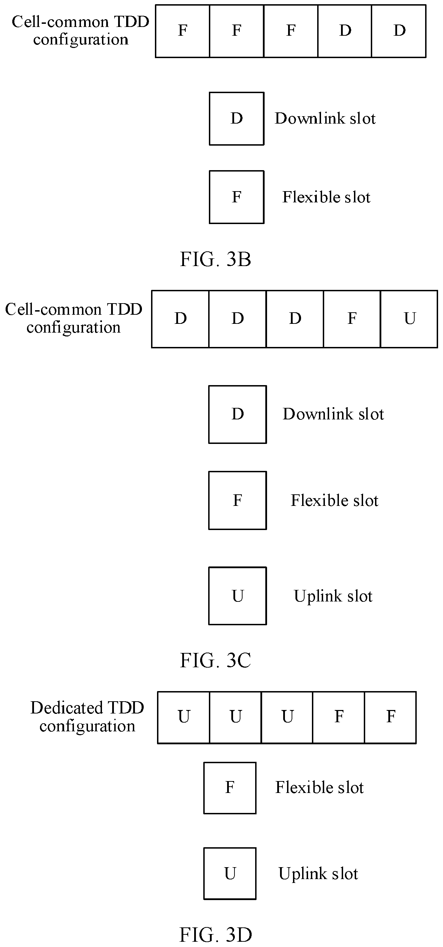

For example, FIG. 3B is another schematic diagram of a cell-common TDD configuration. As shown in FIG. 3B, the last two slots in a configuration periodicity are flexible slots, and remaining slots (the first three slots in the configuration periodicity) are flexible slots.

For example, FIG. 3C is another schematic diagram of a cell-common TDD configuration. As shown in FIG. 3C, the first three slots in a configuration periodicity are downlink slots, the last slot in the configuration periodicity is an uplink slot, and a remaining slot (the 4^{th} slot in the configuration periodicity) in the configuration periodicity is a flexible slot.

11. Dedicated TDD configuration: In a configuration periodicity, an uplink slot or an uplink time domain symbol is located at a beginning of the configuration periodicity, and a remaining slot or a remaining time domain symbol in which no transmission direction is specified and that is in the configuration periodicity is considered as a flexible slot or a flexible time domain symbol. Alternatively, a downlink slot or a downlink time domain symbol is located at an end of a configuration periodicity, and a remaining slot or a remaining time domain symbol in which no transmission direction is specified and that is in the configuration periodicity is considered as a flexible slot or a flexible time domain symbol. Alternatively, an uplink slot or an uplink time domain symbol is located at a beginning of a configuration periodicity, a downlink slot or a downlink time domain symbol is located at an end of the configuration periodicity, and a remaining slot or a remaining time domain symbol in which no transmission manner is specified and that is in the configuration periodicity is considered as a flexible slot or a flexible time domain symbol. When the IAB MT and a frequency domain resource set of the IAB DU performs spatial division multiplexing transmission, the dedicated TDD configuration may be used.

For example, FIG. 3D is a schematic diagram of a dedicated TDD configuration. As shown in FIG. 3D, the first three slots in a configuration periodicity are uplink slots, and remaining unspecified slots (the last two slots in the configuration periodicity) in the configuration periodicity are flexible slots.

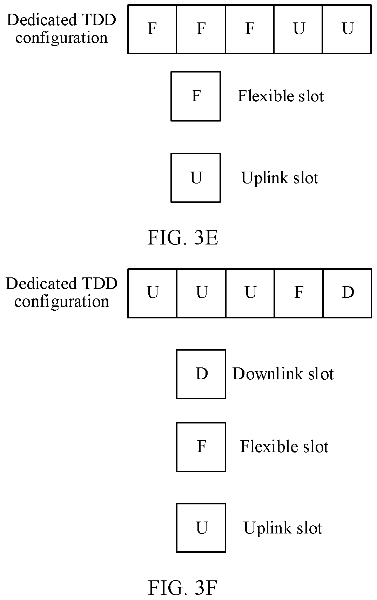

For example, FIG. 3E is another schematic diagram of a dedicated TDD configuration. As shown in FIG. 3E, the last two slots in a configuration periodicity are uplink slots, and remaining unspecified slots (the first three slots in the configuration periodicity) in the configuration periodicity are flexible slots.

For example, FIG. 3F is another schematic diagram of a dedicated TDD configuration. As shown in FIG. 3F, the first three slots in a configuration periodicity are uplink slots, the last slot in the configuration periodicity is a downlink slot, and a remaining slot (the 4^{th} slot in the configuration periodicity) in the configuration periodicity is a flexible slot.

12. Beam (beam): The beam is a communication resource. The beam may be a wide beam, a narrow beam, or another type of beam. A technology for forming the beam may be a beam forming technology or another technical means.

In a current new radio (new radio, NR) protocol, the beam may be represented by using an antenna port quasi co-location (quasi co-location, QCL) relationship. Specifically, spatial receive parameters (spatial Rx parameters) of two signals on a same beam have a QCL relationship, that is, QCL-Type D: {Spatial Rx parameter} in the protocol. In the protocol, the beam may be specifically represented by using identifiers of various signals, for example, a resource index of a channel state information reference signal (channel state information reference signal, CSI-RS), an index of a synchronization signal/physical broadcast channel block (synchronous signal/physical broadcast channel block, SS/PBCH block or SSB), a resource index of a sounding reference signal (sounding reference signal, SRS), and a resource index of a tracking reference signal (tracking reference signal, TRS).

The beam usually corresponds to a resource. For example, during beam measurement, a network device sends different resources by using different beams, and a terminal feeds back measured resource quality, so that the network device learns of quality of a corresponding beam. During data transmission, beam information is also indicated by using a resource corresponding to the beam information. For example, the network device indicates, by using a transmission configuration indication (transmission configuration indication, TCI) field in downlink control information (downlink control information, DCI), information about a beam for the terminal to receive a physical downlink shared channel (physical downlink shared channel, PDSCH).

In addition, one beam usually corresponds to one reference signal, one TCI, one transmission reception point (transmission reception point, TRP), or one sounding reference signal resource indicator (SRS resource indicator, SRI) (used for uplink data transmission). Therefore, different beams may also be represented by using different reference signals, TCIs, TRPs, or SRIs.

For ease of description, in embodiments of this application, the beam is used as an example to describe the solutions provided in embodiments of this application. The reference signal, the TCI, the TRP, the SRI, the resource index of the CSI-RS, the index of the SS/PBCH block, the resource index of the SRS, and the resource index of the TRS may all represent the beam. Therefore, the beam in the following may alternatively be replaced with a reference signal, a TCI, a TRP, an SRI, a resource index of a CSI-RS, an index of an SS/PBCH block, an index of an SRS resource, or a resource index of a TRS. In addition, the replacement does not change the essence of the method provided in embodiments of this application.

In this application, the frequency domain resource of the IAB MT may be configured based on a carrier level, or may be configured based on another level. This is not specifically limited in this application. For example, the IAB MT is configured based on a component carrier (component carrier, CC) level. In some scenarios, the CC is also referred to as a serving cell (serving cell). It should be understood that in this application, the two expressions may be equivalently replaced with each other. In this application, that the IAB MT and the frequency domain resource set of the IAB DU meet a multiplexing relationship may be referred to as that the IAB MT CC and the frequency domain resource set of the IAB DU meet the multiplexing relationship. For ease of description, the IAB MT and the frequency domain resource set of the IAB DU meet the multiplexing relationship.

The following describes the technical solutions of this application with reference to specific embodiments.

It should be noted that the IAB MT is an MT unit of the relay node, and the IAB DU is a DU unit of the relay node. That is, the IAB MT and the IAB DU may be two units of the same relay node. In the following embodiments, the IAB MT may be replaced with the MT unit of the relay node, and the IAB DU may be replaced with the DU unit of the relay node. The IAB MT and the IAB DU are used as examples to describe the technical solutions of this application.

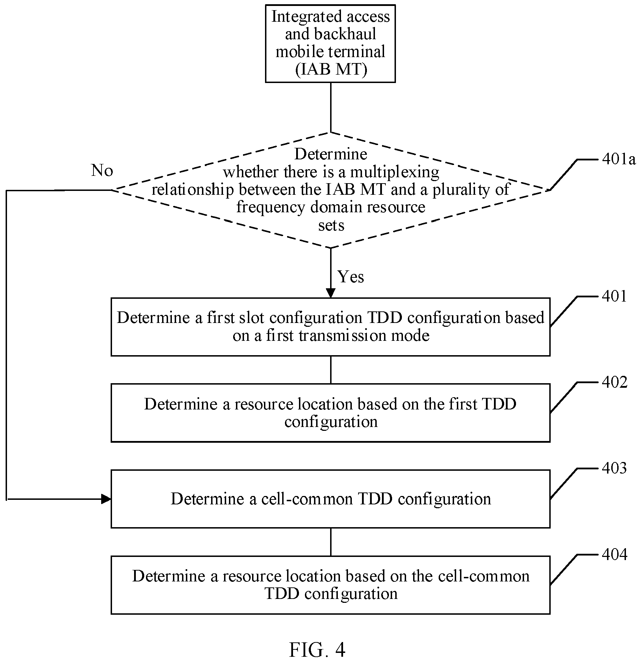

FIG. 4 is a schematic diagram of an embodiment of a resource configuration method according to an embodiment of this application. Refer FIG. 4. The resource configuration method includes the following steps.

401: An IAB MT determines a first TDD configuration based on a first transmission mode.

The first transmission mode includes a transmission mode on at least one frequency domain resource set in a plurality of frequency domain resource sets of an IAB DU. The first TDD configuration is a cell-common TDD configuration or a dedicated TDD configuration. For related descriptions of the cell-common TDD configuration and the dedicated TDD configuration, refer to the related descriptions in the foregoing descriptions. Details are not described herein again.

In this application, the frequency domain resource set may also be referred to as an RB set. One frequency domain resource set includes one or more frequency domain resources. When the frequency domain resource set includes one frequency domain resource, the frequency domain resource set may be referred to as a frequency domain resource for short.

Optionally, the plurality of frequency domain resource sets of the IAB DU may be a frequency domain resource set of a cell of the IAB DU, or a frequency domain resource sets of a plurality of cells of the IAB DU. For example, the plurality of frequency domain resource sets of the IAB DU include an RB set 1 of an IAB DU cell #1 and an RB set 2 of the IAB DU cell #1. For example, the plurality of frequency domain resource sets of the IAB DU include the RB set 1 of the IAB DU cell #1 and an RB set 2 of an IAB DU cell #2.

In some implementations, the first transmission mode includes a transmission direction of the IAB DU on the at least one frequency domain resource set. For example, the IAB DU performs uplink receiving or downlink transmission on the at least one frequency domain resource set.

In some implementations, the IAB MT determines the first TDD configuration based on the first transmission mode and a multiplexing relationship between the IAB MT and the at least one frequency domain resource set.

It should be noted that, optionally, whether a multiplexing relationship is met between the IAB MT and the plurality of frequency domain resource sets and which multiplexing relationship is met may be preconfigured, indicated by a donor node to the IAB MT, indicated by an upper-level node of the IAB to the IAB MT or the IAB DU, or indicated by the IAB DU to a donor base station. This is not specifically limited in this application.

For example, no multiplexing relationship is met between the IAB MT and any frequency domain resource set in the plurality of frequency domain resource sets, or a multiplexing relationship may be met between the IAB MT and at least one frequency domain resource set in the plurality of frequency domain resource sets.

It should be noted that, optionally, one or more multiplexing relationships may be met between the IAB MT and one frequency domain resource set. This is not specifically limited in this application.

Optionally, whether the IAB MT and the frequency domain resource set meet a multiplexing relationship and which multiplexing relationship is met between the IAB MT and the frequency domain resource set may be related to at least one of the following factors: a multiplexing capability of IAB MT, a multiplexing capability of IAB DU, a beam used by IAB MT, a beam used by IAB DU, transmit power of the IAB MT, transmit power of the IAB DU, frequency domain isolation between a frequency domain resource used by the IAB MT and the plurality of frequency domain resource sets of the IAB DU, a guard band size, a quantity of guard symbols, an unintended beam set, a quantity of transmit/receive radio frequency channels (send/receive radio frequency channels, TRxs) of the IAB MT, a quantity of TRxs of the IAB DU, downlink receive power that is of the IAB MT and that needs to be set in within a specific interval, a maximum quantity of demodulation reference signal (demodulation reference signal, DMRS) ports for downlink scheduling of the IAB MT, a maximum quantity of DMRS ports for uplink scheduling of the IAB MT, a timing mode that is of the uplink scheduling of the IAB MT and that is set to a specific mode.

In this application, there are a plurality of manners in which the IAB MT determines the first TDD configuration based on the first transmission mode. The following describes several possible implementations: Implementation 1, Implementation 2, Implementation 3, and Implementation 4.

Implementation 1: That an IAB MT determines a first TDD configuration based on a first transmission mode includes at least one of the following cases.
1. If the IAB DU performs downlink transmission on the at least one frequency domain resource set, and the IAB MT and the at least one frequency domain resource set meet a spatial transmit multiplexing relationship, the first TDD configuration is the dedicated TDD configuration.
   The IAB DU performs the downlink transmission on the at least one frequency domain resource set. To be specific, the IAB DU sends a downlink signal to a lower-level node on the at least one frequency domain resource set. The IAB MT and the at least one frequency domain resource set meet the spatial transmit multiplexing relationship. It can be learned that a transmission direction of the IAB DU on the at least one frequency domain resource set is downlink sending. Therefore, the IAB MT may perform spatial multiplexing transmission with the at least one frequency domain resource set. Therefore, the IAB MT may select the dedicated TDD configuration as the first TDD configuration.
2. If the IAB DU performs uplink reception on the at least one frequency domain resource set, and the IAB MT and the at least one frequency domain resource set meet a spatial receive multiplexing relationship, the first TDD configuration is the dedicated TDD configuration.
   The IAB DU performs the uplink reception on the at least one frequency domain resource set. To be specific, the IAB DU sends receives an uplink signal sent by a lower-level node on the at least one frequency domain resource set. The IAB MT and the at least one frequency domain resource set meet the spatial receive multiplexing relationship. It can be learned that a transmission direction of the IAB DU on the at least one frequency domain resource set is uplink reception. Therefore, the IAB MT may perform spatial multiplexing transmission with the at least one frequency domain resource set. Therefore, the IAB MT may select the dedicated TDD configuration as the first TDD configuration.
3. If the IAB DU performs downlink transmission on the at least one frequency domain resource set, and the IAB MT and the at least one frequency domain resource set meet a first full-duplex multiplexing relationship, the first TDD configuration is the cell-common TDD configuration.
   The IAB DU performs the downlink transmission on the at least one frequency domain resource set. To be specific, the IAB DU sends a downlink signal to a lower-level node on the at least one frequency domain resource set. The IAB MT and the at least one frequency domain resource set meet the first full-duplex multiplexing relationship. It can be learned that a transmission direction of the IAB DU on the at least one frequency domain resource set is downlink sending. Therefore, the IAB MT may perform full-duplex multiplexing transmission with the at least one frequency domain resource set. Therefore, the IAB MT may select the cell-common TDD configuration.
4. If the IAB DU performs uplink reception on the at least one frequency domain resource set, and the IAB MT and the at least one frequency domain resource set meet a second full-duplex multiplexing relationship, the first TDD configuration is the cell-common TDD configuration.
   The IAB DU performs the uplink reception on the at least one frequency domain resource set. To be specific, the IAB DU sends receives an uplink signal of a lower-level node on the at least one frequency domain resource set. The IAB MT and the at least one frequency domain resource set meet the second full-duplex multiplexing relationship. It can be learned that a transmission direction of the IAB DU on the at least one frequency domain resource set is uplink reception. Therefore, the IAB MT may perform full-duplex multiplexing transmission with the at least one frequency domain resource set. Therefore, the IAB MT may select the cell-common TDD configuration.
5. If the IAB DU performs uplink reception on a first frequency domain resource set and performs downlink transmission on a second frequency domain resource set, the IAB MT and the first frequency domain resource meet a second full-duplex multiplexing relationship, and the IAB MT and the second frequency domain resource meet a spatial transmit multiplexing relationship, the first TDD configuration is the dedicated TDD configuration, and the plurality of frequency domain resource sets include the first frequency domain resource set and the second frequency domain resource set.
   The IAB DU receives an uplink signal of a lower-level node on the first frequency domain resource set, and sends a downlink signal to the lower-level node on the second frequency domain resource set. The IAB MT and the first frequency domain resource set of the IAB DU meet the second full-duplex multiplexing relationship, and the IAB MT and the second frequency domain resource meet the spatial transmit multiplexing relationship. In this implementation, the IAB MT may preferentially select the dedicated TDD configuration.
6. If the IAB DU performs uplink reception on a first frequency domain resource set and performs uplink reception on a second frequency domain resource set, the IAB MT and the first frequency domain resource meet a second full-duplex multiplexing relationship, and the IAB MT and the second frequency domain resource meet a spatial receive multiplexing relationship, the first TDD configuration is the dedicated TDD configuration.
   The IAB DU receives an uplink signal of a lower-level node on the first frequency domain resource set, and receives an uplink signal of the lower-level node on the second frequency domain resource. The IAB MT and the first frequency domain resource set meet the second full-duplex multiplexing relationship, and the IAB MT and the second frequency domain resource meet the spatial receive multiplexing relationship. In this implementation, the IAB MT may preferentially select the dedicated TDD configuration.
7. If the IAB DU performs downlink transmission on a first frequency domain resource set and performs downlink transmission on a second frequency domain resource set, the IAB MT and the first frequency domain resource set meet a first full-duplex multiplexing relationship, and the IAB MT and the second frequency domain resource meet a spatial transmit multiplexing relationship, the first TDD configuration is the dedicated TDD configuration.
   The IAB DU sends a downlink signal to a lower-level node on the first frequency domain resource set, and sends a downlink signal to the lower-level node on the second frequency domain resource set. The IAB MT and the first frequency domain resource set meet the first full-duplex multiplexing relationship, and the IAB MT and the second frequency domain resource set meet the spatial transmit multiplexing relationship. In this implementation, the IAB MT may preferentially select the dedicated TDD configuration.
8. If the IAB DU performs downlink transmission on a first frequency domain resource set and performs uplink reception on a second frequency domain resource set, the IAB MT and the first frequency domain resource set meet a first full-duplex multiplexing relationship, and the IAB MT and the second frequency domain resource meet a spatial receive multiplexing relationship, the first TDD configuration is the dedicated TDD configuration.

The IAB DU sends a downlink signal to a lower-level node on the first frequency domain resource set, and receives, on the second frequency domain resource set, an uplink signal sent by the lower-level node. The IAB MT and the first frequency domain resource set meet the first full-duplex multiplexing relationship, and the IAB MT and the second frequency domain resource set meet the spatial receive multiplexing relationship. In the case 8, the IAB MT may preferentially select the dedicated TDD configuration.

The cases 5 and 8 show that when the IAB MT and different frequency domain resource sets of the IAB DU meet different multiplexing working conditions, the IAB MT may preferentially select the dedicated TDD configuration. The multiplexing working condition includes a transmission mode on the frequency domain resource set and a multiplexing relationship met between the IAB MT and the frequency domain resource set.

9. If the IAB DU has no transmission on the plurality of frequency domain resource sets, the first TDD configuration is the cell-common TDD configuration.

If no transmission is performed on any frequency domain resource set of the IAB DU, the IAB MT may use the cell-common TDD configuration by default. In other words, time division multiplexing transmission is used between the IAB MT and the IAB DU.

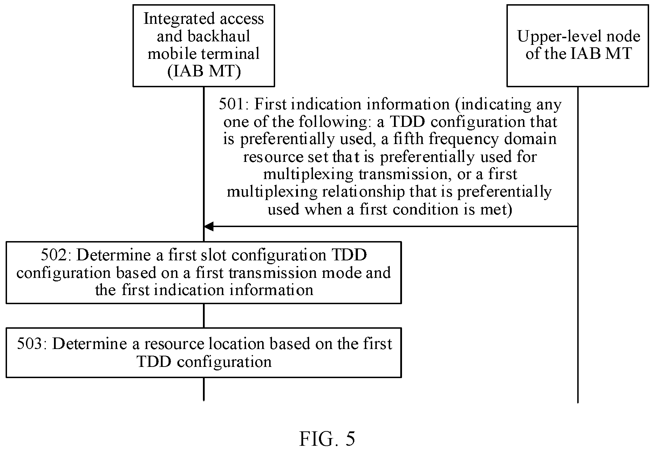

For related descriptions of Implementation 2, Implementation 3, and Implementation 4, refer to related descriptions of the embodiments shown in FIG. 5, FIG. 6, and FIG. 7 below. Details are not described herein.

Optionally, the embodiment shown in FIG. 4 further includes step 401a, step 403, and step 404, and step 401a may be performed before step 401.

401a: The IAB MT determines whether there is a multiplexing relationship between the IAB MT and the plurality of frequency domain resource sets of the IAB DU, and if there is the multiplexing relationship between the IAB MT and the plurality of frequency domain resource sets of the IAB DU, performs step 401; or if there is no multiplexing relationship between the IAB MT and the plurality of frequency domain resource sets of the IAB DU, performs step 403.

If there is no multiplexing relationship between the IAB MT and the plurality of frequency domain resource sets of the IAB DU, step 403 is performed. If there is a multiplexing relationship between the IAB MT and the at least one frequency domain resource set in the plurality of frequency domain resource sets, step 402 is performed.

402: The IAB MT determines a resource location based on the first TDD configuration.

In some implementations, the IAB MT determines, based on the first TDD configuration, whether to receive, on a corresponding time domain resource, at least one of the following: a synchronization signal and physical broadcast channel (synchronization signal and physical broadcast channel block, SSB) or a control-resource set (control-resource set, CORESET).

Optionally, the IAB MT does not transmit, in a slot in which a downlink time domain symbol of the first TDD configuration is located, at least one of the following: a physical uplink shared channel (physical uplink shared channel, PUSCH), a physical uplink control channel (physical uplink control channel, PUCCH), a physical random access channel (physical random access channel, PRACH), or an SRS.

Optionally, the IAB MT does not receive, in a slot in which an uplink time domain symbol of the first TDD configuration is located, at least one of the following: a physical downlink control channel (physical downlink control channel, PDCCH), a PDSCH, a channel state information reference signal (channel state information reference signal, CSI-RS), or an SSB.

For example, the IAB MT determines an uplink slot, a downlink slot, and a flexible slot based on the first TDD configuration, that is, the IAB MT determines an uplink time domain resource and a downlink time domain resource, so that the IAB MT receives or sends a signal on a corresponding time domain resource. In this way, the IAB MT is prevented from missing receiving a downlink signal or missing sending an uplink signal.

403: The IAB MT determines a cell-common TDD configuration.

If there is no multiplexing relationship between the IAB MT and the plurality of frequency domain resource sets, the IAB MT may use the cell-common TDD configuration by default. In other words, time division multiplexing transmission is used between the IAB MT and the IAB DU.

404: The IAB MT determines the resource location based on the cell-common TDD configuration.

For example, in the cell-common TDD configuration shown in FIG. 3C, the IAB MT determines an uplink slot, a downlink slot, and a flexible slot based on the cell-common TDD configuration, so that the IAB MT receives or sends a signal on a corresponding time domain resource. In this way, the IAB MT is prevented from missing receiving a downlink signal or missing sending an uplink signal.

In this embodiment of this application, the IAB MT determines the first TDD configuration based on the first transmission mode. The first transmission mode includes the transmission mode on the at least one frequency domain resource set in the plurality of frequency domain resource sets of the IAB DU. The first TDD configuration is the cell-common TDD configuration or the dedicated TDD configuration. The IAB MT determines the resource location based on the first TDD configuration. It can be learned that the IAB MT may select the corresponding TDD configuration with reference to the transmission mode on the at least one frequency domain resource set, to determine the resource location. This prevents the IAB MT from missing receiving a downlink signal or incorrectly sending an uplink signal due to an incorrect TDD configuration used by the IAB MT, to improve communication transmission performance.

FIG. 5 is a schematic diagram of another embodiment of a resource configuration method according to an embodiment of this application. Refer FIG. 5. The resource configuration method includes the following steps.

501: An upper-level node of an IAB MT sends first indication information to the IAB MT. Correspondingly, the IAB MT receives the first indication information from the upper-level node.

The first indication information indicates any one of the following: a TDD configuration that is preferentially used, a fifth frequency domain resource set that is preferentially used for multiplexing transmission, or a first multiplexing relationship that is preferentially used when a first condition is met.

The first condition includes: the IAB MT and a third frequency domain resource set of an IAB DU meet a spatial transmit multiplexing relationship and/or a spatial receive multiplexing relationship, the IAB MT and a fourth frequency domain resource set of the IAB DU meet a first full-duplex multiplexing relationship and/or a second full-duplex multiplexing relationship. The third frequency domain resource set and the fourth frequency domain resource set are two frequency domain resource sets in a plurality of frequency domain resource sets of the IAB DU.

For example, the first indication information indicates that a dedicated TDD configuration is preferentially used when the first condition is met. To be specific, when the IAB MT and different frequency domain resource sets meet different multiplexing relationships, the upper-level node may indicate, to the IAB MT, the TDD configuration that is preferentially used. In this case, the IAB MT preferentially selects the third frequency domain resource set that meets the spatial transmit multiplexing relationship and/or the spatial receive multiplexing relationship with the IAB MT.

502: The IAB MT determines a first TDD configuration based on a first transmission mode and the first indication information.

Step 502 is described below with reference to content of the first indication information.
I. The first indication information indicates the TDD configuration that is preferentially used when the first condition is met. In this implementation, the first transmission mode is a transmission mode on the third frequency domain resource set, namely, a transmission direction in which the IAB DU performs transmission on the third frequency domain resource set. Descriptions are provided below by using an example in which the first indication information indicates that the dedicated TDD configuration is preferentially used when the first condition is met. That the IAB MT determines a first TDD configuration based on a first transmission mode and the first indication information includes any one of the following cases.
   1. If the IAB MT and the third frequency domain resource set of the IAB DU meet the spatial transmit multiplexing relationship, and the IAB DU performs downlink transmission on the third frequency domain resource set, the first TDD configuration is the dedicated TDD configuration.
   2. If the IAB MT and the third frequency domain resource set of the IAB DU meet the spatial transmit multiplexing relationship, and the IAB DU performs uplink reception on the third frequency domain resource set, the first TDD configuration is a cell-common TDD configuration.
   3. If the IAB MT and the third frequency domain resource set of the IAB DU meet the spatial receive multiplexing relationship, and the IAB DU performs uplink reception on the third frequency domain resource set, the first TDD configuration is the dedicated TDD configuration.
   4. If the IAB MT and the third frequency domain resource set of the IAB DU meet the spatial receive multiplexing relationship, and the IAB DU performs uplink transmission on the third frequency domain resource set, the first TDD configuration is the dedicated TDD configuration.
   5. If the IAB MT and the third frequency domain resource set of the IAB DU meet the spatial receive multiplexing relationship and the spatial transmit multiplexing relationship, and the IAB DU performs uplink reception or downlink transmission on the third frequency domain resource set, the first TDD configuration is the dedicated TDD configuration.
      It canbe learned from the foregoing descriptions that the IAB MT determines the first TDD configuration based on the first indication information and the transmission direction of the IAB DU on the third frequency domain resource set.
II. The first indication information indicates the fifth frequency domain resource set that is preferentially used for multiplexing transmission. In this implementation, the first transmission mode is a transmission mode on the fifth frequency domain resource set, namely, a transmission direction in which the IAB DU performs transmission on the fifth frequency domain resource set.

Optionally, step 502 specifically includes: The IAB MT determines the transmission direction in which the IAB DU performs the transmission on the fifth frequency domain resource set, and determines the first TDD configuration based on the transmission direction and a multiplexing relationship that is met between the IAB MT and the fifth frequency domain resource set.

For example, the IAB MT and the fifth frequency domain resource set meet the spatial transmit multiplexing relationship. If the IAB DU performs downlink transmission on the fifth frequency domain resource set, the IAB MT may determine that the first TDD configuration is the dedicated TDD configuration. If the IAB DU performs uplink reception on the fifth frequency domain resource set, the IAB MT may determine that the first TDD configuration is a cell-common configuration. In other words, time division multiplexing transmission is used between the IAB MT and the IAB DU.

For example, the IAB MT and the fifth frequency domain resource set meet the spatial receive multiplexing relationship. If the IAB DU performs downlink transmission on the fifth frequency domain resource set, the IAB MT may determine that the first TDD configuration is a cell-common TDD configuration. That is, time division multiplexing transmission is used between the IAB MT and the IAB DU. If the IAB DU performs uplink reception on the fifth frequency domain resource set, the IAB MT may determine that the first TDD configuration is the dedicated TDD configuration.

III. The first indication information indicates the first multiplexing relationship that is preferentially used. Optionally, step 502 specifically includes: The IAB MT determines, in the plurality of frequency domain resource sets, a sixth frequency domain resource set that meets a first multiplexing relationship with the IAB MT. The IAB MT determines the first TDD configuration based on a transmission mode on the sixth frequency domain resource set and the first multiplexing relationship.

In this implementation, the first transmission mode is a transmission mode on the sixth frequency domain resource set, namely, a transmission direction in which the IAB DU performs transmission on the sixth frequency domain resource set.

For example, the first multiplexing relationship is the spatial transmit multiplexing relationship. The IAB MT and the sixth frequency domain resource set meet the spatial transmit multiplexing relationship. If the IAB DU performs downlink transmission on the sixth frequency domain resource set, the IAB MT may determine that the first TDD configuration is the dedicated TDD configuration. If the IAB DU performs uplink reception on the sixth frequency domain resource set, the IAB MT may determine that the first TDD configuration is a cell-common TDD configuration. In other words, time division multiplexing transmission is used between the IAB MT and the IAB DU.

503: The IAB MT determines a resource location based on the first TDD configuration.

Step 503 is similar to step 402 in the embodiment shown in FIG. 4. For details, refer to the related descriptions of step 402 in the embodiment shown in FIG. 4. Details are not described herein again.

In this embodiment of this application, the IAB MT receives the first indication information from the upper-level node of the IAB MT. The first indication information indicates any one of the following: the TDD configuration that is preferentially used, the fifth frequency domain resource set that is preferentially used for multiplexing transmission, or the first multiplexing relationship that is preferentially used when the first condition is met. The IAB MT determines the first TDD configuration based on the first transmission mode and the first indication information. Then, the IAB MT determines the resource location based on the first TDD configuration. It can be learned that the IAB MT may select the corresponding TDD configuration with reference to the transmission mode on the at least one frequency domain resource set, to determine the resource location. This prevents the IAB MT from missing receiving a downlink signal or incorrectly sending an uplink signal due to an incorrect TDD configuration used by the IAB MT, to improve communication transmission performance.

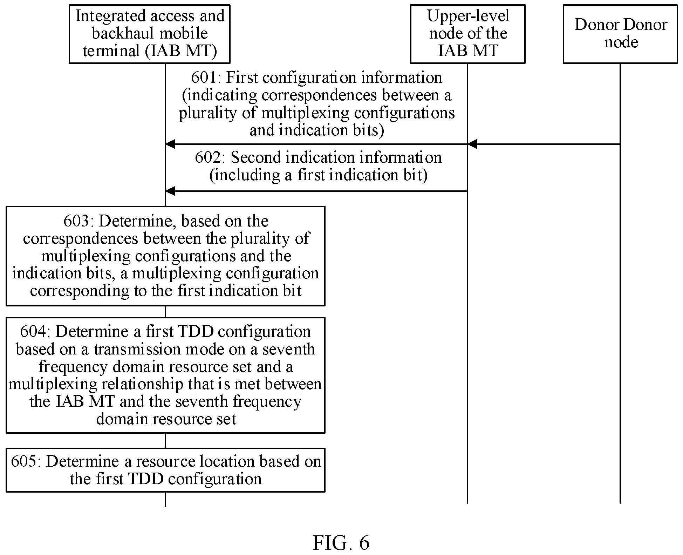

FIG. 6 is a schematic diagram of another embodiment of a resource configuration method according to an embodiment of this application. Refer FIG. 6. The resource configuration method includes the following steps.

601: A donor node sends first configuration information to an IAB MT and an upper-level node of the IAB MT. Correspondingly, the IAB MT and the upper-level node of the IAB MT receive the first configuration information from the donor node.

For example, the donor node may send the first configuration information to the IAB MT and the upper-level node of the IAB MT by using an RRC message.

The first configuration information indicates correspondences between a plurality of multiplexing configurations and indication bits. The plurality of multiplexing configurations are multiplexing configurations between the IAB MT and a plurality of frequency domain resource sets.

For example, the correspondences between the plurality of multiplexing configurations and the indication bits are described below with reference to Table 1.

**Table 1**

| Multiplexing configuration | Indication bit |
|---|---|
| The IAB MT is not multiplexed with any frequency domain resource set of an IAB DU | 00 |
| The IAB MT is multiplexed with an RB set #1 of a cell #0 of the IAB DU | 01 |
| The IAB MT is multiplexed with an RB set #2 of a cell #1 of the IAB DU | 10 |
| The IAB MT is multiplexed with an RB set #0 of a cell #3 of the IAB DU | 11 |

It can be learned from Table 1 that the correspondences include the plurality of multiplexing configurations and an indication bit corresponding to each multiplexing configuration in the plurality of multiplexing configurations. In other words, the first configuration information includes the plurality of multiplexing configurations and the indication bit corresponding to each multiplexing configuration in the plurality of multiplexing configurations.

602: The upper-level node of the IAB MT sends second indication information to the IAB MT. Correspondingly, the IAB MT receives the second indication information from the upper-level node. The second indication information includes a first indication bit.

For example, the first indication bit is "01". In this case, the IAB MT may determine, with reference to Table 1, that the IAB MT is multiplexed with the RB set #1 of the cell #0 of the IAB DU.

For example, the first indication bit is "10". In this case, the IAB MT may determine, with reference to Table 1, that the IAB MT is multiplexed with the RB set #2 of the cell #1 of the IAB DU.

Optionally, the second indication information may be carried in DCI or a MAC CE. In this way, the upper-level node of the IAB MT may dynamically indicate a multiplexing configuration to the IAB MT, to more flexibly indicate the multiplexing configurations between the IAB MT and the plurality of frequency domain resource sets.

603: The IAB MT determines, based on the correspondences between the plurality of multiplexing configurations and the indication bits, a multiplexing configuration corresponding to the first indication bit. The multiplexing configuration corresponding to the first indication bit includes: multiplexing between the IAB MT and a seventh frequency domain resource set in the plurality of frequency domain resource sets.

For example, the first indication bit is "01". In this case, the IAB MT may determine, with reference to Table 1, that the IAB MT is multiplexed with the RB set #1 of the cell #0 of the IAB DU. In other words, the seventh frequency domain resource set is the RB set #1 of the cell #0 of the IAB DU.

604: The IAB MT determines a first TDD configuration based on a transmission mode on the seventh frequency domain resource set and a multiplexing relationship that is met between the IAB MT and the seventh frequency domain resource set.

Specifically, the IAB MT determines the first TDD configuration based on a transmission direction in which the IAB DU performs transmission on the seventh frequency domain resource set and the multiplexing relationship that is met between the IAB MT and the seventh frequency domain resource set.

For example, if the IAB DU has no transmission on the seventh frequency domain resource set, the IAB MT determines that the first TDD configuration is a cell-common TDD configuration.

For example, the IAB MT and the seventh frequency domain resource set meet a spatial transmit multiplexing relationship. If the IAB DU performs downlink transmission on the seventh frequency domain resource set, the IAB MT may determine that the first TDD configuration is a dedicated TDD configuration. If the IAB DU performs uplink reception on the seventh frequency domain resource set, the IAB MT cannot perform spatial multiplexing transmission with the seventh frequency domain resource set. Therefore, the IAB MT may determine that the first TDD configuration is a cell-common TDD configuration. In other words, time division multiplexing transmission is used between the IAB MT and the seventh frequency domain resource set.

For example, the IAB MT and the seventh frequency domain resource set meet a first full-duplex multiplexing relationship. If the IAB DU performs uplink reception on the seventh frequency domain resource set, the IAB MT may determine that the first TDD configuration is a cell-common TDD configuration.

For example, the IAB MT and the seventh frequency domain resource set meet a spatial receive multiplexing relationship. If the IAB DU performs uplink reception on the seventh frequency domain resource set, the IAB MT may determine that the first TDD configuration is a dedicated TDD configuration. If the IAB DR performs downlink transmission on the seventh frequency domain resource set, the IAB MT may determine that the first TDD configuration is a cell-common TDD configuration.

605: The IAB MT determines a resource location based on the first TDD configuration.

Step 605 is similar to step 402 in the embodiment shown in FIG. 4. For details, refer to the related descriptions of step 402 in the embodiment shown in FIG. 4. Details are not described herein again.

In this embodiment of this application, the IAB MT receives first configuration information from the donor node. The first configuration information indicates the correspondences between the plurality of multiplexing configurations and the indication bits. The IAB MT receives the second indication information from the upper-level node of the IAB MT. The second indication information includes the first indication bit. The IAB MT determines, based on the correspondences between the plurality of multiplexing configurations and the indication bits, the multiplexing configuration corresponding to the first indication bit. The IAB MT determines the first TDD configuration based on the transmission mode on the seventh frequency domain resource set and the multiplexing relationship that is met between the IAB MT and the seventh frequency domain resource set. The IAB MT determines the resource location based on the first TDD configuration. It can be learned that the IAB MT may select the corresponding TDD configuration with reference to the transmission mode on the seventh frequency domain resource set, to determine the resource location. This prevents the IAB MT from missing receiving a downlink signal or incorrectly sending an uplink signal due to an incorrect TDD configuration used by the IAB MT, to improve communication transmission performance.

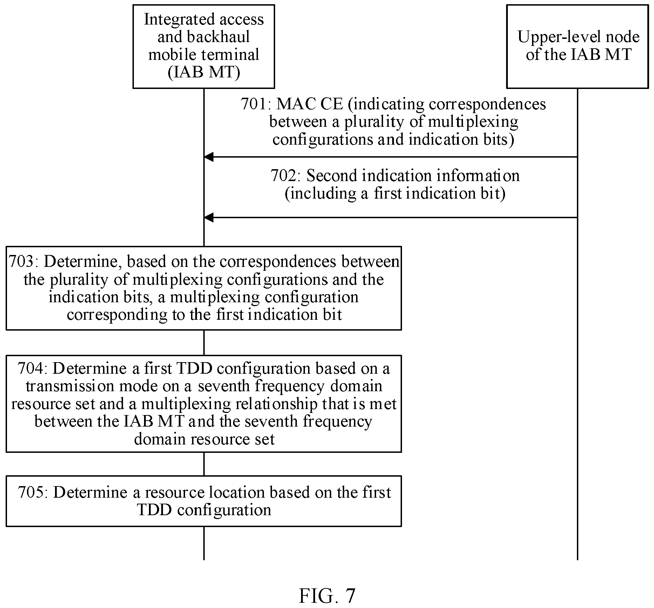

FIG. 7 is a schematic diagram of another embodiment of a resource configuration method according to an embodiment of this application. Refer FIG. 7. The resource configuration method includes the following steps.

701: An upper-level node of an IAB MT sends a MAC CE to the IAB MT. The MAC CE indicates correspondences between a plurality of multiplexing configurations and indication bits. Correspondingly, the IAB MT receives the MAC CE from the upper-level node.

For the correspondences between the plurality of multiplexing configurations and the indication bits, refer to the related descriptions in the embodiment shown in FIG. 6. Details are not described herein again.

In step 701, the upper-level node of the IAB MT dynamically indicates, to the IAB MT by using the MAC CE, the correspondences between the plurality of multiplexing configurations and the indication bits. In other words, the upper-level node may dynamically change multiplexing configurations between the IAB MT and the plurality of frequency domain resource sets, to configure the multiplexing configurations between the IAB MT and the plurality of frequency domain resource sets more flexibly.

702: The upper-level node of the IAB MT sends second indication information to the IAB MT. The second indication information includes a first indication bit. Correspondingly, the IAB MT receives the second indication information from the upper-level node.

It should be noted that the second indication information in step 702 may be carried in the MAC CE in step 701. That is, the upper-level node sends, to the IAB MT by using the same MAC CE, the first indication bit and the correspondences between the plurality of multiplexing configurations and the indication bits. The upper-level node may alternatively separately send the MAC CE in step 701 and the second indication information in step 702.

703: Determine, based on the correspondences between the plurality of multiplexing configurations and the indication bits, a multiplexing configuration corresponding to the first indication bit. The multiplexing configuration corresponding to the first indication bit includes: multiplexing between the IAB MT and a seventh frequency domain resource set in the plurality of frequency domain resource sets.

704: The IAB MT determines a first TDD configuration based on a transmission mode on the seventh frequency domain resource set and a multiplexing relationship that is met between the IAB MT and the seventh frequency domain resource set.

Step 703 and step 704 are similar to step 603 and step 604 in the embodiment shown in FIG. 6. For details, refer to the related descriptions of step 603 and step 604 in the embodiment shown in FIG. 6. Details are not described herein again.

705: The IAB MT determines a resource location based on the first TDD configuration.

Step 705 is similar to step 605 in the embodiment shown in FIG. 7. For details, refer to the related descriptions of step 605 in the embodiment shown in FIG. 6. Details are not described herein again.

In this embodiment of this application, the IAB MT receives the MAC CE from the upper-level node of the IAB MT. The MAC CE indicates the correspondences between the plurality of multiplexing configurations and the indication bits. The IAB MT receives the second indication information from the upper-level node of the IAB MT. The second indication information includes the first indication bit. The IAB MT determines, based on the correspondences between the plurality of multiplexing configurations and the indication bits, the multiplexing configuration corresponding to the first indication bit. The IAB MT determines the first TDD configuration based on the transmission mode on the seventh frequency domain resource set and the multiplexing relationship that is met between the IAB MT and the seventh frequency domain resource set. The IAB MT determines the resource location based on the first TDD configuration. It can be learned that the IAB MT may select the corresponding TDD configuration with reference to the transmission mode on the seventh frequency domain resource set, to determine the resource location. This prevents the IAB MT from missing receiving a downlink signal or incorrectly sending an uplink signal due to an incorrect TDD configuration used by the IAB MT, to improve communication transmission performance.

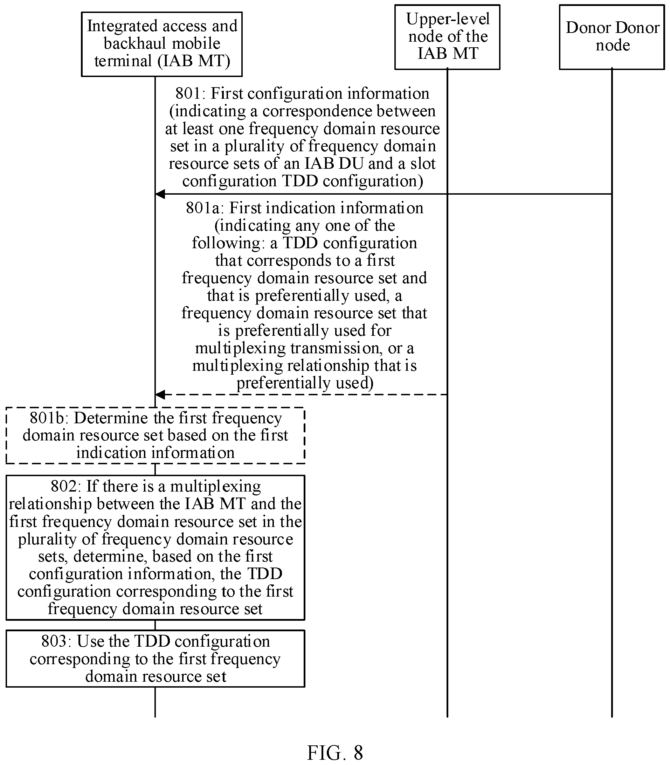

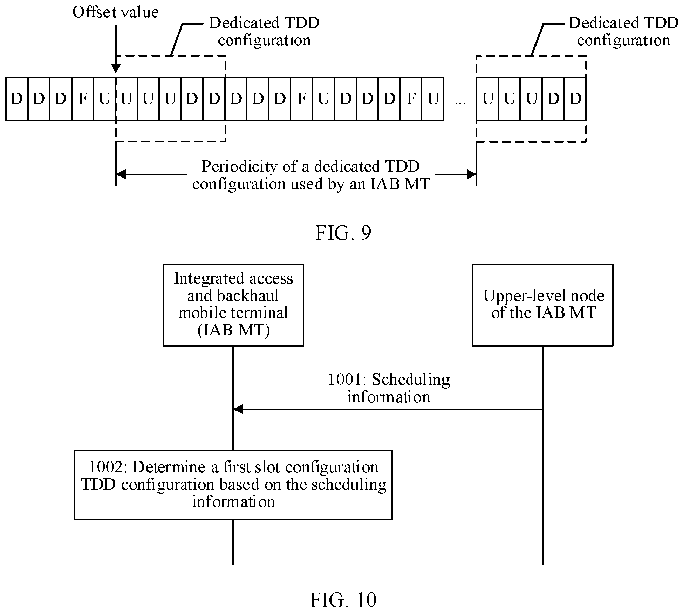

With reference to FIG. 8 and FIG. 10, the following describes two other possible implementations of determining the first TDD configuration by the IAB MT.

FIG. 8 is a schematic diagram of another embodiment of a resource configuration method according to an embodiment of this application. Refer FIG. 8. The resource configuration method includes the following steps.

801: A donor node sends first configuration information to an IAB MT. The first configuration information indicates a correspondence between a TDD configuration and at least one frequency domain resource set in a plurality of frequency domain resource sets of an IAB DU.

The plurality of frequency domain resource sets may be frequency domain resource sets of a cell of the IAB DU, or frequency domain resource sets of a plurality of cells of the IAB DU. This is not specifically limited in this application.

For example, the following describes the correspondence between the TDD configuration and the at least one frequency domain resource set in the plurality of frequency domain resource sets with reference to Table 2.

**Table 2**

| Frequency domain resource set | TDD configuration |
|---|---|
| RB set 1 of a cell #1 of the IAB DU | Dedicated TDD configuration |
| RB set 2 of a cell #2 of the IAB DU | Cell-common TDD configuration |
| RB set 0 of the cell #1 of the IAB DU | Cell-common TDD configuration |
| RB set 3 of the cell #2 of the IAB DU | Dedicated TDD configuration |

In the correspondences shown in Table 2, when there is a multiplexing relationship between the IAB MT and a corresponding frequency domain resource set, the IAB MT may use a TDD configuration corresponding to the frequency domain resource set.

Specifically, the donor node may determine, based on a multiplexing relationship between the IAB DU and the IAB MT on an RB set of a cell, a TDD configuration that should be used by the RB set of the cell, to implement multiplexing transmission with the IAB MT. For example, if the IAB MT performs uplink transmission in a slot, and a frequency domain resource set of the IAB DU is used for spatial division multiplexing sending with the IAB MT, the frequency domain resource set should be configured as the dedicated TDD configuration. If there is another frequency domain resource set of the IAB DU used to perform full-duplex multiplexing sending with the IAB MT, the frequency domain resource set should correspond to the cell-common TDD configuration. If one frequency domain resource set of the IAB DU and the IAB MT may perform different multiplexing transmission (for example, spatial division multiplexing transmission and full-duplex multiplexing transmission) on different time domain resources, the frequency domain resource set of the IAB DU may be configured with a plurality of TDD configurations, and the plurality of TDD configurations correspond to different time domain resources.

Optionally, the first configuration information further includes a periodicity and an offset value of a TDD configuration that corresponds to the at least one frequency domain resource set and that is used by the IAB MT.

For example, the following describes, with reference to Table 1, a periodicity and an offset value of a TDD configuration corresponding to each frequency domain resource set used by the IAB MT.

**Table 3**

| Frequency domain resource set | TDD configuration | Periodicity and offset value |
|---|---|---|
| RB set 1 of a cell #1 of the IAB DU | Dedicated TDD configuration | The periodicity is 6 ms (milliseconds), and the offset value is three slots |
| RB set 2 of a cell #2 of the IAB DU | Cell-common TDD configuration | The periodicity is 5 ms (milliseconds), and the offset value is two slots |
| RB set 0 of the cell #1 of the IAB DU | Cell-common TDD configuration | The periodicity is 4 ms (milliseconds), and the offset value is one slot |
| RB set 3 of the cell #2 of the IAB DU | Dedicated TDD configuration | The periodicity is 4 ms (milliseconds), and the offset value is three slots |

It can be learned from Table 3 that a TDD configuration corresponding to each frequency domain resource set has a corresponding periodicity and a corresponding offset value, which are used by the IAB MT to determine a time domain resource for using the TDD configuration.

802: If there is a multiplexing relationship between the IAB MT and a first frequency domain resource set in the plurality of frequency domain resource sets, the IAB MT determines, based on the first configuration information, a TDD configuration corresponding to the first frequency domain resource set.

For example, the first frequency domain resource set is the RB set 1 of the cell #1 of the IAB DU, and the IAB MT determines that there is the multiplexing relationship between the IAB MT and the first frequency domain resource set. The IAB MT may determine, based on Table 1, that the RB set 1 of the cell #1 of the IAB DU corresponds to the dedicated TDD configuration.

It should be noted that, which multiplexing relationships are met between the IAB MT and the plurality of frequency domain resource sets may be preconfigured, configured by the donor node for the IAB MT, or indicated by an upper-level node of the IAB MT to the IAB MT. This is not specifically limited in this application. It should be noted that, optionally, one or more multiplexing relationships may be met between the IAB MT and one frequency domain resource set. This is not specifically limited in this application.

Optionally, whether a multiplexing relationship is met between the IAB MT and the frequency domain resource set and which multiplexing relationships are met between the IAB MT and the frequency domain resource set may be related to at least one of the following factors: a multiplexing capability of the IAB MT, a multiplexing capability of the IAB DU, a beam used by the IAB MT, a beam used by the IAB DU, transmit power of the IAB MT, transmit power of the IAB DU, or frequency domain isolation between a frequency domain resource used by the IAB MT and the plurality of frequency domain resource sets of the IAB DU.

803: The IAB MT uses the TDD configuration corresponding to the first frequency domain resource set.

It should be noted that, optionally, the IAB MT further needs to further determine a transmission mode of the IAB DU on the first frequency domain resource set, and determine whether the IAB MT performs transmission on the TDD configuration corresponding to the first frequency domain resource set. For example, the IAB MT and the first frequency domain resource set meet a spatial transmit multiplexing relationship. If the IAB DU performs downlink transmission on the first frequency domain resource set, the IAB MT sends an uplink signal to the upper-level node, so that the IAB MT and the first frequency domain resource set of the IAB DU implement spatial multiplexing transmission. If the IAB DU performs uplink reception on the first frequency domain resource set, the IAB MT does not perform sending or receiving, that is, time division multiplexing transmission is performed between the IAB MT and the IAB DU, but the IAB MT still uses the TDD configuration corresponding to the first frequency domain resource set.

Optionally, the first configuration information further includes a periodicity and an offset value of a TDD configuration that corresponds to the at least one frequency domain resource set and that is used by the IAB MT. In this implementation, optionally, the embodiment shown in FIG. 8 further includes step 803a and step 803b, and step 803a and step 803b may be performed before step 803.

803a: The IAB MT determines, based on second configuration information, a periodicity and an offset value of the TDD configuration that is used by the IAB MT and that corresponds to the first frequency domain resource set.

For example, as shown in FIG. 9, within a period of time (10 ms shown in FIG. 9), the periodicity of the TDD configuration that is used by the IAB MT and that corresponds to the first frequency domain resource set is 6 ms. The offset value is the 6^{th} slot in 10 ms shown in FIG. 9.

803b: The IAB MT determines, based on the periodicity and the offset value, the time domain resource for the IAB MT to use the TDD configuration corresponding to the first frequency domain resource set.

For example, the TDD configuration corresponding to the first frequency domain resource set is the dedicated TDD configuration. As shown in FIG. 9, the IAB MT determines a location of the time domain resource for using the dedicated TDD configuration within the 10 ms shown in FIG. 9.

Based on step 803a and step 803b, step 803 specifically includes: The IAB MT uses, on the time domain resource, the TDD configuration corresponding to the first frequency domain resource set.

For example, as shown in FIG. 9, the IAB MT uses the dedicated TDD configuration in slots in a dashed box, and uses the cell-common TDD configuration within rest time other than the slots in the dashed box.

If there are multiplexing relationships between the IAB MT and at least two frequency domain resource sets in the plurality of frequency domain resource sets of the IAB DU, optionally, the embodiment shown in FIG. 8 further includes step 801a and step 801b. Step 801a and step 801b may be performed before step 802.

801a: The upper-level node of the IAB MT sends first indication information to the IAB MT. Correspondingly, the IAB MT receives the first indication information from the upper-level node of the IAB MT.

The first indication information indicates any one of the following: the TDD configuration that corresponds to the first frequency domain resource set and that is preferentially used, a frequency domain resource set that is preferentially used for multiplexing transmission, or a multiplexing relationship that is preferentially used when a first condition is met.

The first condition includes: the IAB MT and the first frequency domain resource set of the IAB DU meet a spatial transmit multiplexing relationship and/or a spatial receive multiplexing relationship, and the IAB MT and a second frequency domain resource set of the IAB DU meet a first full-duplex multiplexing relationship and/or a second full-duplex multiplexing relationship.

For example, with reference to Table 3, the IAB MT is multiplexed with the RB set 1 of the cell #1 of the IAB DU, and the IAB MT is multiplexed with the RB set 2 of the cell #2 of the IAB DU. In addition, the IAB MT and the RB set 1 of the cell #1 of the IAB DU meet the spatial transmit multiplexing relationship. The IAB MT and the RB set 2 of the cell #2 of the IAB DU meet the spatial receive multiplexing relationship. The IAB MT selects the first frequency domain resource set.

For example, the first indication information indicates the first frequency domain resource set (for example, the RB set of the cell #1 of the IAB DU) that is preferentially used for multiplexing transmission. Therefore, the IAB MT selects the first frequency domain resource set.

For example, the first indication information indicates a spatial transmit multiplexing relationship that is preferentially used. The IAB MT and the RB set 1 of the cell #1 of the IAB DU meet the spatial transmit multiplexing relationship. The IAB MT and the RB set 2 of the cell #2 of the IAB DU meet the spatial receive multiplexing relationship. Therefore, the IAB MT selects the first frequency domain resource set.

801b: The IAB MT selects the first frequency domain resource set based on the first indication information.

For a related example of the selection by the IAB MT, refer to the related example of step 801a. Based on step 801b, in step 803, the IAB MT determines, by performing step 801b, the TDD configuration corresponding to the first frequency domain resource set.

It should be noted that, in the embodiment shown in FIG. 8, the IAB MT is used as an example to describe the technical solution of this application. During actual application, the IAB MT is an MT unit of a relay node. Therefore, in the embodiment shown in FIG. 8, the IAB MT may be replaced with the MT unit of the relay node.

In this embodiment of this application, the donor node sends the first configuration information to the IAB MT. The first configuration information indicates the correspondence between the TDD configuration and the at least one frequency domain resource set in the plurality of frequency domain resource sets of the IAB DU. If there is the multiplexing relationship between the IAB MT and the first frequency domain resource set in the plurality of frequency domain resource sets, the IAB MT determines, based on the first configuration information, the TDD configuration corresponding to the first frequency domain resource set. The IAB MT uses the TDD configuration corresponding to the first frequency domain resource set. It can be learned that the IAB MT may determine, based on the first configuration information, the TDD configuration corresponding to the first frequency domain resource set that has the multiplexing relationship with the IAB MT, so that the IAB MT determines a resource location.

FIG. 10 is a schematic diagram of another embodiment of a resource configuration method according to an embodiment of this application. Refer FIG. 10. The resource configuration method includes the following steps.

1001: An upper-level node of an IAB MT sends scheduling information to the IAB MT.

The scheduling information indicates the IAB MT to perform uplink transmission or downlink sending.

For example, the upper-level node of the IAB MT schedules, by using the scheduling information, the IAB MT to perform the uplink transmission.

1002: The IAB MT determines a first TDD configuration based on the scheduling information.

For example, when the upper-level node performs time division multiplexing transmission, the upper-level node (for example, a DU unit of the upper-level node) schedules, based on a cell-common TDD configuration, the IAB MT to perform transmission. In this case, the IAB MT determines that the first TDD configuration is the cell-common TDD configuration. When the upper-level node needs to perform spatial division reception, the upper-level node DU needs to indicate, based on the scheduling information, a lower-level node to perform transmission by using a dedicated TDD configuration of an MT. In this case, the IAB MT may determine that the first TDD configuration is the dedicated TDD configuration.

Optionally, the scheduling information may be explicitly indicated by using a MAC-CE or DCI, or may be implicitly indicated. For example, the upper-level node indicates a timing mode used by the IAB MT, a transmit power limit, an antenna port, a bandwidth part (bandwidth part, BWP), and the like.

In this embodiment of this application, the upper-level node of the IAB MT sends the scheduling information to the IAB MT. The scheduling information indicates the IAB MT to perform the uplink transmission or the downlink sending. The IAB MT determines the first TDD configuration based on the scheduling information. It can be learned that, in the technical solution, the IAB MT determines the first TDD configuration with reference to the scheduling information of the upper-level node. This facilitates the upper-level node to schedule the IAB MT.

Some terms in the following embodiments are described below.
1. TDD configuration in a first format: In a configuration periodicity, a downlink slot or a downlink time domain symbol is located at a beginning of the configuration periodicity, and a remaining slot or a remaining time domain symbol in which no transmission manner is specified and that is in the configuration periodicity is considered as a flexible slot or a flexible time domain symbol. Alternatively, a downlink slot or a downlink time domain symbol is located at an end of a configuration periodicity, and a remaining slot or a remaining time domain symbol in which no transmission direction is specified and that is in the configuration periodicity is considered as a flexible slot or a flexible time domain symbol. Alternatively, in a configuration periodicity, a downlink slot or a downlink time domain symbol is located at a beginning of the configuration periodicity, an uplink slot or an uplink time domain symbol is located at an end of the configuration periodicity, and a remaining slot or a remaining time domain symbol in which no transmission manner is specified and that is in the configuration periodicity is considered as a flexible slot or a flexible time domain symbol. For example, the TDD configuration in the first format may also be referred to as a DFU configuration for short. For details, refer to the descriptions of the related examples shown in FIG. 3A to FIG. 3C. When the IAB MT and a frequency domain resource set of the IAB DU performs full-duplex multiplexing transmission or time division multiplexing transmission, the TDD configuration in the first format may be used.
2. TDD configuration in a second format: In a configuration periodicity, an uplink slot or an uplink time domain symbol is located at a beginning of the configuration periodicity, and a remaining slot or a remaining time domain symbol in which no transmission direction is specified and that is in the configuration periodicity is considered as a flexible slot or a flexible time domain symbol. Alternatively, a downlink slot or a downlink time domain symbol is located at an end of a configuration periodicity, and a remaining slot or a remaining time domain symbol in which no transmission direction is specified and that is in the configuration periodicity is considered as a flexible slot or a flexible time domain symbol. Alternatively, an uplink slot or an uplink time domain symbol is located at a beginning of a configuration periodicity, a downlink slot or a downlink time domain symbol is located at an end of the configuration periodicity, and a remaining slot or a remaining time domain symbol in which no transmission manner is specified and that is in the configuration periodicity is considered as a flexible slot or a flexible time domain symbol. For example, the TDD configuration in the second format may also be referred to as a UFD configuration for short. For details, refer to the descriptions of the related examples shown in FIG. 3D to FIG. 3F. When the IAB MT and a frequency domain resource set of the IAB DU performs spatial division multiplexing transmission, the TDD configuration in the second format may be used.

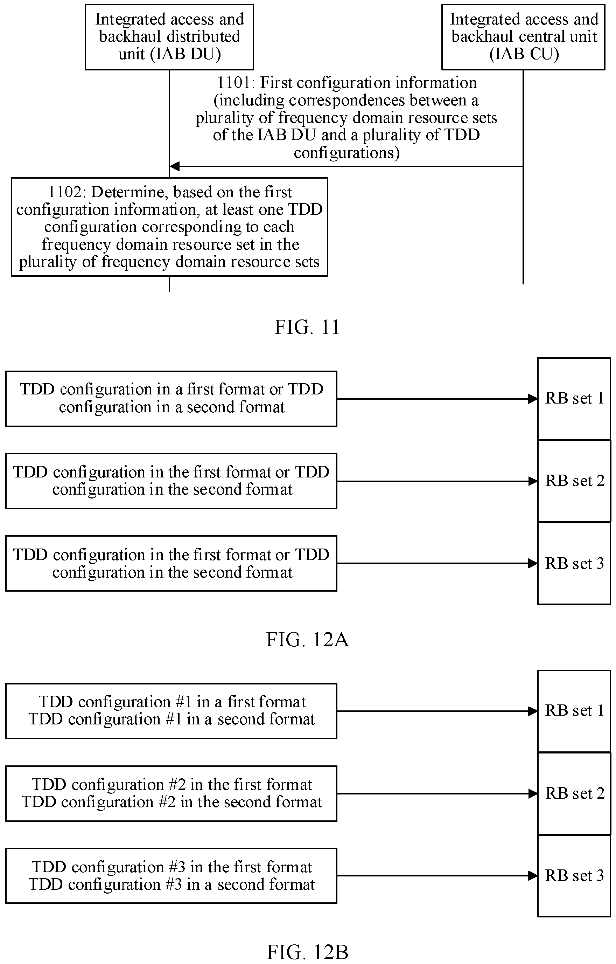

FIG. 11 is a schematic diagram of another embodiment of a resource configuration method according to an embodiment of this application. Refer FIG. 11. The resource configuration method includes the following steps.

1101: An IAB CU sends first configuration information to an IAB DU. The first configuration information includes correspondences between a plurality of frequency domain resource sets of the IAB DU and a plurality of TDD configurations. Correspondingly, the IAB DU receives the first configuration information from the IAB CU.

The plurality of frequency domain resource sets of the IAB DU are frequency domain resource sets of a cell of the IAB DU, or frequency domain resource sets of a plurality of cells of the IAB DU. This is not specifically limited in this application.

Each frequency domain resource set in the plurality of frequency domain resource sets of the IAB DU corresponds to at least one TDD configuration.

The following describes several possible implementations of the correspondences between the plurality of frequency domain resource sets of the IAB DU and the plurality of TDD configurations.

Implementation 1: Each frequency domain resource set in the plurality of frequency domain resource sets corresponds to one TDD configuration in a first format or one TDD configuration in a second format.

Optionally, if the plurality of frequency domain resource sets are frequency domain resource sets of a same cell, the plurality of frequency domain resource sets correspond to a same TDD configuration in the first format. TDD configurations that are in the second format and that correspond to different frequency domain resource sets may be the same or may be different. This is not specifically limited in this application.

For example, as shown in FIG. 12A, the plurality of frequency domain resource sets are the frequency domain resource sets of the same cell. The plurality of frequency domain resource sets of the IAB DU include an RB set 1, an RB set 2, and an RB set 3. Each RB set corresponds to one TDD configuration in the first format or one TDD configuration in the second format.

For example, the TDD configuration in the first format may be used by the IAB MT to perform time division multiplexing transmission or full-duplex multiplexing transmission with the frequency domain resource set of the IAB DU. The TDD configuration in the second format is used by the IAB MT to perform spatial multiplexing transmission with the frequency domain resource set of the IAB DU.

Implementation 2: Each frequency domain resource set in the plurality of frequency domain resource sets corresponds to one TDD configuration in a first format and one TDD configuration in a second format.

Optionally, if the plurality of frequency domain resource sets are frequency domain resource sets of a same cell, the plurality of frequency domain resource sets correspond to a same TDD configuration in the first format. TDD configurations that are in the second format and that correspond to different frequency domain resource sets may be the same or may be different. This is not specifically limited in this application.

For example, as shown in FIG. 12B, the plurality of frequency domain resource sets are frequency domain resource sets of different cells of the IAB DU. The plurality of frequency domain resource sets of the IAB DU include an RB set 1, an RB set 2, and an RB set 3. The RB set 1 corresponds to a TDD configuration #1 in the first format and a TDD configuration #1 in the second format. The RB set 2 corresponds to a TDD configuration #2 in the first format and a TDD configuration #2 in the second format. The RB set 3 corresponds to a TDD configuration #3 in the first format and a TDD configuration #3 in the second format.

For example, the TDD configuration in the first format may be used by the IAB MT to perform time division multiplexing transmission or full-duplex multiplexing transmission with the frequency domain resource set of the IAB DU. The TDD configuration in the second format is used by the IAB MT to perform spatial multiplexing transmission with the frequency domain resource set of the IAB DU.

Implementation 3: The plurality of frequency domain resource sets correspond to a same TDD configuration in a first format, and each frequency domain resource set in the plurality of frequency domain resource sets corresponds to one TDD configuration in a second format.

In Implementation 3, the plurality of frequency domain resource sets are frequency domain resource sets of a same cell of the IAB DU. TDD configurations that are in the second format and that correspond to different frequency domain resource sets may be the same or may be different. This is not specifically limited in this application.

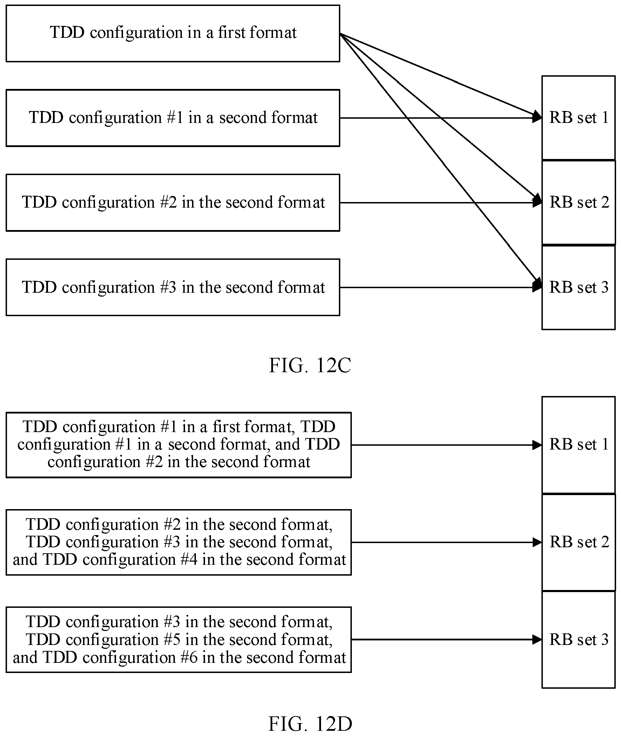

For example, as shown in FIG. 12C, the plurality of frequency domain resource sets are the frequency domain resource sets of the same cell of the IAB DU. The plurality of frequency domain resource sets of the IAB DU include an RB set 1, an RB set 2, and an RB set 3. The RB set 1, the RB set 2, and the RB set 3 all correspond to the TDD configuration in the first format. The RB set 1 further corresponds to a TDD configuration # 1 in the second format, the RB set 2 further corresponds to a TDD configuration # 2 in the second format, and the RB set 3 further corresponds to a TDD configuration # 3 in the second format.

Implementation 4: Each frequency domain resource set in the plurality of frequency domain resource sets corresponds to one TDD configuration in a first format, a first type of TDD configuration in a second format, and a second type of TDD configuration in the second format.

For example, the TDD configuration in the first format may be used for time division multiplexing transmission or full-duplex multiplexing transmission between the frequency domain resource set of the IAB DU and the IAB MT, the first type of TDD configuration in the second format is used for spatial multiplexing transmission between the frequency domain resource set of the IAB DU and the IAB MT, and the second type of TDD configuration in the second format is used for spatial division multiplexing transmission of a lower-level node of the IAB DU in cooperation with the frequency domain resource set of the IAB DU.

Optionally, if the plurality of frequency domain resource sets are frequency domain resource sets of a same cell, the plurality of frequency domain resource sets correspond to a same TDD configuration in the first format. TDD configurations that are in the second format and that correspond to different frequency domain resource sets may be the same or may be different. This is not specifically limited in this application.

The first type of TDD configuration in the second format is used for spatial multiplexing transmission between a corresponding frequency domain resource set and the integrated access and backhaul mobile terminal IAB MT. The second type of TDD configuration in the second format is used by the IAB MT to perform full-duplex multiplexing transmission with the corresponding frequency domain resource set.

For example, as shown in FIG. 12D, the plurality of frequency domain resource sets are frequency domain resource sets of different cells of the IAB DU. The plurality of frequency domain resource sets of the IAB DU include an RB set 1, an RB set 2, and an RB set 3. The RB set 1 corresponds to a TDD configuration #1 in the first format, a TDD configuration #1 in the second format, and a TDD configuration #2 in the second format. The TDD configuration #1 in second format is used by the IAB MT to perform spatial division multiplexing transmission with the RB set 1. The TDD configuration #2 in second format is used by the IAB MT to perform full-duplex multiplexing transmission with the RB set 1. The RB set 2 corresponds to a TDD configuration #2 in the first format, a TDD configuration #3 in the second format, and a TDD configuration #4 in the second format. The TDD configuration #3 in second format is used by the IAB MT to perform spatial division multiplexing transmission with the RB set 2. The TDD configuration #4 in second format is used by the IAB MT to perform full-duplex multiplexing transmission with the RB set 2. The RB set 3 corresponds to a TDD configuration #3 in the first format, a TDD configuration #5 in the second format, and a TDD configuration #6 in the second format. The TDD configuration #5 in second format is used by the IAB MT to perform spatial division multiplexing transmission with the RB set 3. The TDD configuration #6 in second format is used by the IAB MT to perform full-duplex multiplexing transmission with the RB set 3.

It should be noted that FIG. 12A to FIG. 12D are used to illustrate some possible implementations of the correspondences between the plurality of frequency domain resource sets of the IAB DU and the plurality of TDD configurations. During actual application, the correspondences may alternatively be represented in another form such as a table. This is not specifically limited in this application.

1102: The IAB DU determines, based on the first configuration information, at least one TDD configuration corresponding to each frequency domain resource set in the plurality of frequency domain resource sets.

After step 1102, the IAB DU may determine, based on a resource configuration, whether to perform multiplexing transmission with the IAB MT. For example, if one frequency domain resource set is configured to correspond to only one TDD configuration in the first format TDD, and the IAB MT and the frequency domain resource set of the IAB DU do not meet a full-duplex multiplexing relationship or each do not have a full-duplex multiplexing transmission capability, the IAB DU always performs time division multiplexing transmission with the IAB MT on the frequency domain resource set.

It should be noted that, in the embodiment shown in FIG. 11, the IAB DU and the IAB CU are used as an example to describe the technical solution of this application. Actually, the IAB DU is a DU unit of a first relay node, and the IAB CU is a CU unit of a second relay node. Therefore, in the embodiment shown in FIG. 11, the IAB DU may be replaced with the DU unit of the first relay node, and the IAB CU may be replaced with the CU unit of the second relay node.

In this embodiment of this application, the IAB DU receives the first configuration information from the IAB CU. The first configuration information includes the correspondences between the plurality of frequency domain resource sets of the IAB DU and the plurality of TDD configurations. The IAB DU determines, based on the first configuration information, the at least one TDD configuration corresponding to each frequency domain resource set in the plurality of frequency domain resource sets. It can be learned that, in the technical solution, to implement a TDD configuration at a subband level, a configuration granularity is small. In the technical solution, the IAB CU configures at least one TDD configuration for each frequency domain resource set of the IAB DU. Based on a premise that the IAB MT and the frequency domain resource set of the IAB DU meet a multiplexing working condition, the IAB DU may perform multiplexing transmission with the IAB MT on the frequency domain resource set.

Some terms in the following embodiments are described below.
1. Intended (intended) TDD configuration: This is used by an IAB node to perform cross-link interference management and power coordination.
2. Intended TDD configuration in a first format: In a configuration periodicity, a downlink slot or a downlink time domain symbol is located at a beginning of the configuration periodicity, and a remaining slot or a remaining time domain symbol in which no transmission manner is specified and that is in the configuration periodicity is considered as a flexible slot or a flexible time domain symbol. Alternatively, a downlink slot or a downlink time domain symbol is located at an end of a configuration periodicity, and a remaining slot or a remaining time domain symbol in which no transmission direction is specified and that is in the configuration periodicity is considered as a flexible slot or a flexible time domain symbol. Alternatively, in a configuration periodicity, a downlink slot or a downlink time domain symbol is located at a beginning of the configuration periodicity, an uplink slot or an uplink time domain symbol is located at an end of the configuration periodicity, and a remaining slot or a remaining time domain symbol in which no transmission manner is specified and that is in the configuration periodicity is considered as a flexible slot or a flexible time domain symbol. For example, the intended TDD configuration in the first format may also be referred to as a DFU configuration for short.
3. Intended TDD configuration in a second format: In a configuration periodicity, an uplink slot or an uplink time domain symbol is located at a beginning of the configuration periodicity, and a remaining slot or a remaining time domain symbol in which no transmission direction is specified and that is in the configuration periodicity is considered as a flexible slot or a flexible time domain symbol. Alternatively, a downlink slot or a downlink time domain symbol is located at an end of a configuration periodicity, and a remaining slot or a remaining time domain symbol in which no transmission direction is specified and that is in the configuration periodicity is considered as a flexible slot or a flexible time domain symbol. Alternatively, an uplink slot or an uplink time domain symbol is located at a beginning of a configuration periodicity, a downlink slot or a downlink time domain symbol is located at an end of the configuration periodicity, and a remaining slot or a remaining time domain symbol in which no transmission manner is specified and that is in the configuration periodicity is considered as a flexible slot or a flexible time domain symbol. For example, the intended TDD configuration in the second format may also be referred to as a UFD configuration for short.

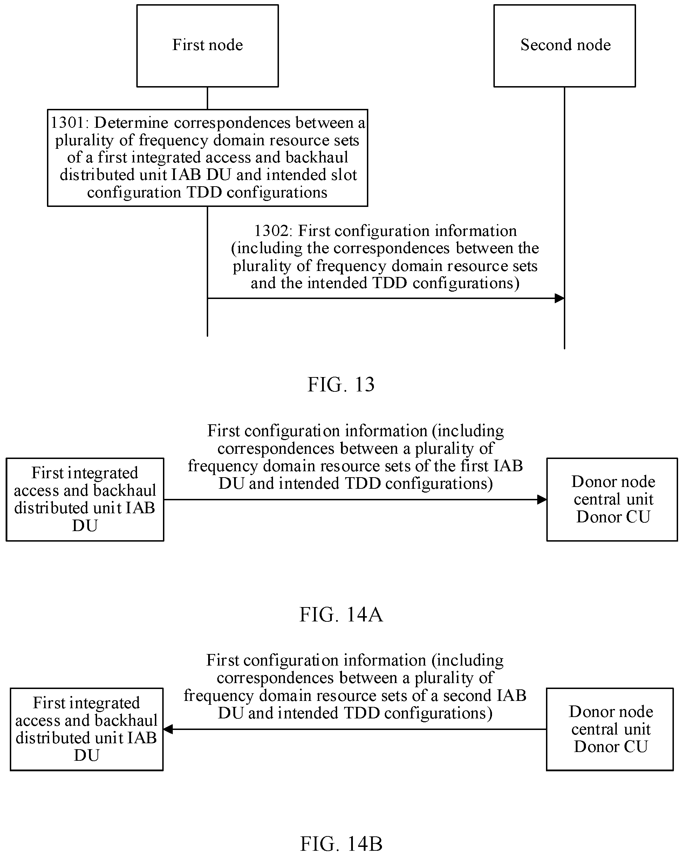

FIG. 13 is a schematic diagram of another embodiment of a resource configuration method according to an embodiment of this application. Refer FIG. 13. The resource configuration method includes the following steps.

1301: A first node determines correspondences between a plurality of frequency domain resource sets of a first IAB DU and intended TDD configurations.

Each frequency domain resource set in the plurality of frequency domain resource sets corresponds to at least one intended TDD configuration, and the at least one intended TDD configuration includes an intended TDD configuration in a second format. For the intended TDD configuration and the intended TDD configuration in the second format, refer to the foregoing related descriptions.

Optionally, the plurality of frequency domain resource sets of the first IAB DU are frequency domain resource sets of one or more cells of the first IAB DU.

In a possible implementation, the first node is the first IAB DU, and a second node is a donor node central unit Donor CU. For example, as shown in FIG. 14A, the first IAB DU sends first configuration information to the donor CU. The first configuration information includes the correspondences between the plurality of frequency domain resource sets of the first IAB DU and the intended TDD configurations.

It should be noted that an example in which the first node is the first IAB DU and the second node is the Donor CU is used above for description. Actually, the first IAB DU is a DU unit of a first relay node, and the donor CU is a DU unit of a donor. The first IAB DU may be replaced with the DU unit of the first relay node, and the donor CU may be replaced with the DU unit of the donor.

In another possible implementation, the first node is a donor CU, the second node is a second IAB DU, and the second IAB DU is an IAB DU in a neighboring cell of a cell of the first IAB DU. For example, as shown in FIG. 14B, the donor CU sends first configuration information to the second IAB DU. The first configuration information includes the correspondences between the plurality of frequency domain resource sets of the first IAB DU and the intended TDD configurations.

It should be noted that an example in which the first node is the donor CU and the second node is the second IAB DU is used above for description. Actually, the donor CU is a DU unit of a donor, and the second IAB DU is a DU unit of a second relay node. Therefore, the donor CU may be replaced with the CU unit of the donor, and the second IAB DU may be replaced with the DU unit of the second relay node.

Optionally, if the plurality of frequency domain resource sets of the first IAB DU are frequency domain resource sets of a cell of the first IAB DU, the second IAB DU is an IAB DU of a neighboring cell of the cell. Optionally, if the plurality of frequency domain resource sets of the first IAB DU are frequency domain resource sets of a plurality of cells of the first IAB DU, the second IAB DU is an IAB DU of a neighboring cell of the plurality of cells.

The following describes two possible implementations of the correspondences between the plurality of frequency domain resource sets of the first IAB DU and the intended TDD configurations.

Implementation 1: Each frequency domain resource set in the plurality of frequency domain resource sets corresponds to one intended TDD configuration in a first format and one intended TDD configuration in a second format. In other words, each frequency domain resource set corresponds to two intended TDD configurations. It should be noted that intended TDD configurations that are in the second format and that correspond to different frequency domain resource sets may be the same or different. If the plurality of frequency domain resource sets are frequency domain resource sets of a cell of the first IAB DU, intended TDD configurations that are in the first format and that correspond to the plurality of frequency domain resource sets may be the same.

Implementation 2: The plurality of frequency domain resource sets correspond to a same intended TDD configuration in a first format, and each frequency domain resource set in the plurality of frequency domain resource sets corresponds to one intended TDD configuration in a second format.

Implementation 2 may be understood as that the intended TDD configuration in the first format is configured at a cell level, that is, the plurality of frequency domain resource sets are frequency domain resource sets of a cell of the first IAB DU. The plurality of frequency domain resource sets correspond to the same intended TDD configuration in the first format. The intended TDD configuration in the second format is configured at a frequency domain resource set level, and each frequency domain resource set corresponds to one intended TDD configuration in the second format. Intended TDD configurations that are in the second format and that correspond to different frequency domain resource sets may be the same or different.

Optionally, the at least one intended TDD configuration corresponding to each frequency domain resource set further includes a slot index. The slot index indicates that the frequency domain resource set corresponding to the at least one intended TDD configuration uses the at least one intended TDD configuration in a slot corresponding to the slot index.

In some implementations, the at least one intended TDD configuration further includes a resource type configuration. The resource type configuration indicates a resource type of the frequency domain resource set corresponding to the at least one intended TDD configuration. For example, the resource type configuration indicates a hard (hard) resource, a soft (soft) resource, and a not available (not available, NA) resource in an RB set 1. The hard resource indicates a resource that is always available to the IAB DU. The soft resource indicates whether the resource is available to the IAB DU depends on an indication of an upper-level node. The not available resource indicates a resource that is always not available to the IAB DU.

In some implementations, the at least one intended TDD configuration further includes a power offset value. The power offset value indicates transmit power of the first IAB DU on the frequency domain resource set corresponding to the at least one intended TDD configuration.

For example, the power offset value is X dB (decibels) between downlink transmit power of the first IAB DU on the frequency domain resource set corresponding to the at least one intended TDD configuration and transmit power of the first IAB DU when the first IAB DU performs time division multiplexing transmission, where X is greater than 0.

Optionally, the power offset value indicates downlink transmit power of the first IAB DU for transmission by using the at least one intended TDD configuration in the slot corresponding to the slot index.

1302: The first node sends the first configuration information to the second node. The first configuration information includes the correspondences between the plurality of frequency domain resource sets and the intended TDD configurations. Correspondingly, the second node receives the first configuration information from the first node.

For example, the first node is a donor node, the second node is a second IAB DU, and the donor node sends the first configuration information to the second IAB DU. The second IAB DU determines, based on the first configuration information, a possible transmission direction of the first IAB DU on a specific resource, and performs interference avoidance by scheduling UE served by the second IAB DU. For example, if the first IAB DU sends a downlink signal in a slot, the second IAB DU may schedule the UE to send an uplink signal, so as to prevent the downlink signal of the first IAB DU from interfering with the uplink signal sent by the UE scheduled by the second IAB DU.

In this embodiment of this application, the first node determines the correspondences between the plurality of frequency domain resource sets of the first IAB DU and the intended TDD configurations. Each frequency domain resource set in the plurality of frequency domain resource sets corresponds to the at least one intended TDD configuration, and the at least one intended TDD configuration includes the intended TDD configuration in the second format. The first node sends the first configuration information to the second node. The first configuration information includes the correspondences between the plurality of frequency domain resource sets and the intended TDD configurations. It can be learned that the first node sends the first configuration information to the second node. The first configuration information includes the correspondences between the plurality of frequency domain resource sets and the intended TDD configurations. Each frequency domain resource set corresponds to the at least one intended TDD configuration. A configuration granularity of the intended TDD configuration is a frequency domain resource set level, and each frequency domain resource set corresponds to one intended TDD configuration in the second format. This better helps a neighboring node in an IAB system perform interference avoidance and management. The neighboring node may perform interference avoidance by using a frequency domain resource corresponding to a frequency domain resource set as a granularity, that is, may continue transmission on a frequency domain resource without interference, to obtain higher frequency domain resource utilization.

At the access network (radio access network, RAN) 1#105-e, it is agreed that Rel-16 cross link interference (cross link interference, CLI) coordinates signaling extension (namely, intended TDD configurations), to support a specific UFD configuration of an IAB node. Based on a resource type of an IAB DU, a neighboring node or a neighboring cell may better perform interference coordination and obtain higher resource utilization. For example, a cell may perform scheduling on an NA resource in an intended TDD configuration indicated by a neighboring cell. Similarly, on a soft resource, interference needs to be considered when the neighboring cell performs scheduling.

Then, the information may be insufficient for the neighboring cell or the neighboring node to manage interference associated with introduction of frequency division multiplexing. Specifically, for a cell of an IAB DU for frequency division multiplexing transmission, in a slot, transmission or reception is performed on some RB sets based on the soft resource, and transmission or reception is not performed on some RB sets.

A UFD configuration may be used for frequency division multiplexing transmission or spatial division multiplexing transmission, and may be specifically a UFD configuration configured for an RB set of a cell of the IAB DU. Information about an intended TDD configuration corresponding to the RB set is provided to help the neighboring cell consider an interference problem. The neighboring cell may perform interference coordination management on a frequency domain resource. In the embodiment shown in FIG. 13, the first node sends the first configuration information to the second node. The first configuration information includes the correspondences between the plurality of frequency domain resource sets of the first IAB DU and the intended TDD configurations. It can be learned that the first node sends the first configuration information to the second node. The first configuration information includes the correspondences between the plurality of frequency domain resource sets and the intended TDD configurations. Each frequency domain resource set corresponds to the at least one intended TDD configuration. A configuration granularity of the intended TDD configuration is a frequency domain resource set level, and each frequency domain resource set corresponds to one intended TDD configuration in the second format. This better helps a neighboring node in an IAB system perform interference avoidance and management. The neighboring node may perform interference avoidance by using a frequency domain resource corresponding to a frequency domain resource set as a granularity, that is, may continue transmission on a frequency domain resource without interference, to obtain higher frequency domain resource utilization.

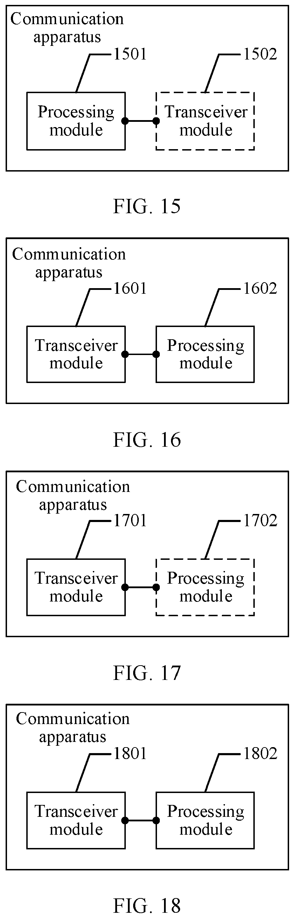

The communication apparatus provided in embodiments of this application is described below. FIG. 15 is a schematic diagram of a structure of a communication apparatus according to an embodiment of this application. The communication apparatus may be configured to perform steps performed by the IAB MT in the embodiments shown in FIG. 4, FIG. 5, FIG. 6, and FIG. 7. For details, refer to the related descriptions in the foregoing method embodiments.

The communication apparatus includes a processing module 1501. Optionally, the communication apparatus further includes a transceiver module 1502.

The processing module 1501 is configured to: determine a first TDD configuration based on a first transmission mode, where the first transmission mode includes a transmission mode on at least one frequency domain resource set in a plurality of frequency domain resource sets of an IAB DU, and the first TDD configuration is a cell-common TDD configuration or a dedicated TDD configuration; and determine a resource location based on the first TDD configuration.

In a possible implementation, the processing module 1501 is specifically configured to:
if the IAB DU performs downlink transmission on the at least one frequency domain resource set, and the communication apparatus and the at least one frequency domain resource set meet a spatial transmit multiplexing relationship, determine that the first TDD configuration is the dedicated TDD configuration;
if the IAB DU performs uplink reception on the at least one frequency domain resource set, and the communication apparatus and the at least one frequency domain resource set meet a spatial receive multiplexing relationship, determine that the first TDD configuration is the dedicated TDD configuration;
if the IAB DU performs downlink transmission on the at least one frequency domain resource set, and the communication apparatus and the at least one frequency domain resource set meet a first full-duplex multiplexing relationship, determine that the first TDD configuration is the cell-common TDD configuration;
if the IAB DU performs uplink reception on the at least one frequency domain resource set, and the communication apparatus and the at least one frequency domain resource set meet a second full-duplex multiplexing relationship, determine that the first TDD configuration is the cell-common TDD configuration;
if the IAB DU performs uplink reception on a first frequency domain resource set and performs downlink transmission on a second frequency domain resource set, the IAB MT and the first frequency domain resource meet a second full-duplex multiplexing relationship, and the communication apparatus and the second frequency domain resource meet a spatial transmit multiplexing relationship, determine that the first TDD configuration is the dedicated TDD configuration, and the plurality of frequency domain resource sets include the first frequency domain resource set and the second frequency domain resource set;
if the IAB DU performs uplink reception on a first frequency domain resource set and performs uplink reception on a second frequency domain resource set, the communication apparatus and the first frequency domain resource set meet a second full-duplex multiplexing relationship, and the communication apparatus and the second frequency domain resource set meet a spatial receive multiplexing relationship, determine that the first TDD configuration is the dedicated TDD configuration;
if the IAB DU performs downlink transmission on a first frequency domain resource set and performs downlink transmission on a second frequency domain resource set, the communication apparatus and the first frequency domain resource set meet a first full-duplex multiplexing relationship, and the communication apparatus and the second frequency domain resource set meet a spatial transmit multiplexing relationship, determine that the first TDD configuration is the dedicated TDD configuration;
if the IAB DU performs downlink transmission on a first frequency domain resource set and performs uplink reception on a second frequency domain resource set, the communication apparatus and the first frequency domain resource set meet a first full-duplex multiplexing relationship, and the communication apparatus and the second frequency domain resource set meet a spatial receive multiplexing relationship, determine that the first TDD configuration is the dedicated TDD configuration; or
if the IAB DU has no transmission on the plurality of frequency domain resource sets, determine that the first TDD configuration is the cell-common TDD configuration.

In another possible implementation, the transceiver module 1502 is configured to receive first indication information from an upper-level node of the communication apparatus. The first indication information indicates any one of the following: a TDD configuration that is preferentially used, a fifth frequency domain resource set that is preferentially used for multiplexing transmission, or a first multiplexing relationship that is preferentially used when a first condition is met.

The first condition includes: the communication apparatus and a third frequency domain resource set of the IAB DU meet a spatial transmit multiplexing relationship and/or a spatial receive multiplexing relationship, and the communication apparatus and a fourth frequency domain resource set of the IAB DU meet a first full-duplex multiplexing relationship or a second full-duplex multiplexing relationship. The third frequency domain resource set and the fourth frequency domain resource set are two frequency domain resource sets in the plurality of frequency domain resource sets.

The processing module 1501 is specifically configured to:
determine the first TDD configuration based on the first transmission mode and the first indication information.

In another possible implementation, the first indication information indicates that the dedicated TDD configuration is preferentially used when the first condition is met. The processing module 1501 is specifically configured to:
if the communication apparatus and the third frequency domain resource set of the IAB DU meet the spatial transmit multiplexing relationship, and the IAB DU performs downlink transmission on the third frequency domain resource set, determine that the first TDD configuration is the dedicated TDD configuration;
if the communication apparatus and the third frequency domain resource set of the IAB DU meet the spatial transmit multiplexing relationship, and the IAB DU performs uplink reception on the third frequency domain resource set, determine that the first TDD configuration is the cell-common TDD configuration;
if the communication apparatus and the third frequency domain resource set of the IAB DU meet the spatial transmit multiplexing relationship, and the IAB DU performs uplink reception on the third frequency domain resource set, determine that the first TDD configuration is the cell-common TDD configuration;
if the communication apparatus and the third frequency domain resource set of the IAB DU meet the spatial receive multiplexing relationship, and the IAB DU performs uplink reception on the third frequency domain resource set, determine that the first TDD configuration is the dedicated TDD configuration;
if the communication apparatus and the third frequency domain resource set of the IAB DU meet the spatial receive multiplexing relationship, and the IAB DU performs uplink transmission on the third frequency domain resource set, determine that the first TDD configuration is the cell-common TDD configuration; or
if the communication apparatus and the third frequency domain resource set of the IAB DU meet the spatial receive multiplexing relationship and the spatial transmit multiplexing relationship, and the IAB DU performs uplink reception or downlink transmission on the third frequency domain resource set, determine that the first TDD configuration is the dedicated TDD configuration.

In another possible implementation, the first indication information indicates the fifth frequency domain resource set that is preferentially used for multiplexing transmission, and the processing module 1501 is specifically configured to:
determine a transmission direction in which the IAB DU performs transmission on the fifth frequency domain resource set; and
determine the first TDD configuration based on the transmission direction and a multiplexing relationship that is met between the communication apparatus and the fifth frequency domain resource set.

In another possible implementation, the first indication information indicates the first multiplexing relationship that is preferentially used, and the processing module 1501 is specifically configured to:
determine, in the plurality of frequency domain resource sets, a sixth frequency domain resource set that meets the first multiplexing relationship with the IAB MT; and
determine the first TDD configuration based on a transmission mode on the sixth frequency domain resource set and the first multiplexing relationship.

In another possible implementation, the transceiver module 1502 is further configured to:
receive first configuration information from a donor node, where the first configuration information includes correspondences between a plurality of multiplexing configurations and indication bits, and the plurality of multiplexing configurations are multiplexing configurations between the communication apparatus and the plurality of frequency domain resource sets; and
receive second indication information from an upper-level node of the IAB MT, where the second indication information includes a first indication bit.

The processing module 1501 is further configured to:
determine, based on the correspondences between the plurality of multiplexing configurations and the indication bits, a multiplexing configuration corresponding to the first indication bit. The multiplexing configuration corresponding to the first indication bit includes: there is a multiplexing relationship between the IAB MT and a seventh frequency domain resource set in the plurality of frequency domain resource sets.

The processing module 1501 is specifically configured to:
determine the first TDD configuration based on a transmission mode on the seventh frequency domain resource set and the multiplexing relationship that is met between the communication apparatus and the seventh frequency domain resource set.

In another possible implementation, the transceiver module 1502 is further configured to:
receive a MAC CE from an upper-level node of the communication apparatus, where the MAC CE includes correspondences between a plurality of multiplexing configurations and indication bits, and the plurality of multiplexing configurations are multiplexing configurations between the communication apparatus and the plurality of frequency domain resource sets; and
receive second indication information from the upper-level node, where the second indication information includes a first indication bit.

The processing module 1501 is further configured to:
determine, based on the correspondences between the plurality of multiplexing configurations and the indication bits, a multiplexing configuration corresponding to the first indication bit. The multiplexing configuration corresponding to the first indication bit includes: there is a multiplexing relationship between the communication apparatus and a seventh frequency domain resource set in the plurality of frequency domain resource sets.

The processing module 1501 is specifically configured to:
determine the first TDD configuration based on a transmission mode on the seventh frequency domain resource set and the multiplexing relationship that is met between the communication apparatus and the seventh frequency domain resource set.

In another possible implementation, the processing module 1501 is further configured to:
determine whether there is a multiplexing relationship between the communication apparatus and the plurality of frequency domain resource sets; and
if there is the multiplexing relationship between the communication apparatus and the plurality of frequency domain resource sets, perform the step of determining a first TDD configuration based on a first transmission mode; or
if there is no multiplexing relationship between the communication apparatus and the plurality of frequency domain resource sets, determine that the first TDD configuration is the cell-common TDD configuration.

In this embodiment of this application, the processing module 1501 is configured to: determine the first TDD configuration based on the first transmission mode, where the first transmission mode includes the transmission mode on the at least one frequency domain resource set in the plurality of frequency domain resource sets of the IAB DU, and the first TDD configuration is the cell-common TDD configuration or the dedicated TDD configuration; and determine the resource location based on the first TDD configuration. It can be learned that the processing module 1501 may select the corresponding TDD configuration with reference to the transmission mode on the at least one frequency domain resource set, to determine the resource location. This prevents the processing module 1501 from missing receiving a downlink signal or incorrectly sending an uplink signal due to an incorrect TDD configuration used by the processing module 1501, to improve communication transmission performance.

The communication apparatus provided in embodiments of this application is described below. FIG. 16 is a schematic diagram of a structure of a communication apparatus according to an embodiment of this application. The communication apparatus may be configured to perform steps performed by the IAB MT in the embodiments shown in FIG. 8 and FIG. 10. For details, refer to the related descriptions in the foregoing method embodiments.

The communication apparatus includes a transceiver module 1601 and a processing module 1602.

The transceiver module 1601 is configured to receive first configuration information from a donor node. The first configuration information indicates a correspondence between a TDD configuration and at least one frequency domain resource set in a plurality of frequency domain resource set of an IAB DU.

The processing module 1602 is configured to: if there is a multiplexing relationship between the communication apparatus and a first frequency domain resource set in the plurality of frequency domain resource sets, determine, based on the first configuration information, a TDD configuration corresponding to the first frequency domain resource set; and use the TDD configuration corresponding to the first frequency domain resource set.

In a possible implementation, the first configuration information includes a periodicity and an offset value of a TDD configuration that corresponds to the at least one frequency domain resource set and that is used by the communication apparatus, and the processing module 1602 is further configured to:
determine, based on second configuration information, a periodicity and an offset value of the TDD configuration that corresponds to the first frequency domain resource set and that is used by the communication apparatus; and determine, based on the periodicity and the offset value, a time domain resource of the used TDD configuration corresponding to the first frequency domain resource set.

The processing module 1602 is specifically configured to:
use the TDD configuration corresponding to the first frequency domain resource set on the time domain resource.

In another possible implementation, if there is a multiplexing relationship between the communication apparatus and each of the first frequency domain resource set and a second frequency domain resource set, and the TDD configuration corresponding to the first frequency domain resource set is different from a TDD configuration corresponding to the second frequency domain resource set, the transceiver module 1601 is further configured to:
receive first indication information from an upper-level node of the communication apparatus. The first indication information indicates any one of the following: the TDD configuration that corresponds to the first frequency domain resource set and that is preferentially used, a frequency domain resource set that is preferentially used for multiplexing transmission, or a multiplexing relationship that is preferentially used when a first condition is met. The first condition includes: the communication apparatus and the first frequency domain resource set of the IAB DU meet a spatial transmit multiplexing relationship or a spatial receive multiplexing relationship, and the communication apparatus and the second frequency domain resource set of the IAB DU meet a first full-duplex multiplexing relationship or a second full-duplex multiplexing relationship.

The processing module 1602 is further configured to:
determine the first frequency domain resource set based on the first indication information.

In this embodiment of this application, the transceiver module 1601 is configured to receive the first configuration information from the donor node. The first configuration information indicates the correspondence between the TDD configuration and the at least one frequency domain resource set in the plurality of frequency domain resource sets of the IAB DU. The processing module 1602 is configured to: if there is the multiplexing relationship between the communication apparatus and the first frequency domain resource set in the plurality of frequency domain resource sets, determine, based on the first configuration information, the TDD configuration corresponding to the first frequency domain resource set; and use the TDD configuration corresponding to the first frequency domain resource set. It can be learned that the processing module 1602 may determine, based on the first configuration information, the TDD configuration corresponding to the first frequency domain resource set that has the multiplexing relationship with the communication apparatus, so that the communication apparatus determines a resource location.

The communication apparatus provided in embodiments of this application is described below. FIG. 17 is a schematic diagram of a structure of a communication apparatus according to an embodiment of this application. The communication apparatus may be configured to perform a step performed by the upper-level node of the IAB MT in the embodiment shown in FIG. 5. For details, refer to the related descriptions in the foregoing method embodiment.

The communication apparatus includes a transceiver module 1701. Optionally, the communication apparatus further includes a processing module 1702.

The transceiver module 1701 is configured to send first indication information to an IAB MT. The first indication information indicates any one of the following: a TDD configuration that is preferentially used, a fifth frequency domain resource set that is preferentially used for multiplexing transmission, or a first multiplexing relationship that is preferentially used when a first condition is met.

The first condition includes: the IAB MT and a third frequency domain resource of an IAB DU meet a spatial transmit multiplexing relationship and/or a spatial receive multiplexing relationship, and the IAB MT and a fourth frequency domain resource set of the IAB DU meet a first full-duplex multiplexing relationship and/or a second full-duplex multiplexing relationship. The third frequency domain resource set and the fourth frequency domain resource set are two frequency domain resource sets in a plurality of frequency domain resource sets of the IAB DU.

Optionally, the communication apparatus shown in FIG. 17 may be further configured to perform steps performed by the upper-level node of the IAB MT in the embodiments shown in FIG. 6 and FIG. 7. For details, refer to the related descriptions in the foregoing method embodiments.

The transceiver module 1701 is configured to send second indication information to an IAB MT. The second indication information includes a first indication bit, and a multiplexing configuration corresponding to the first indication bit includes: there is a multiplexing relationship between the IAB MT and a seventh frequency domain resource set in a plurality of frequency domain resource sets of an IAB DU.

In a possible implementation, the transceiver module 1701 is further configured to:
send a MAC CE to the IAB MT. The MAC CE includes correspondences between a plurality of multiplexing configurations and indication bits, and the plurality of multiplexing configurations are multiplexing configurations between the IAB MT and the plurality of frequency domain resource sets.

Optionally, the communication apparatus shown in FIG. 17 may be further configured to perform a step performed by the donor node in the embodiment shown in FIG. 6. For details, refer to the related descriptions in the foregoing method embodiment.

The transceiver module 1701 is configured to send first configuration information to an IAB MT. The first configuration information includes correspondences between a plurality of multiplexing configurations and indication bits, and the plurality of multiplexing configurations are multiplexing configurations between the IAB MT and a plurality of frequency domain resource sets of an IAB DU.

Optionally, the communication apparatus shown in FIG. 17 may be further configured to perform a step performed by the donor node in the embodiment shown in FIG. 8. For details, refer to the related descriptions in the foregoing method embodiment.

The transceiver module 1701 is configured to send first configuration information to an IAB MT. The first configuration information indicates a correspondence between a TDD configuration and at least one frequency domain resource set in a plurality of frequency domain resource sets of an IAB DU.

In a possible implementation, the first configuration information includes a periodicity and an offset value of a TDD configuration that corresponds to the at least one frequency domain resource set and that is used by the IAB MT.

Optionally, the communication apparatus shown in FIG. 17 may be further configured to perform a step performed by the upper-level node of the IAB MT in the embodiment shown in FIG. 8. For details, refer to the related descriptions in the foregoing method embodiment.

The transceiver module 1701 is configured to send first indication information to an IAB MT. The first indication information indicates any one of the following: a TDD configuration that corresponds to a first frequency domain resource set and that is preferentially used, a frequency domain resource set that is preferentially used for multiplexing transmission, or a multiplexing relationship that is preferentially used when a first condition is met.

The first condition includes: the IAB MT and the first frequency domain resource set of an IAB DU meet a spatial transmit multiplexing relationship and/or a spatial receive multiplexing relationship, and the IAB MT and a second frequency domain resource set of the IAB DU meet a first full-duplex multiplexing relationship and/or a second full-duplex multiplexing relationship.

The communication apparatus provided in embodiments of this application is described below. FIG. 18 is a schematic diagram of a structure of a communication apparatus according to an embodiment of this application. The communication apparatus may be configured to perform a step performed by the IAB DU in the embodiments shown in FIG. 11. For details, refer to the related descriptions in the foregoing method embodiment.

The communication apparatus includes a transceiver module 1801 and a processing module 1802.

The transceiver module 1801 is configured to receive first configuration information from an IAB CU. The first configuration information includes correspondences between a plurality of frequency domain resource sets of the communication apparatus and TDD configurations.

The processing module 1802 is configured to determine, based on the first configuration information, at least one TDD configuration corresponding to each frequency domain resource set in the plurality of frequency domain resource sets.

In a possible implementation, each frequency domain resource set in the plurality of frequency domain resource sets corresponds to one TDD configuration in a first format or one TDD configuration in a second format;
each frequency domain resource set in the plurality of frequency domain resource sets corresponds to one TDD configuration in a first format and one TDD configuration in the second format;
the plurality of frequency domain resource sets correspond to a same TDD configuration in a first format, and each frequency domain resource set in the plurality of frequency domain resource sets corresponds to one TDD configuration in the second format; or
each frequency domain resource set in the plurality of frequency domain resource sets corresponds to one TDD configuration in a first format, a first type of TDD configuration in a second format, and a second type of TDD configuration in a second format, the first type of TDD configuration in the second format is used for spatial multiplexing transmission between each frequency domain resource set and an IAB MT, and the second type of TDD configuration in the second format is used for full-duplex multiplexing transmission between each frequency domain resource set and the IAB MT.

In this embodiment of this application, the transceiver module 1801 is configured to receive first configuration information from the IAB CU. The first configuration information includes the correspondences between the plurality of frequency domain resource sets of the communication apparatus and the TDD configurations. The processing module 1802 is configured to determine, based on the first configuration information, the at least one TDD configuration corresponding to each frequency domain resource set in the plurality of frequency domain resource sets. It can be learned that, in the technical solution, to implement a TDD configuration at a subband level, a configuration granularity is small. In the technical solution, the IAB CU configures at least one TDD configuration for each frequency domain resource set of the communication apparatus. Based on a premise that the IAB MT and the frequency domain resource set of the communication apparatus meet a multiplexing working condition, the communication apparatus may perform multiplexing transmission with the IAB MT on the frequency domain resource set.

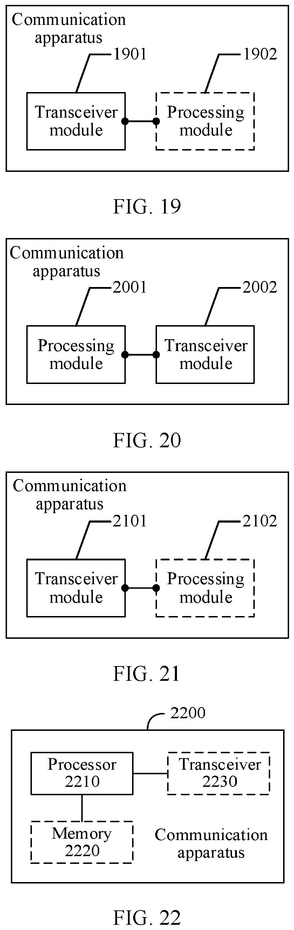

The communication apparatus provided in embodiments of this application is described below. FIG. 19 is a schematic diagram of a structure of a communication apparatus according to an embodiment of this application. The communication apparatus may be configured to perform a step performed by the IAB CU in the embodiment shown in FIG. 11. For details, refer to the related descriptions in the foregoing method embodiment.

The communication apparatus includes a transceiver module 1901. Optionally, the communication apparatus further includes a processing module 1902.

The transceiver module 1901 is configured to send first configuration information to an IAB DU. The first configuration information includes correspondences between a plurality of frequency domain resource sets of the IAB DU and TDD configurations, and each frequency domain resource set in the plurality of frequency domain resource sets corresponds to at least one TDD configuration.

In a possible implementation, each frequency domain resource set in the plurality of frequency domain resource sets corresponds to one TDD configuration in a first format or one TDD configuration in a second format;
each frequency domain resource set in the plurality of frequency domain resource sets corresponds to one TDD configuration in a first format and one TDD configuration in the second format;
the plurality of frequency domain resource sets correspond to a same TDD configuration in a first format, and each frequency domain resource set in the plurality of frequency domain resource sets corresponds to one TDD configuration in the second format; or
each frequency domain resource set in the plurality of frequency domain resource sets corresponds to one TDD configuration in a first format, a first type of TDD configuration in a second format, and a second type of TDD configuration in a second format, the first type of TDD configuration in the second format is used for spatial multiplexing transmission between each frequency domain resource set of the IAB DU and an IAB MT, and the second type of TDD configuration in the second format is used for full-duplex multiplexing transmission between each frequency domain resource set of the IAB DU and the IAB MT.

In this embodiment of this application, the transceiver module 1901 is configured to send the first configuration information to the IAB DU. The first configuration information includes the correspondences between the plurality of frequency domain resource sets of the IAB DU and the TDD configurations, and each frequency domain resource set in the plurality of frequency domain resource sets corresponds to the at least one TDD configuration. In the technical solution, the communication apparatus configures at least one TDD configuration for each frequency domain resource set of the IAB DU. Based on a premise that the IAB MT and the frequency domain resource set of the IAB DU meet a multiplexing working condition, the IAB DU may perform multiplexing transmission with the IAB MT on the frequency domain resource set.

The communication apparatus provided in embodiments of this application is described below. FIG. 20 is a schematic diagram of a structure of a communication apparatus according to an embodiment of this application. The communication apparatus may be configured to perform a step performed by the first node in the embodiment shown in FIG. 13. For details, refer to the related descriptions in the foregoing method embodiment.

The communication apparatus includes a processing module 2001 and a transceiver module 2002.

The processing module 2001 is configured to determine correspondences between a plurality of frequency domain resource sets of a first IAB DU and intended TDD configurations. Each frequency domain resource set in the plurality of frequency domain resource sets corresponds to at least one intended TDD configuration, and the at least one intended TDD configuration includes an intended TDD configuration in a second format.

The transceiver module 2002 is configured to send first configuration information to a second node. The first configuration information includes the correspondences between the plurality of frequency domain resource sets and the intended TDD configurations.

In a possible implementation, the communication apparatus is the first IAB DU, and the second node is a donor CU; or
the communication apparatus is a donor CU, the second node is a second IAB DU, and the second IAB DU is an IAB DU in a neighboring cell of a cell of the first IAB DU.

In another possible implementation, each frequency domain resource set in the plurality of frequency domain resource sets corresponds to one TDD configuration in a first format or one TDD configuration in the second format;
each frequency domain resource set in the plurality of frequency domain resource sets corresponds to one TDD configuration in a first format and one TDD configuration in the second format;
the plurality of frequency domain resource sets correspond to a same TDD configuration in a first format, and each frequency domain resource set in the plurality of frequency domain resource sets corresponds to one TDD configuration in the second format; or
each frequency domain resource set in the plurality of frequency domain resource sets corresponds to one TDD configuration in a first format, a first type of TDD configuration in a second format, and a second type of TDD configuration in a second format, the first type of TDD configuration in the second format is used for spatial multiplexing transmission between each frequency domain resource set of the first IAB DU and an IAB MT, and the second type of TDD configuration in the second format is used for full-duplex multiplexing transmission between each frequency domain resource set of the first IAB DU and the IAB MT.

In another possible implementation, the at least one intended TDD configuration further includes a slot index. The slot index indicates that the frequency domain resource set corresponding to the at least one intended TDD configuration uses the at least one intended TDD configuration in a slot corresponding to the slot index.

In another possible implementation, the at least one intended TDD configuration further includes a resource type configuration. The resource type configuration indicates a resource type of the frequency domain resource set corresponding to the at least one intended TDD configuration.

In another possible implementation, the at least one intended TDD configuration further includes a power offset value. The power offset value indicates transmit power on the frequency domain resource set corresponding to the at least one intended TDD configuration.

In this embodiment of this application, the processing module 2001 is configured to determine the correspondences between the plurality of frequency domain resource sets of the first IAB DU and the intended TDD configurations. Each frequency domain resource set in the plurality of frequency domain resource sets corresponds to the at least one intended TDD configuration. The at least one intended TDD configuration includes the intended TDD configuration in the second format. The transceiver module 2002 is configured to send the first configuration information to the second node. The first configuration information includes the correspondences between the plurality of frequency domain resource sets and the intended TDD configurations. It can be learned that the transceiver module 2002 sends the first configuration information to the second node. The first configuration information includes the correspondences between the plurality of frequency domain resource sets and the intended TDD configurations. Each frequency domain resource set corresponds to the at least one intended TDD configuration. A configuration granularity of the intended TDD configuration is a frequency domain resource set level, and each frequency domain resource set corresponds to one intended TDD configuration in the second format. This better helps a neighboring node in an IAB system perform interference avoidance and management. The neighboring node may perform interference avoidance by using a frequency domain resource corresponding to a frequency domain resource set as a granularity, that is, may continue transmission on a frequency domain resource without interference, to obtain higher frequency domain resource utilization.

The communication apparatus provided in embodiments of this application is described below. FIG. 21 is a schematic diagram of a structure of a communication apparatus according to an embodiment of this application. The communication apparatus may be configured to perform a step performed by the second node in the embodiment shown in FIG. 13. For details, refer to the related descriptions in the foregoing method embodiment.

The communication apparatus includes a transceiver module 2101. Optionally, the communication apparatus further includes a processing module 2102.

The transceiver module 2101 is configured to receive first configuration information from a first node. The first configuration information includes correspondences between a plurality of frequency domain resource sets of a first IAB DU and intended TDD configurations. Each frequency domain resource set in the plurality of frequency domain resource sets corresponds to at least one intended TDD configuration, and the at least one intended TDD configuration includes an intended TDD configuration in a second format.

In a possible implementation, the first node is the first IAB DU, and the communication apparatus is a donor CU; or
the first node is a donor CU, the communication apparatus is a second IAB DU, and the second IAB DU is an IAB DU in a neighboring cell of a cell of the first IAB DU.

In another possible implementation, each frequency domain resource set in the plurality of frequency domain resource sets corresponds to one TDD configuration in a first format or one TDD configuration in the second format;
each frequency domain resource set in the plurality of frequency domain resource sets corresponds to one TDD configuration in a first format and one TDD configuration in the second format;
the plurality of frequency domain resource sets correspond to a same TDD configuration in a first format, and each frequency domain resource set in the plurality of frequency domain resource sets corresponds to one TDD configuration in the second format; or
each frequency domain resource set in the plurality of frequency domain resource sets corresponds to one TDD configuration in a first format, a first type of TDD configuration in a second format, and a second type of TDD configuration in a second format, the first type of TDD configuration in the second format is used for spatial multiplexing transmission between each frequency domain resource set of the first IAB DU and an IAB MT, and the second type of TDD configuration in the second format is used for full-duplex multiplexing transmission between each frequency domain resource set of the first IAB DU and the IAB MT.

In another possible implementation, the at least one intended TDD configuration further includes a slot index. The slot index indicates that the frequency domain resource set corresponding to the at least one intended TDD configuration uses the at least one intended TDD configuration in a slot corresponding to the slot index.

In another possible implementation, the at least one intended TDD configuration further includes a resource type configuration. The resource type configuration indicates a resource type of the frequency domain resource set corresponding to the at least one intended TDD configuration.

In another possible implementation, the at least one intended TDD configuration further includes a power offset value. The power offset value indicates transmit power on the frequency domain resource set corresponding to the at least one intended TDD configuration.

In this embodiment of this application, the transceiver module 2101 is configured to receive the first configuration information from the first node. The first configuration information includes the correspondences between the plurality of frequency domain resource sets of the first IAB DU and the intended TDD configurations. Each frequency domain resource set in the plurality of frequency domain resource sets corresponds to the at least one intended TDD configuration, and the at least one intended TDD configuration includes the intended TDD configuration in the second format. In the technical solution, the first configuration information includes the correspondences between the plurality of frequency domain resource sets and the intended TDD configurations. Each frequency domain resource set corresponds to the at least one intended TDD configuration. A configuration granularity of the intended TDD configuration is a frequency domain resource set level, and each frequency domain resource set corresponds to one intended TDD configuration in the second format. This better helps a neighboring node in an IAB system perform interference avoidance and management. The neighboring node may perform interference avoidance by using a frequency domain resource corresponding to a frequency domain resource set as a granularity, that is, may continue transmission on a frequency domain resource without interference, to obtain higher frequency domain resource utilization.

An embodiment of this application further provides a communication apparatus. FIG. 22 is another schematic diagram of a structure of a communication apparatus according to an embodiment of this application. The communication apparatus 2200 includes a processor 2210. The processor 2210 is coupled to a memory 2220. The memory 2220 is configured to store a computer program or instructions and/or data. The processor 2210 is configured to execute the computer program or the instructions and/or the data stored in the memory 2220, so that the methods in the foregoing method embodiments are performed.

Optionally, the communication apparatus 2200 includes one or more processors 2210.

Optionally, as shown in FIG. 22, the communication apparatus 2200 may include the memory 2220.

Optionally, the communication apparatus 2200 may include one or more memories 2220.

The memory 2220 and the processor 2210 may be integrated together or disposed separately.

Optionally, as shown in FIG. 22, the communication apparatus 2200 may further include a transceiver 2230. The transceiver 2230 is configured to receive and/or send signals. For example, the processor 2210 is configured to control the transceiver 2230 to receive and/or send the signals.

In a solution, the communication apparatus 2200 is configured to perform operations performed by the IAB MT in the foregoing method embodiments.

For example, the processor 2210 is configured to implement processing-related operations performed by the IAB MT in the foregoing method embodiments, and the transceiver 2230 is configured to implement receiving/sending-related operations performed by the IAB MT in the foregoing method embodiments.

In another solution, the communication apparatus 2200 is configured to implement operations performed by the upper-level node of the IAB MT in the foregoing method embodiments.

For example, the processor 2210 is configured to implement processing-related operations performed by the upper-level node of the IAB MT in the foregoing method embodiments, and the transceiver 2230 is configured to implement receiving/sending-related operations performed by the upper-level node of the IAB MT in the foregoing method embodiments.

In another solution, the communication apparatus 2200 is configured to perform operations performed by the donor node in the foregoing method embodiments.

For example, the processor 2210 is configured to implement processing-related operations performed by the donor node in the foregoing method embodiments, and the transceiver 2230 is configured to implement receiving/sending-related operations performed by the donor node in the foregoing method embodiments.

In another solution, the communication apparatus 2200 is configured to perform operations performed by the IAB DU in the foregoing method embodiments.

For example, the processor 2210 is configured to implement processing-related operations performed by the IAB DU in the foregoing method embodiments, and the transceiver 2230 is configured to implement receiving/sending-related operations performed by the IAB DU in the foregoing method embodiments.

In another solution, the communication apparatus 2200 is configured to perform operations performed by the IAB CU in the foregoing method embodiments.

For example, the processor 2210 is configured to implement processing-related operations performed by the IAB CU in the foregoing method embodiments, and the transceiver 2230 is configured to implement receiving/sending-related operations performed by the IAB CU in the foregoing method embodiments.

In another solution, the communication apparatus 2200 is configured to perform operations performed by the first node in the foregoing method embodiments.

For example, the processor 2210 is configured to implement processing-related operations performed by the first node in the foregoing method embodiments, and the transceiver 2230 is configured to implement receiving/sending-related operations performed by the first node in the foregoing method embodiments.

In another solution, the communication apparatus 2200 is configured to perform operations performed by the second node in the foregoing method embodiments.

For example, the processor 2210 is configured to implement processing-related operations performed by the second node in the foregoing method embodiments, and the transceiver 2230 is configured to implement receiving/sending-related operations performed by the second node in the foregoing method embodiments.

In the communication apparatus shown in FIG. 22, a component that is configured to receive power in the transceiver 2230 may be considered as a receiving unit, and a component that is configured to perform a sending function in the transceiver 2230 may be considered as a sending unit. In other words, the transceiver 2230 may include a receiver and a transmitter. The transceiver 2230 may be referred to as a transceiver machine, a transceiver unit, a transceiver circuit, or the like. The receiver may also be referred to as a receiver machine, a receiving unit, a receiver, a receiving circuit, or the like. The transmitter may also be referred to as a transmitter machine, a transmitter, a transmitting unit, a transmitting circuit, or the like. The processor 2210 has a processing function, and the processor 2210 may be referred to as a processing unit. The memory 2220 is configured to store computer program code and data, and the memory 2220 may also be referred to as a storage unit.

An embodiment of this application further provides a communication apparatus 2300. The communication apparatus 2300 may be an IAB node or a donor node, or may be a chip of the IAB node or of the donor node. The communication apparatus 2300 may be configured to perform operations performed by the IAB MT, the upper-level node of the IAB MT, the donor node, the IAB DU, the IAB CU, the first node, or the second node in the foregoing method embodiments.

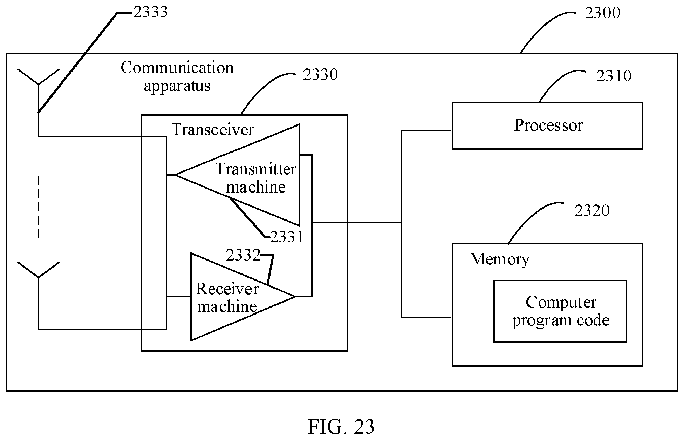

FIG. 23 is a schematic diagram of a structure of an IAB node or a donor node. The IAB node or the donor node includes a part 2310, a part 2320, and a part 2330. The part 2310 is mainly configured to perform baseband processing, control a base station, and the like. The part 1210 is usually a control center of the base station, may be usually referred to as a processor or a processing unit, and is configured to control the IAB node or the donor node to perform processing operations on a side of the IAB node or the donor node in the foregoing method embodiments. The part 2320 is mainly configured to store computer program code and data, and may be usually used as a memory or a storage unit. The part 2330 is mainly configured to receive/send radio a frequency signal, and perform conversion between the radio frequency signal and a baseband signal. The part 2330 may be usually referred to as a transceiver unit, a transceiver machine, a transceiver circuit, a transceiver, or the like. The transceiver unit in the part 2330 may also be referred to as a transceiver machine, a transceiver, or the like. The transceiver unit includes an antenna 2333 and a radio frequency circuit (not shown in the figure). The radio frequency circuit is mainly configured to perform radio frequency processing. Optionally, a component that is in the part 2330 and that is configured to implement a receiving function may be considered as a receiver machine, and a component that is in the part 2330 and that is configured to implement a sending function may be considered as a transmitter machine. In other words, the part 2330 includes the receiver machine 2332 and the transmitter machine 2331. The receiver machine may also be referred to as a receiving unit, a receiver, a receiving circuit, or the like, and the transmitter machine may be referred to as a transmitting unit, a sending unit, a transmitter, a transmitting circuit, or the like.

The part 2310 and the part 2320 may include one or more boards, and each board may include one or more processors and one or more memories. The processor is configured to read and execute a program in the memory to implement the baseband processing function and control the base station. If there are a plurality of boards, the boards may be interconnected to enhance a processing capability. In an optional implementation, a plurality of boards may share one or more processors, the plurality of boards may share one or more memories, or the plurality of boards share the one or more processors at the same time.

In an implementation, the transceiver unit in the part 2330 is configured to perform receiving/sending-related steps performed by the IAB node or the donor node in the embodiments shown in FIG. 4, FIG. 5, FIG. 6, FIG. 7, FIG. 8, FIG. 10, FIG. 11, and FIG. 13. The processor in the part 2310 is configured to perform processing-related steps performed by the IAB node or the donor node in the embodiments shown in FIG. 4, FIG. 5, FIG. 6, FIG. 7, FIG. 8, FIG. 10, FIG. 11, and FIG. 13.

It should be understood that FIG. 23 is merely an example instead of a limitation, and the foregoing network device including the processor, the memory, and the transceiver may not depend on the structure shown in FIG. 23.

When the communication apparatus 2300 is a chip, the chip includes a transceiver, a memory, and a processor. The transceiver may be an input/output circuit or a communication interface. The processor may be a processor, a microprocessor, or an integrated circuit integrated on the chip. The sending operations of the IAB node or the donor node in the foregoing method embodiments may be understood as outputs of the chip, and the receiving operations of the IAB node or the donor node in the foregoing method embodiments may be understood as inputs of the chip.

An embodiment of this application further provides a computer-readable storage medium. The computer-readable storage medium stores computer instructions used to implement the method performed by the terminal device or the method performed by the network device in the foregoing method embodiments.

For example, when a computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes an IAB MT and an upper-level node of the IAB MT. Optionally, the communication system further includes a donor node. The IAB MT is configured to perform steps performed by the IAB MT in the embodiments shown in FIG. 5, FIG. 6, FIG. 7, FIG. 8, and FIG. 10. The upper-level node of the IAB MT is configured to perform steps performed by the upper-level node of the IAB MT in the embodiments shown in FIG. 5, FIG. 6, FIG. 7, FIG. 8, and FIG. 10. The donor node is configured to perform steps performed by the donor node in the embodiments shown in FIG. 6 and FIG. 8. Alternatively, the communication system includes an IAB DU and an IAB CU. The IAB DU is configured to perform a step performed by the IAB DU in the embodiment shown in FIG. 11, and the IAB CU is configured to perform a step performed by the IAB CU in the embodiment shown in FIG. 11. Alternatively, the communication system includes a first node and a second node. The first node is configured to perform a step performed by the first node in the embodiment shown in FIG. 13, and the second node is configured to perform a step performed by the second node in the embodiment shown in FIG. 13.

An embodiment of this application further provides a chip apparatus, including a processor, configured to invoke a computer program or computer instructions stored in a memory, so that the processor performs the resource configuration methods in the embodiments shown in FIG. 4, FIG. 5, FIG. 6, FIG. 7, FIG. 8, FIG. 10, FIG. 11, and FIG. 13.

In a possible implementation, inputs of the chip apparatus correspond to the receiving operations in the embodiments shown in FIG. 4, FIG. 5, FIG. 6, FIG. 7, FIG. 8, FIG. 10, FIG. 11, and FIG. 13, and outputs of the chip apparatus correspond to the sending operations in the embodiments shown in FIG. 4, FIG. 5, FIG. 6, FIG. 7, FIG. 8, FIG. 10, FIG. 11, and FIG. 13.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution of the resource configuration methods in the embodiments shown in FIG. 4, FIG. 5, FIG. 6, FIG. 7, FIG. 8, FIG. 10, FIG. 11, and FIG. 13. The memory mentioned anywhere above may be a read-only memory (read-only memory, ROM), another type of static storage device that can store static information and instructions, a random access memory (random access memory, RAM), or the like.

It may be clearly understood by persons skilled in the art that, for the purpose of convenient and brief description, for explanations and beneficial effects of related content of any communication apparatus provided above, refer to the corresponding method embodiment provided above. Details are not described herein again.

In embodiments of this application, the terminal device or the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more types of computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

It may be clearly understood by persons skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses and methods may be implemented in other manners. For example, the apparatus embodiments described above are merely examples. For example, the unit division is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or a part of the technical solutions may be embodied in a form of a software product. The computer software product is stored in a storage medium, and includes several instructions for enabling a computer device (which may be a personal computer, a server, a network device, or the like) to perform all or some of steps of the methods in embodiments of this application. The foregoing storage medium includes any medium that can store program codes, such as a USB flash drive, a removable hard disk, a read-only memory, a random access memory, a magnetic disk, or an optical disk.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A resource configuration method, wherein the method comprises:
determining, by an integrated access and backhaul mobile terminal IAB MT, a first slot configuration TDD configuration based on a first transmission mode, wherein the first transmission mode comprises a transmission mode on at least one frequency domain resource set in a plurality of frequency domain resource sets of an integrated access and backhaul distributed unit IAB DU, and the first TDD configuration is a cell-common TDD configuration or a dedicated TDD configuration; and
determining, by the IAB MT, a resource location based on the first TDD configuration.

2. The method according to claim 1, wherein the determining, by an IAB MT, a first slot configuration TDD configuration based on a first transmission mode comprises at least one of the following:
if the IAB DU performs downlink transmission on the at least one frequency domain resource set, and the IAB MT and the at least one frequency domain resource set meet a spatial transmit multiplexing relationship, the first TDD configuration is the dedicated TDD configuration;
if the IAB DU performs uplink reception on the at least one frequency domain resource set, and the IAB MT and the at least one frequency domain resource set meet a spatial receive multiplexing relationship, the first TDD configuration is the dedicated TDD configuration;
if the IAB DU performs downlink transmission on the at least one frequency domain resource set, and the IAB MT and the at least one frequency domain resource set meet a first full-duplex multiplexing relationship, the first TDD configuration is the cell-common TDD configuration;
if the IAB DU performs uplink reception on the at least one frequency domain resource set, and the IAB MT and the at least one frequency domain resource set meet a second full-duplex multiplexing relationship, the first TDD configuration is the cell-common TDD configuration;
if the IAB DU performs uplink reception on a first frequency domain resource set and performs downlink transmission on a second frequency domain resource set, the IAB MT and the first frequency domain resource meet a second full-duplex multiplexing relationship, and the IAB MT and the second frequency domain resource meet a spatial transmit multiplexing relationship, the first TDD configuration is the dedicated TDD configuration, and the plurality of frequency domain resource sets comprise the first frequency domain resource set and the second frequency domain resource set;
if the IAB DU performs uplink reception on a first frequency domain resource set and performs uplink reception on a second frequency domain resource set, the IAB MT and the first frequency domain resource set meet a second full-duplex multiplexing relationship, and the IAB MT and the second frequency domain resource set meet a spatial receive multiplexing relationship, the first TDD configuration is the dedicated TDD configuration, and the plurality of frequency domain resource sets comprise the first frequency domain resource set and the second frequency domain resource set;
if the IAB DU performs downlink transmission on a first frequency domain resource set and performs downlink transmission on a second frequency domain resource set, the IAB MT and the first frequency domain resource set meet a first full-duplex multiplexing relationship, and the IAB MT and the second frequency domain resource set meet a spatial transmit multiplexing relationship, the first TDD configuration is the dedicated TDD configuration, and the plurality of frequency domain resource sets comprise the first frequency domain resource set and the second frequency domain resource set;
if the IAB DU performs downlink transmission on a first frequency domain resource set and performs uplink reception on a second frequency domain resource set, the IAB MT and the first frequency domain resource set meet a first full-duplex multiplexing relationship, and the IAB MT and the second frequency domain resource set meet a spatial receive multiplexing relationship, the first TDD configuration is the dedicated TDD configuration, and the plurality of frequency domain resource sets comprise the first frequency domain resource set and the second frequency domain resource set; or
if the IAB DU has no transmission on the plurality of frequency domain resource sets, the first TDD configuration is the cell-common TDD configuration.

3. The method according to claim 1, wherein the method further comprises:
receiving, by the IAB MT, first indication information from an upper-level node of the IAB MT, wherein the first indication information indicates any one of the following: a TDD configuration that is preferentially used, a fifth frequency domain resource set that is preferentially used for multiplexing transmission, or a first multiplexing relationship that is preferentially used when a first condition is met;
the first condition comprises: the IAB MT and a third frequency domain resource set of the IAB DU meet a spatial transmit multiplexing relationship and/or a spatial receive multiplexing relationship, and the IAB MT and a fourth frequency domain resource set of the IAB DU meet a first full-duplex multiplexing relationship and/or a second full-duplex multiplexing relationship, wherein the third frequency domain resource set and the fourth frequency domain resource set are two frequency domain resource sets in the plurality of frequency domain resource sets; and
the determining, by an IAB MT, a first slot configuration TDD configuration based on a first transmission mode comprises:
determining, by the IAB MT, the first TDD configuration based on the first transmission mode and the first indication information.

4. The method according to claim 3, wherein the first indication information indicates that the dedicated TDD configuration is preferentially used when the first condition is met, and the determining, by the IAB MT, the first TDD configuration based on the first transmission mode and the first indication information comprises at least one of the following:
if the IAB MT and the third frequency domain resource set of the IAB DU meet the spatial transmit multiplexing relationship, and the IAB DU performs downlink transmission on the third frequency domain resource set, the first TDD configuration is the dedicated TDD configuration;
if the IAB MT and the third frequency domain resource set of the IAB DU meet the spatial transmit multiplexing relationship, and the IAB DU performs uplink reception on the third frequency domain resource set, the first TDD configuration is the cell-common TDD configuration;
if the IAB MT and the third frequency domain resource set of the IAB DU meet the spatial transmit multiplexing relationship, and the IAB DU performs uplink reception on the third frequency domain resource set, the first TDD configuration is the cell-common TDD configuration;
if the IAB MT and the third frequency domain resource set of the IAB DU meet the spatial receive multiplexing relationship, and the IAB DU performs uplink reception on the third frequency domain resource set, the first TDD configuration is the dedicated TDD configuration;
if the IAB MT and the third frequency domain resource set of the IAB DU meet the spatial receive multiplexing relationship, and the IAB DU performs uplink transmission on the third frequency domain resource set, the first TDD configuration is the cell-common TDD configuration; or
if the IAB MT and the third frequency domain resource set of the IAB DU meet the spatial receive multiplexing relationship and the spatial transmit multiplexing relationship, and the IAB DU performs uplink reception or downlink transmission on the third frequency domain resource set, the first TDD configuration is the dedicated TDD configuration.

5. The method according to claim 3, wherein the first indication information indicates the fifth frequency domain resource set that is preferentially used for multiplexing transmission, and the determining, by the IAB MT, the first TDD configuration based on the first transmission mode and the first indication information comprises:
determining, by the IAB MT, a transmission direction in which the IAB DU performs transmission on the fifth frequency domain resource set; and
determining, by the IAB MT, the first TDD configuration based on the transmission direction and a multiplexing relationship that is met between the IAB MT and the fifth frequency domain resource set.

6. The method according to claim 3, wherein the first indication information indicates the first multiplexing relationship that is preferentially used, and the determining, by the IAB MT, the first TDD configuration based on the first transmission mode and the first indication information comprises:
determining, by the IAB MT in the plurality of frequency domain resource sets, a sixth frequency domain resource set that meets the first multiplexing relationship with the IAB MT; and
determining, by the IAB MT, the first TDD configuration based on the first multiplexing relationship and a transmission mode on the sixth frequency domain resource set.

7. The method according to claim 1, wherein the method further comprises:
receiving, by the IAB MT, first configuration information from a donor Donor node, wherein the first configuration information comprises correspondences between a plurality of multiplexing configurations and indication bits, and the plurality of multiplexing configurations are multiplexing configurations between the IAB MT and the plurality of frequency domain resource sets;
receiving, by the IAB MT, second indication information from an upper-level node of the IAB MT, wherein the second indication information comprises a first indication bit;
determining, by the IAB MT based on the correspondences between the plurality of multiplexing configurations and the indication bits, a multiplexing configuration corresponding to the first indication bit, wherein the multiplexing configuration corresponding to the first indication bit comprises: there is a multiplexing relationship between the IAB MT and a seventh frequency domain resource set in the plurality of frequency domain resource sets; and
the determining, by an IAB MT, a first slot configuration TDD configuration based on a first transmission mode comprises:
determining, by the IAB MT, the first TDD configuration based on a transmission mode on the seventh frequency domain resource set and the multiplexing relationship that is met between the IAB MT and the seventh frequency domain resource set.

8. The method according to claim 1, wherein the method further comprises:
receiving, by the IAB MT, a media access control control element MAC CE from an upper-level node of the IAB MT, wherein the MAC CE comprises correspondences between a plurality of multiplexing configurations and indication bits, and the plurality of multiplexing configurations are multiplexing configurations between the IAB MT and the plurality of frequency domain resource sets;
receiving, by the IAB MT, second indication information from the upper-level node, wherein the second indication information comprises a first indication bit;
determining, by the IAB MT based on the correspondences between the plurality of multiplexing configurations and the indication bits, a multiplexing configuration corresponding to the first indication bit, wherein the multiplexing configuration corresponding to the first indication bit comprises: there is a multiplexing relationship between the IAB MT and a seventh frequency domain resource set in the plurality of frequency domain resource sets; and
the determining, by an IAB MT, a first slot configuration TDD configuration based on a first transmission mode comprises:
determining, by the IAB MT, the first TDD configuration based on a transmission mode on the seventh frequency domain resource set and the multiplexing relationship that is met between the IAB MT and the seventh frequency domain resource set.

9. The method according to any one of claims 1 to 8, wherein the method further comprises:
determining, by the IAB MT, whether there is a multiplexing relationship between the IAB MT and the plurality of frequency domain resource sets; and
if there is the multiplexing relationship between the IAB MT and the plurality of frequency domain resource sets, performing the step of determining, by the IAB MT, a first slot configuration TDD configuration based on a first transmission mode; or
if there is no multiplexing relationship between the IAB MT and the plurality of frequency domain resource sets, determining, by the IAB MT, that the first TDD configuration is the cell-common TDD configuration.

10. A resource configuration method, wherein the method comprises:
sending, by an upper-level node of an integrated access and backhaul mobile terminal IAB MT, first indication information to the integrated access and backhaul mobile terminal IAB MT, wherein the first indication information indicates any one of the following: a TDD configuration that is preferentially used, a fifth frequency domain resource set that is preferentially used for multiplexing transmission, or a first multiplexing relationship that is preferentially used when a first condition is met, wherein
the first condition comprises: the IAB MT and a third frequency domain resource of an integrated access and backhaul distributed unit IAB DU meet a spatial transmit multiplexing relationship and/or a spatial receive multiplexing relationship, and the IAB MT and a fourth frequency domain resource set of the IAB DU meet a first full-duplex multiplexing relationship and/or a second full-duplex multiplexing relationship, wherein the third frequency domain resource set and the fourth frequency domain resource set are two frequency domain resource sets in a plurality of frequency domain resource sets of the IAB DU.

11. A resource configuration method, wherein the method comprises:
sending, by a donor Donor node, first configuration information to an integrated access and backhaul mobile terminal IAB MT, wherein the first configuration information comprises correspondences between a plurality of multiplexing configurations and indication bits, and the plurality of multiplexing configurations are multiplexing configurations between the IAB MT and a plurality of frequency domain resource sets of an integrated access and backhaul distributed unit IAB DU.

12. A resource configuration method, wherein the method comprises:
sending, by an upper-level node of an integrated access and backhaul mobile terminal IAB MT, second indication information to the IAB MT, wherein the second indication information comprises a first indication bit, and a multiplexing configuration corresponding to the first indication bit comprises: there is a multiplexing relationship between the IAB MT and a seventh frequency domain resource set in a plurality of frequency domain resource sets of an integrated access and backhaul distributed unit IAB DU.

13. The method according to claim 12, wherein the method further comprises:
sending, by the upper-level node of the IAB MT, a media access control control element MAC CE to the IAB MT, wherein the MAC CE comprises correspondences between a plurality of multiplexing configurations and indication bits, and the plurality of multiplexing configurations are multiplexing configurations between the IAB MT and the plurality of frequency domain resource sets.

14. A resource configuration method, wherein the method comprises:
receiving, by an integrated access and backhaul distributed unit IAB DU, first configuration information from an integrated access and backhaul central unit IAB CU, wherein the first configuration information comprises correspondences between a plurality of frequency domain resource sets of the IAB DU and slot configuration TDD configurations; and
determining, by the IAB DU based on the first configuration information, at least one TDD configuration corresponding to each frequency domain resource set in the plurality of frequency domain resource sets.

15. The method according to claim 14, wherein each frequency domain resource set in the plurality of frequency domain resource sets corresponds to one TDD configuration in a first format or one TDD configuration in a second format;
each frequency domain resource set in the plurality of frequency domain resource sets corresponds to one TDD configuration in a first format and one TDD configuration in a second format;
the plurality of frequency domain resource sets correspond to a same TDD configuration in a first format, and each frequency domain resource set in the plurality of frequency domain resource sets corresponds to one TDD configuration in a second format; or
each frequency domain resource set in the plurality of frequency domain resource sets corresponds to one TDD configuration in a first format, a first type of TDD configuration in a second format, and a second type of TDD configuration in a second format, the first type of TDD configuration in the second format is used for spatial multiplexing transmission between each frequency domain resource set and an integrated access and backhaul mobile terminal IAB MT, and the second type of TDD configuration in the second format is used for full-duplex multiplexing transmission between each frequency domain resource set and the IAB MT.

16. A resource configuration method, wherein the method comprises:
sending, by an integrated access and backhaul central unit IAB CU, first configuration information to an integrated access and backhaul distributed unit IAB DU, wherein the first configuration information comprises correspondences between a plurality of frequency domain resource sets of the IAB DU and slot configuration TDD configurations, and each frequency domain resource set in the plurality of frequency domain resource sets corresponds to at least one TDD configuration.

17. The method according to claim 16, wherein each frequency domain resource set in the plurality of frequency domain resource sets corresponds to one TDD configuration in a first format or one TDD configuration in a second format;
each frequency domain resource set in the plurality of frequency domain resource sets corresponds to one TDD configuration in a first format and one TDD configuration in a second format;
the plurality of frequency domain resource sets correspond to a same TDD configuration in a first format, and each frequency domain resource set in the plurality of frequency domain resource sets corresponds to one TDD configuration in a second format; or
each frequency domain resource set in the plurality of frequency domain resource sets corresponds to one TDD configuration in a first format, a first type of TDD configuration in a second format, and a second type of TDD configuration in a second format, the first type of TDD configuration in the second format is used for spatial multiplexing transmission between each frequency domain resource set and an integrated access and backhaul mobile terminal IAB MT, and the second type of TDD configuration in the second format is used for full-duplex multiplexing transmission between each frequency domain resource set and the IAB MT.

18. The method according to any one of claims 14 to 17, wherein the plurality of frequency domain resource sets are a plurality of resource block sets RB sets of a cell of the IAB DU.

19. A resource configuration method, wherein the method comprises:
receiving, by a first integrated access and backhaul distributed unit IAB DU, first configuration information from an integrated access and backhaul central unit IAB CU, wherein the first configuration information comprises correspondences between a plurality of frequency domain resource sets of a second IAB DU and intended slot configuration TDD configurations, and the second IAB DU is a neighboring node of the first IAB DU; and
determining, by the first IAB DU based on the first configuration information, at least one intended TDD configuration corresponding to each frequency domain resource set in the plurality of frequency domain resource sets.

20. A resource configuration method, wherein the method comprises:
sending, by an integrated access and backhaul central unit IAB CU, first configuration information to a first integrated access and backhaul distributed unit IAB DU, wherein the first configuration information comprises correspondences between a plurality of frequency domain resource sets of a second IAB DU and intended slot configuration TDD configurations, and the second IAB DU is a neighboring node of the first IAB DU.

21. The method according to claim 19 or 20, wherein each frequency domain resource set in the plurality of frequency domain resource sets corresponds to one TDD configuration in a first format or one TDD configuration in a second format;
each frequency domain resource set in the plurality of frequency domain resource sets corresponds to one TDD configuration in a first format and one TDD configuration in a second format;
the plurality of frequency domain resource sets correspond to a same TDD configuration in a first format, and each frequency domain resource set in the plurality of frequency domain resource sets corresponds to one TDD configuration in a second format.

22. The method according to any one of claims 19 to 21, wherein the plurality of frequency domain resource sets are a plurality of resource block sets RB sets.

23. The method according to any one of claims 19 to 22, wherein the first configuration information further comprises resource type information, and the resource type information indicates a resource type of a frequency domain resource set corresponding to at least one intended TDD configuration.

24. The method according to claim 23, wherein the resource type comprises a hard resource, a soft resource, or a not available resource.

25. A communication apparatus, wherein the communication apparatus comprises a module configured to perform the method according to any one of claims 1 to 9, comprises a module configured to perform the method according to claim 10, comprises a module configured to perform the method according to claim 11, comprises a module configured to perform the method according to claim 12 or 13, comprises a module configured to perform the method according to claim 14, 15, or 18, comprises a module configured to perform the method according to any one of claims 16 to 18, comprises a module configured to perform the method according to any one of claims 19 and 21 to 24, or comprises a module configured to perform the method according to any one of claims 20 to 24.

26. A communication apparatus, wherein the communication apparatus comprises:
a memory, configured to store a computer program or instructions; and
a processor, configured to execute the computer program or instructions stored in the memory, to enable the communication apparatus to perform the method according to any one of claims 1 to 9, enable the communication apparatus to perform the method according to claim 10, enable the communication apparatus to perform the method according to claim 11, enable the communication apparatus to perform the method according to claim 12 or 13, enable the communication apparatus to perform the method according to claim 14, 15, or 18, enable the communication apparatus to perform the method according to any one of claims 16 to 18, enable the communication apparatus to perform the method according to any one of claims 19 and 21 to 24, or enable the communication apparatus to perform the method according to any one of claims 20 to 24.

27. A communication apparatus, wherein the communication apparatus comprises a processor, and the processor is configured to run a computer program or instructions in a memory, to perform the method according to any one of claims 1 to 24.

28. A communication apparatus, wherein the communication apparatus comprises a processor, and the processor is configured to perform the method according to any one of claims 1 to 24.

29. A computer-readable storage medium, comprising a computer program, wherein when the computer program is executed by a communication apparatus, the communication apparatus is enabled to perform the method according to any one of claims 1 to 24.
